# EUROPEAN PATENT SPECIFICATION

(11) **EP 4 287 368 B1**
(45) Date of publication and mention of the grant of the patent: **07.10.2026**
(21) Application number: 22884119.3
(22) Date of filing: 21.10.2022
(51) Int. Cl.: H01M 50/179, H01M 50/559, H01M 50/186, H01M 50/213, H01M 50/55, H01M 4/133, H01M 4/134, H01M 4/587, H01M 4/62, H01M 50/107, H01M 50/152, H01M 50/249, H01M 50/538

(54) **CYLINDRICAL BATTERY, AND BATTERY PACK AND VEHICLE INCLUDING THE SAME**
ZYLINDRISCHE BATTERIE UND BATTERIEPACK UND FAHRZEUG DAMIT
BATTERIE CYLINDRIQUE, ET BLOC-BATTERIE ET VÉHICULE LE COMPRENANT

(30) Priority: 22.10.2021 KR 20210142178
(43) Date of publication of application: 06.12.2023
(73) Proprietor: LG Energy Solution, Ltd., Seoul 07335 (KR)
(72) Inventor: HWANGBO, Kwang-Su, Daejeon 34122 (KR); MIN, Geon-Woo, Daejeon 34122 (KR)
(74) Representative: Goddar, Heinz J.
(86) International application number: PCT/KR2022/016208
(87) International publication number: WO 2023/068898

(56) References cited:
- WO-A1-2019/074234
- WO-A1-2021/033940
- KR-A- 20140 147 660
- KR-A- 20150 144 600
- KR-A- 20200 039 214
- KR-B1- 101 222 247
- US-A1- 2020 058 908

## Description

### TECHNICAL FIELD

The present disclosure relates to a cylindrical battery, and a battery pack and a vehicle including the cylindrical battery. More particularly, the present disclosure relates to a battery in which both a positive electrode terminal and a negative electrode terminal are adjacently disposed at one side of the cylindrical battery, without greatly deforming the structure of a conventional battery, and a battery pack and a vehicle including the cylindrical battery.

The present application claims priority to Korean Patent Application No. 10-2021-0142178 filed on October 22, 2021 in the Republic of Korea.

### BACKGROUND ART

In the case of manufacturing a battery pack using a cylindrical battery, typically, a plurality of cylindrical batteries are placed upright in a housing, and the upper and lower ends of the cylindrical batteries are used as positive electrode terminals and negative electrode terminals, respectively, so that the plurality of cylindrical batteries are electrically connected to each other.

In the electrical connection of the cylindrical batteries, a negative electrode uncoated portion of the electrode assembly accommodated inside the battery housing extends downward and is electrically connected to the bottom surface of the battery housing, and a positive electrode uncoated portion extends upward and is electrically connected to the top cap. That is, in the cylindrical battery, it is common that the bottom surface of the battery housing is used as a negative electrode terminal, and the top cap covering the top opening of the battery housing is used as a positive electrode terminal.

When the positive electrode terminal and the negative electrode terminal of the cylindrical battery are located on opposite sides, electrical connecting parts such as a bus bar for electrically connecting the plurality of cylindrical batteries must be applied to both the upper and lower portions of the cylindrical battery. This complicates the electrical connection structure of the battery pack.

Moreover, in such a structure, parts for insulation and parts for securing waterproofness or sealing must be separately applied to the upper and lower portions of the battery pack, so the number of applied parts increases and the structure becomes complicated.

Therefore, it is required to develop a cylindrical battery having a structure in which a positive electrode terminal and a negative electrode terminal are applied in the same direction to simplify the electrical connection structure of a plurality of cylindrical batteries.

Meanwhile, secondary batteries that are easily applicable to various product groups, allow repeated charging and discharging, and have electrical characteristics such as high energy density are universally applied not only to portable devices but also to electric vehicles (EVs) or hybrid electric vehicles (HEVs) driven by an electric drive source. Hereinafter, the battery will refer to a secondary battery.

These batteries are attracting attention as a new energy source to improve eco-friendliness and energy efficiency because they have the primary advantage that they can dramatically reduce the use of fossil fuels as well as the secondary advantage that no byproducts are generated from the use of energy.

Batteries currently widely used in the art include lithium ion batteries, lithium polymer batteries, nickel cadmium batteries, nickel hydrogen batteries, nickel zinc batteries, and the like, and a unit secondary battery has an operating voltage of about 2.5V to 4.5V. Therefore, when a higher output voltage is required, a battery pack may be configured by connecting a plurality of batteries in series. In addition, a plurality of batteries may be connected in parallel to form a battery pack according to the charge/discharge capacity required for the battery pack. Accordingly, the number of batteries included in the battery pack and the form of electrical connection may be variously set according to the required output voltage and/or charge/discharge capacity.

Meanwhile, as a kind of unit battery, there are known cylindrical, rectangular, and pouch-type batteries. In the case of a cylindrical battery, a separator serving as an insulator is interposed between a positive electrode and a negative electrode, and they are wound to form an electrode assembly in the form of a jelly roll, which is inserted into a battery housing to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap plate of a sealing body that seals the opening of the battery housing, and the negative electrode terminal is the battery housing.

However, according to the conventional cylindrical battery having such a structure, since current is concentrated in the strip-shaped electrode tab coupled to the uncoated portion of the positive electrode and/or the uncoated portion of the negative electrode, the current collection efficiency is not good due to large resistance and large heat generation.

For small cylindrical batteries with a form factor of 1865 or 2170, resistance and heat are not a major issue. However, when the form factor is increased to apply the cylindrical battery to an electric vehicle, the cylindrical battery may ignite while a lot of heat is generated around the electrode tab during the rapid charging process.

In order to solve this problem, there is provided a cylindrical battery (so-called tab-less cylindrical battery) in which the uncoated portion of the positive electrode and the uncoated portion of the negative electrode are designed to be positioned at the top and bottom of the jelly-roll type electrode assembly, respectively, and the current collecting plate is welded to the uncoated portion to improve the current collecting efficiency.

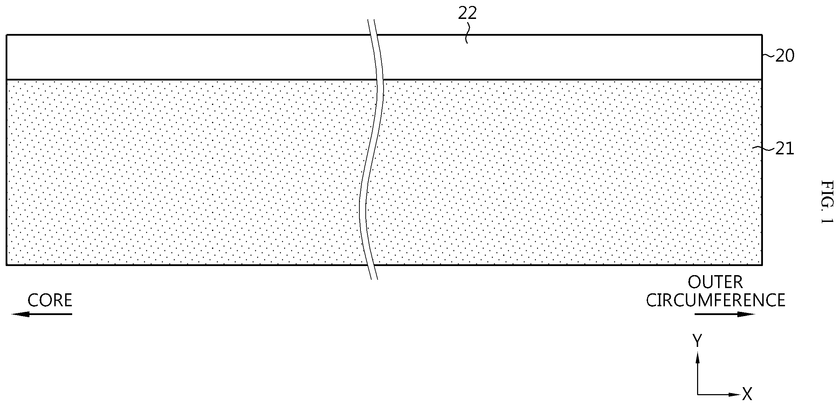

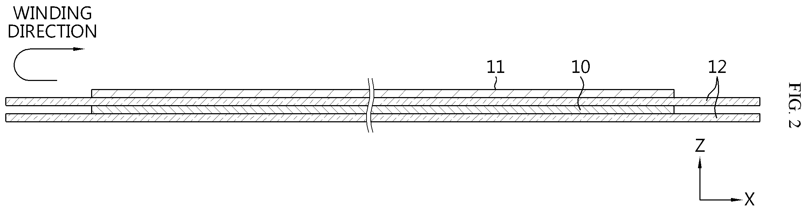

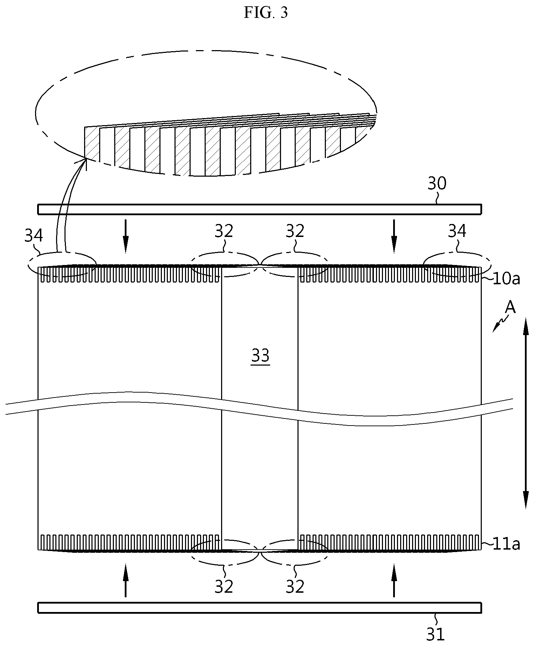

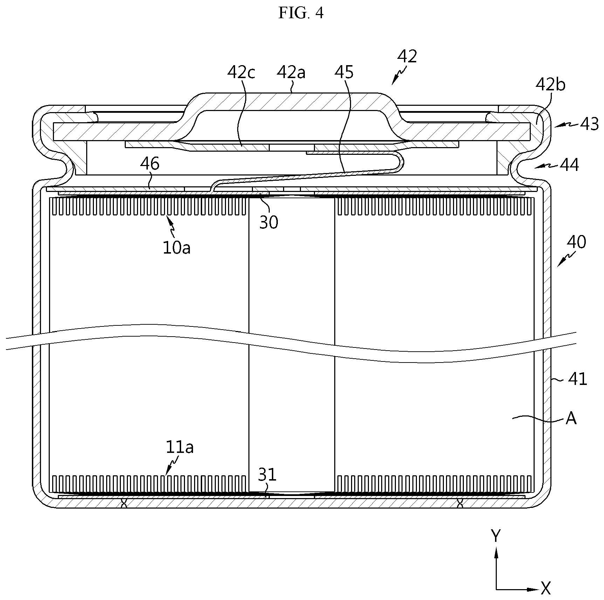

FIGS. 1 to 3 are diagrams showing a process of manufacturing a tab-less cylindrical battery. FIG. 1 shows the structure of an electrode, FIG. 2 shows a process of winding the electrode, and FIG. 3 shows a process of welding a current collecting plate to a bent surface of an uncoated portion. FIG. 4 is a sectional view showing a tab-less cylindrical battery, taken along the longitudinal direction Y.

Referring to FIGS. 1 to 4, a positive electrode 10 and a negative electrode 11 have a structure in which a sheet-shaped current collector 20 is coated with an active material layer 21, and include an uncoated portion 22 at one long side along the winding direction X.

An electrode assembly A is manufactured by sequentially stacking the positive electrode 10 and the negative electrode 11 together with two sheets of separators 12 as shown in FIG. 2 and then winding them in one direction X. At this time, the uncoated portions of the positive electrode 10 of the negative electrode 11 are arranged in opposite directions.

After the winding process, the uncoated portion 10a of the positive electrode 10 and the uncoated portion 11a of the negative electrode 11 are bent toward the core. After that, current collecting plates 30, 31 are welded and coupled to the uncoated portions210a, 11a, respectively.

An electrode tab is not separately coupled to the positive electrode uncoated portion 10a and the negative electrode uncoated portion 11a, the current collecting plates 30, 31 are connected to external electrode terminals, and a current path is formed with a large cross-sectional area along the winding axis direction of electrode assembly A (see arrow), which has an advantage of lowering the resistance of the battery. This is because resistance is inversely proportional to the cross-sectional area of the path through which the current flows.

However, when the form factor of the cylindrical battery increases and the magnitude of the charging current during rapid charging increases, the heat problem occurs again in the tab-less cylindrical battery.

Specifically, the conventional tab-less cylindrical battery 40 includes a battery housing 41 and a sealing body 42 as shown in FIG. 4. The sealing body 42 includes a cap plate 42a, a sealing gasket 42b and a connection plate 42c. The sealing gasket 42b surrounds the edge of the cap plate 42a and is fixed by a crimping portion 43. In addition, the electrode assembly A is fixed in the housing 41 by a beading portion 44 to prevent vertical movement.

Typically, the positive electrode terminal is the cap plate 42a of the sealing body 42, and the negative electrode terminal is the battery housing 41. Therefore, the current collecting plate 30 coupled to the uncoated portion 10a of the positive electrode 10 is electrically connected to the connection plate 42c attached to the cap plate 42a through the lead 45 in a strip form. In addition, the current collecting plate 31 coupled to the uncoated portion 11a of the negative electrode 11 is electrically connected to the bottom of the housing 41. The insulator 46 covers the current collecting plate 30 to prevent the battery housing 41 and the uncoated portion 10a of the positive electrode 10 having different polarities from contacting each other and causing a short circuit.

When the current collecting plate 30 is connected to the connection plate 42c, the lead 45 of a strip form is used. The lead 45 is separately attached to the current collecting plate 30 or is manufactured integrally with the current collecting plate 30. However, since the lead 45 is in the form of a thin strip, its sectional area is small, and thus, when a rapid charging current flows, a lot of heat is generated. In addition, excessive heat generated from the lead 45 is transferred toward the electrode assembly A to shrink the separator 12, which may cause an internal short circuit that is a main cause of thermal runaway.

The lead 45 also occupies a significant installation space inside the battery housing 41. Therefore, the cylindrical battery 40 including the lead 45 has low space efficiency, so there is a limit in increasing the energy density.

Moreover, in order to connect the conventional tab-less cylindrical batteries 40 in series and/or parallel, it is necessary to connect a bus bar component to the cap plate 42a of the sealing body 42 and the bottom surface of the housing 41, so space efficiency is reduced. A battery pack mounted to an electric vehicle includes hundreds of cylindrical batteries 40. Accordingly, the inefficiency of the electrical wiring causes considerable inconvenience in the electric vehicle assembling process and the maintenance of the battery pack.

On the other hand, by applying a conventional positive electrode active material containing secondary particles, particle breakage may occur during electrode manufacturing, and the amount of gas generated due to internal cracking during charging and discharging may increase, which may cause problems with battery stability.

To solve this problem, a positive electrode active material in the form of a single particle or pseudo-single particle having a relatively large primary particle size has been developed. However, if the positive electrode active material in the form of a single particle or pseudo-single particle is applied to a high loading electrode and then rolling is performed, there is a problem in that the electrode is broken in a state where the electrode porosity is not achieved to a target level, and there is a problem in that the resistance characteristics and charge/discharge efficiency of the lithium secondary battery are not good.

WO 2019/074234 A1 discloses a cylindrical battery cell in which the efficiency of the production process is increased by facilitating a welding process. A cylindrical battery cell according to this document for achieving such an objective is a cylindrical battery cell in which a first electrode terminal and a second electrode terminal having different polarities are formed on an upper end outer circumferential part and central part respectively, and includes: an electrode assembly; a battery case; a cap assembly; and a connection cap, wherein the connection cap comprises: a cap housing mounted on an upper part of the battery case and cap assembly and comprising an insulating material; and a first connection plate and a second connection plate which rest on an upper part of the cap housing and are configured to be electrically connected to the first electrode terminal and second electrode terminal respectively.

WO 2021/033940 A1 discloses a rechargeable battery which increases capacity by reducing a thickness by which an electrode terminal is installed, and facilitates the connection of a lead tab to the electrode terminal. A rechargeable battery, according to one embodiment of this document, comprises: an electrode assembly formed by disposing and winding a separator between a first electrode and a second electrode; a case which faces one end from among two wound ends of the electrode assembly so as to accommodate the electrode assembly; a cap plate which faces the other end of the two wound ends so as to seal an opening of the case; an electrode terminal which is installed in a terminal hole formed in the cap plate while having an insulation sealing material interposed therebetween; a first lead tab for connecting the first electrode to the electrode terminal; and a second lead tab for connecting the second electrode to the case.

### DISCLOSURE

### Technical Problem

The present disclosure is designed in consideration of the above problems, and therefore the present disclosure is directed to providing a cylindrical battery having a structure in which a positive electrode terminal and a negative electrode terminal are applied in the same direction.

The present disclosure is also directed to securing a sufficient area for welding an electric connection component such as a bus bar with an electrode terminal of a cylindrical battery while manufacturing a battery pack, in a case where a plurality of cylindrical batteries are to be electrically connected in one direction.

The present disclosure is also directed to reducing the internal resistance of the cylindrical battery and increase the energy density by improving the electrode terminal structure of the cylindrical battery to increase space efficiency in the battery housing.

The present disclosure is also directed to solving the internal heating problem during rapid charging by improving the electrode terminal structure of the cylindrical battery to enlarge the cross-sectional area of the current path.

The present disclosure is also directed to providing a cylindrical battery with an improved structure capable of performing electrical wiring work for serial and/or parallel connection of cylindrical batteries on one side of the cylindrical batteries.

The present disclosure is also directed to providing a battery pack manufactured using the cylindrical battery having an improved structure and a vehicle including the battery pack.

The present disclosure is also directed to providing an electrode and an electrode assembly including the same, which may implement excellent thermal stability ad have high electrical conductivity and high rolling characteristics by applying a single particle or pseudo-single particle as a positive electrode active material.

The present disclosure is also directed to providing an electrode assembly with improved energy density by including a silicon-based negative electrode active material in the negative electrode.

The present disclosure is also directed to providing an electrode assembly in which the range of the positive electrode active material portion is increased without worrying about lithium precipitation.

The present disclosure is also directed to providing a cylindrical battery capable of exhibiting excellent thermal stability even when the volume of the battery increases due to an increase in form factor.

However, the technical object to be solved by the present disclosure is not limited to the above, and other objects not mentioned herein will be clearly understood by those skilled in the art from the following disclosure.

### Technical Solution

In one aspect of the present disclosure, there is provided a cylindrical battery, comprising an electrode assembly in which a first electrode, a second electrode, and a separator interposed therebetween are wound around a winding axis to define a core and an outer circumference.

The first electrode and the second electrode may respectively include a first uncoated portion and a second uncoated portion not coated with an active material layer along a winding direction, the first uncoated portion and the second uncoated portion may be defined as an electrode tab in themselves.

The cylindrical battery may include a battery housing configured to accommodate the electrode assembly through an opening formed in one side and electrically connected to the second uncoated portion; an electrode terminal riveted through a perforated hole formed in a closed portion provided opposite to the opening of the battery housing and electrically connected to the first uncoated portion; an insulating gasket interposed between the electrode terminal and the perforated hole; and a cap plate configured to cover the opening of the battery housing,

The electrode terminal may include a body portion inserted into the perforated hole; an outer flange portion configured to extend along an outer surface of the closed portion from a circumference of one side of the body portion exposed through the outer surface of the closed portion of the battery housing; an inner flange portion configured to extend toward an inner surface of the closed portion from a circumference of the other side of the body portion exposed through the inner surface; and a flat portion provided on an inner side of the inner flange portion.

The cap plate may be insulated from the battery housing and not electrically connected to the electrode assembly to have no polarity.

A surface of the electrode terminal exposed to the outside of the battery housing may be a first electrode terminal, and a portion of the outer surface of the closed portion of the battery housing, which is parallel to an upper surface of the first electrode terminal, may be a second electrode terminal.

The flat portion and the inner surface of the closed portion may be parallel to each other.

An angle between the inner flange portion and the inner surface of the closed portion may be 0 degrees to 60 degrees.

A recess portion having a structure of an asymmetric groove may be provided between the inner flange portion and the flat portion.

The asymmetrical groove may include a sidewall of the flat portion and an inclined surface of the inner flange portion connected to an end of the sidewall.

The sidewall may be perpendicular to the inner surface of the closed portion.

The thickness of the inner flange portion may decrease as being away from the body portion.

The insulating gasket may include an outer gasket interposed between the outer flange portion and the outer surface of the closed portion; and an inner gasket interposed between the inner flange portion and the inner surface of the closed portion, and the inner gasket and the outer gasket may have different thicknesses depending on positions thereof.

Among the area of the inner gasket, an area interposed between an inner edge of the perforated hole connected to the inner surface of the closed portion and the inner flange portion may have a relatively smaller thickness than other area.

The inner edge of the perforated hole may include an opposing surface facing the inner flange portion.

The inner gasket may extend longer than the inner flange portion.

Based on the inner surface of the closed portion, the height of the flat portion may be greater than or equal to the height of an end of the inner gasket.

Based on the inner surface of the closed portion, the height of the flat portion may be greater than or equal to the height of an end of the inner flange portion.

The radius from a center of the body portion to an edge of the outer flange portion may be 10% to 60% of the radius of the closed portion.

The radius from a center of the body portion to an edge of the flat portion may be 4% to 30% of the radius of the closed portion.

The first uncoated portion may include a plurality of independently bendable segments. The plurality of segments of the first uncoated portion may be bent toward the core to form a bent surface of the segments at one end of the electrode assembly. In this case, the electrode terminal may be electrically connected to the bent surface of the segments of the first uncoated portion.

The cylindrical battery may further comprise a first current collecting plate coupled to the bent surface of the segments of the first uncoated portion; and an insulator interposed between the first current collecting plate and the inner surface of the closed portion. In this case, the flat portion of the electrode terminal may pass through the insulator and be coupled to the first current collecting plate.

The second uncoated portion may include a plurality of independently bendable segments. The plurality of segments of the second uncoated portion may be bent toward the core to form a bent surface of the segments at the other end of the electrode assembly. In this case, the battery housing may be electrically connected to the bent surface of the segments of the second uncoated portion.

The cylindrical battery may further comprise a second current collecting plate coupled to the bent surface of the segments of the second uncoated portion. In this case, at least a part of an edge of the second current collecting plate may extend toward an inner surface of a beading portion and be interposed and fixed between the inner surface of the beading portion and the sealing gasket.

A first sliding portion in which the thickness of the active material layer is reduced may be included in a boundary region between a coated portion and the uncoated portion of the first electrode, a second sliding portion in which the thickness of the active material layer is reduced may be included in a boundary region between a coated portion and the uncoated portion of the second electrode, the first sliding portion and the second sliding portion may be located in opposite directions based on a winding axis direction.

The coated portion of the first electrode may include a loading reduction portion in which a loading amount of the active material is reduced, and the position of the loading reduction portion may correspond to the position of the second sliding portion.

The active material layer of the first electrode may include a positive electrode active material including a single particle, a pseudo-single particle, or a combination thereof.

Dₘᵢₙ, which a minimum particle size in a cumulative volume distribution of the positive electrode active material, may be 1.0 µm or more.

In the volume cumulative distribution of the positive electrode active material, D₅₀, which is a particle size when a volume cumulative amount is 50%, may be 5.0 µm or less.

Dₘₐₓ, which is a maximum particle size in the volume cumulative distribution of the positive electrode active material, may be 12 µm to 17 µm.

The positive electrode active material may have a unimodal particle size distribution showing a single peak in a volume cumulative particle size distribution graph, and the particle size distribution (PSD) represented by the following formula is 3 or less: $PSD = \left({D}_{max}-{D}_{min}\right) / {D}_{50} .$

The single particle, the pseudo-single particle, or the combination thereof may be included in an amount of 95 wt% to 100 wt% based on the total weight of the positive electrode active material included in the active material layer of the first electrode.

The positive electrode active material may include a lithium nickel-based oxide containing 80 mol% or more of Ni based on the total number of moles of a transition metal.

The active material layer of the first electrode may have a porosity of 15% to 23%.

The active material layer of the first electrode may contain flake graphite in a weight ratio of 0.05 wt% to 5 wt%.

The active material layer of the first electrode may further contain carbon nanotubes.

The active material layer of the second electrode may include a silicon-based negative electrode active material and a carbon-based negative electrode active material.

The silicon-based negative electrode active material and the carbon-based negative electrode active material may be included in the active material layer of the second electrode in a weight ratio of 1 : 99 to 20 : 80.

In another aspect of the present disclosure, there is also provided a battery pack, comprising a plurality of cylindrical batteries having at least one of the above features, and a pack housing configured to accommodate the plurality of cylindrical batteries.

In another aspect of the present disclosure, there is also provided a vehicle, comprising the battery pack.

### Advantageous Effects

According to one aspect of the present disclosure, a cylindrical battery having a structure in which a positive electrode terminal and a negative electrode terminal are applied in the same direction is provided, and thus an electrical connection structure of a plurality of cylindrical batteries can be simplified.

According to another aspect of the present disclosure, since the electrode terminal of the cylindrical battery has a sufficient area to be welded with electrical connecting parts such as bus bars, sufficient bonding strength may be secured between the electrode terminal and the electrical connecting parts, and the resistance at the bonding portion between the electrical connection parts and the electrode terminal can be lowered to a desirable level.

According to still another aspect of the present disclosure, by improving the electrode terminal structure of the cylindrical battery to increase the space efficiency in the housing, it is possible to lower the internal resistance of the cylindrical battery and increase the energy density.

According to still another aspect of the present disclosure, by improving the structure of the electrode terminal of the cylindrical battery to enlarge the sectional area of the current path, it is possible to improve the problem of internal heat generated during rapid charging.

According to still another aspect of the present disclosure, an electrical wiring operation for serial and/or parallel connection of the cylindrical batteries may be performed at one side of the cylindrical batteries.

According to still another aspect of the present disclosure, it is possible to provide a battery pack manufactured using the cylindrical battery having an improved structure and a vehicle including the same.

According to still another aspect of the present disclosure, since single particle-based active material particles are applied as the positive electrode active material to minimize particle breakage during electrode manufacturing and gas generation due to internal cracking during charging and discharging, excellent safety can be realized even in a large cylindrical battery with increased volume.

According to still another aspect of the present disclosure, since the positive electrode includes positive electrode active material powder having Dₘᵢₙ of 1.0 µm or more, thermal safety of the battery may be further improved. According to the study by inventors of the present discloser, even if a single particle and/or pseudo-single particle is applied as the positive electrode active material, the effect of suppressing particle breakage and improving thermal safety after rolling is different depending on the particle size of the positive electrode active material powder. In particular, when particles with a particle diameter of less than 1.0 µm are included in the positive electrode active material powder, the line pressure increases during the rolling process, resulting in increased particle breakage and reduced thermal stability, so it is impossible to sufficiently secure thermal stability when applying a large-sized cylindrical battery. Therefore, in the present disclosure, the effect of improving thermal safety can be maximized by using a positive electrode active material powder having a minimum particle size (Dₘᵢₙ) controlled to 1.0 µm or more.

According to still another aspect of the present disclosure, since the positive electrode contains a positive electrode active material powder whose D₅₀, Dₘₐₓ, and particle size distribution (PSD) are appropriately adjusted so as to minimize the increase in resistance due to single particle application, it is possible to implement excellent capacity characteristics and power characteristics.

According to still another aspect of the present disclosure, the conductivity of the electrode can be improved by including a single particle-based positive electrode active material coated with a conductive coating layer or by containing novel CNT as a conductive material.

According to still another aspect of the present disclosure, since the positive electrode active material layer contains flake graphite, when the positive electrode active material layer is rolled, the flake graphite provides a sliding effect to the positive electrode active material, so that the rolling properties of the electrode are improved, and the electrode porosity can be lowered to the target level. Accordingly, stability, initial resistance characteristics, and charge/discharge efficiency of the cylindrical battery are improved.

According to still another aspect of the present disclosure, a higher energy density can be implemented by including a silicon-based negative electrode active material with a large capacity in the negative electrode.

According to still another aspect of the present disclosure, since a loading reduction portion with a small loading amount of the positive electrode active material is included in the positive electrode, the range of the positive electrode active material portion can be increased without worrying about lithium precipitation.

According to still another aspect of the present disclosure, compared to a conventional battery having a strip-shaped electrode tab, internal heat generation of the battery can be effectively reduced, so the thermal safety of the battery can be improved.

In addition, the present disclosure may have various other effects, which will be described in each embodiment, or effects that can be easily inferred by those skilled in the art will not be described.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view showing a structure of an electrode used for a conventional tab-less cylindrical battery.
FIG. 2 is a diagram showing a process of winding an electrode assembly included in the conventional tab-less cylindrical battery.
FIG. 3 illustrates a process of welding a current collecting plate to a bent surface of an uncoated portion in the conventional tab-less cylindrical battery.
FIG. 4 is a sectional view showing a conventional tab-less cylindrical battery, taken along a longitudinal direction Y.
FIG. 5 is a diagram showing an appearance of a cylindrical battery according to an embodiment of the present disclosure.
FIG. 6 is a diagram showing an internal structure of the cylindrical battery according to an embodiment of the present disclosure.
FIGS. 7 and 8 are partially sectioned views showing an upper structure of the cylindrical battery according to an embodiment of the present disclosure.
FIGS. 9 and 10 are diagrams showing a coupling structure of a first current collecting plate and an electrode assembly applied to the present disclosure.
FIG. 11 is a partially sectioned view showing a lower structure of the cylindrical battery according to an embodiment of the present disclosure.
FIG. 12 is a lower plan view showing a lower surface of the cylindrical battery according to an embodiment of the present disclosure.
FIG. 13 is a diagram showing a second current collecting plate according to an embodiment of the present disclosure.
FIG. 14 is a schematic diagram showing a battery pack according to an embodiment of the present disclosure.
FIG. 15 is a schematic diagram showing a vehicle according to an embodiment of the present disclosure.
FIG. 16 is a cross-sectional view showing a riveting structure of the electrode terminal according to an embodiment of the present disclosure.
FIG. 17 is an enlarged cross-sectional view showing a portion indicated by a dotted circle in FIG. 16.
FIG. 18 is a cross-sectional view showing the cylindrical battery according to an embodiment of the present disclosure, taken along the longitudinal direction Y.
FIG. 19 is a plan view showing an electrode structure according to an embodiment of the present disclosure.
FIG. 20 is a cross-sectional view, taken along the longitudinal direction Y, showing an electrode assembly in which a segment structure of the uncoated portion of the electrode according to an embodiment of the present disclosure is applied to the first electrode and the second electrode.
FIG. 21 is a cross-sectional view, taken along the longitudinal direction Y, showing the electrode assembly in which the uncoated portion is bent according to an embodiment of the present disclosure.
FIG. 22 is a scanning electron microscope (SEM) photograph showing a carbon nanotube (existing CNT) commonly used in the prior art.
FIG. 23 is a SEM photograph showing a novel CNT according to an embodiment of the present disclosure.
FIG. 24 is a table showing the comparison of physical properties of the existing CNT and the new CNT.
FIGS. 25 to 28 are graphs showing sheet resistance and high-temperature life characteristics for each conductive material ratio when single particle-based active material particles are applied as the positive electrode active material.
FIG. 29 is a table comparatively showing the solid content and viscosity of the positive electrode slurry and the resistance values of the MP coating layer and the MP interface layer when carbon nanotubes (new CNT) with a BET specific surface area of 300 m²/g to 500 m²/g are applied and when carbon nanotubes (existing CNT) with a BET of 200 m²/g or more and less than 300 m²/g are applied.
FIG. 30a is a SEM picture showing a positive electrode active material used in Example 2-1 of the present disclosure.
FIG. 30b is a SEM picture showing a positive electrode active material used in Example 2-2 of the present disclosure.
FIG. 30c is a SEM picture showing a positive electrode active material used in Comparative Example 2-2 of the present disclosure.
FIG. 31a is a graph showing a hot box test result of a 4680 cell manufactured by Example 1 of the present disclosure.
FIG. 31b is a graph showing a hot box test result of a 4680 cell manufactured by Comparative Example 1.
FIG. 31c is a graph showing hot box test results of Sample 1 of Example 2-1 of the present disclosure and a 4680 cell manufactured by Comparative Example 2-1.
FIG. 31d is a graph showing hot box test results of Samples 2 and 3 of Example 2-1 of the present disclosure, Samples 1 and 2 of Example 2-2, and a 4680 cell manufactured by Comparative Example 2-2.
FIG. 32a is a cross-sectional SEM picture of the positive electrode manufactured in Example 2-1 of the present disclosure.
FIG. 32b is a cross-sectional SEM picture of the positive electrode manufactured in Comparative Example 2-1.
FIG. 33a is a graph showing the results of measuring resistance characteristics according to SOC while charging a coin half-cell including a positive electrode according to Example 3-3 of the present disclosure, Comparative Example 3-1 and Comparative Example 3-2 to 4.2V.
FIG. 33b is a graph showing the measurement result of capacity retention and resistance increase (DCIR increase) obtained through a charge/discharge cycle experiment for a 4680 cell according to Example 3-1 and Example 3-3 of the present disclosure, and Comparative Example 3-1.
FIG. 34 is a diagram showing an electrode assembly according to an embodiment of the present disclosure.
FIG. 35 is a cross-sectional view, taken along the cutting line A-A' in FIG. 34.
FIGS. 36 and 37 are diagrams showing a process of manufacturing a negative electrode according to an embodiment of the present disclosure.
FIG. 38 is a perspective view showing a negative electrode according to an embodiment of the present disclosure.
FIGS. 39 and 40 are diagrams showing a process of manufacturing a positive electrode according to an embodiment of the present disclosure.
FIG. 41 is a perspective view showing a positive electrode according to an embodiment of the present disclosure.
FIG. 42 is a diagram showing an electrode assembly according to a comparative example.
FIG. 43 is a cross-sectional view, taken along the cutting line B-B' in FIG. 42.
FIG. 44 is a diagram showing a process of manufacturing a negative electrode according to a comparative example.
FIG. 45 is a diagram showing a process of manufacturing a positive electrode according to a comparative example.
FIG. 46 is a graph showing the change in energy density depending on the content of a silicon-based negative electrode active material and the presence or absence of doping of the silicon-based negative electrode active material, in a battery using a mixture of a silicon-based negative electrode active material and a carbon-based negative electrode active material as a negative electrode active material.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, in order to help the understanding of the present disclosure, the accompanying drawings are not drawn to scale, but dimensions of some components may be exaggerated. Also, the same reference signs may be assigned to the same components in different embodiments.

Since the size and thickness of each component shown in the drawings are arbitrarily illustrated for convenience of description, the present disclosure is not necessarily limited to the drawings. In the drawings, the thickness is shown enlarged to clearly express the various layers and regions. In addition, in the drawings, for convenience of explanation, the thicknesses of some layers and regions are exaggerated.

In addition, when a part such as a layer, film, region, plate, etc. is described to be "above" or "on" another part, this includes not only the case where it is "directly on" another part, but also the case where still another part exists therebetween. Conversely, when a part is described to be "directly on" another part, it means that there is no other part therebetween. In addition, to be "above" or "on" a reference part means to be located above or below the reference part, and does not mean to be located "above" or "on" in a direction opposite to gravity.

In addition, throughout the specification, when a certain part is described to "include" a certain component, it means that it may further include other components without excluding other components, unless otherwise stated.

In addition, throughout the specification, when it is referred to as "in a planar form", it means when the target part is viewed from above, and when it is referred to as "in a cross-sectional form", it means when the target part is vertically cut and viewed from the side.

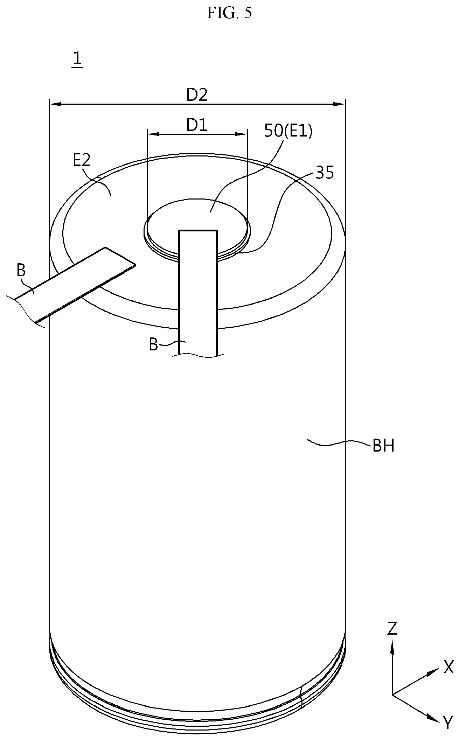

Referring to FIGS. 5 to 7, a cylindrical battery 1 according to an embodiment of the present disclosure includes an electrode assembly A, a battery housing BH, a cap plate 60, and an electrode terminal 50.

The cylindrical battery 1 may further include an insulating gasket 35 and/or a first current collecting plate 36 and/or an insulator 37 and/or a second current collecting plate 38 and/or a sealing gasket 39 in addition to the above-described components.

The electrode assembly A includes a first electrode having a first polarity, a second electrode having a second polarity, and a separator interposed between the first electrode and the second electrode. The first electrode is a positive electrode or a negative electrode, and the second electrode corresponds to an electrode having polarity opposite to that of the first electrode.

The electrode assembly A may have, for example, a jelly-roll shape. That is, the electrode assembly A may be manufactured by winding a stack, which is formed by sequentially stacking the first electrode, the separator and the second electrode at least once, based on a winding center C. In this case, an additional separator may be provided on the outer circumference of the electrode assembly A to insulate the electrode assembly from the battery housing BH.

The first electrode includes a first electrode current collector and a first electrode active material coated on one surface or both surfaces of the first electrode current collector. At one end in the width direction (direction parallel to the Z-axis) of the first electrode current collector, there is an uncoated portion of the first electrode (first uncoated portion) on which the first electrode active material is not coated. The first uncoated portion serves as a first electrode tab 13. The first electrode tab 13 is provided to an upper portion in the height direction (direction parallel to the Z-axis) of the electrode assembly A accommodated in the battery housing BH.

The second electrode includes a second electrode current collector and a second electrode active material coated on one surface or both surfaces of the second electrode current collector. At the other end in the width direction (direction parallel to the Z-axis) of the second electrode current collector, there is an uncoated portion of the second electrode (second uncoated portion) on which the second electrode active material is not coated. The second uncoated portion serves as a second electrode tab 14. The second electrode tab 14 is provided to a lower portion in the height direction (direction parallel to the Z-axis) of the electrode assembly A accommodated in the battery housing BH.

The first electrode tab 13 and the second electrode tab 14 extend and protrude in opposite directions along the width direction of the electrode assembly A, that is, along the height direction (direction parallel to the Z-axis) of the cylindrical battery 1.

Referring to FIGS. 5 to 8, the battery housing BH is a substantially cylindrical container with an opening formed at a lower side, and is made of, for example, a conductive material such as metal. The material of the battery housing BH may be, for example, aluminum or steel. A side surface (outer circumference) and an upper surface of the battery housing BH may be integrally formed. The upper surface (parallel to the X-Y plane) of the battery housing BH has a substantially flat shape. The upper portion located on the opposite side of the opening is referred to as a closed portion. The battery housing BH accommodates the electrode assembly A through the opening formed at the lower side and accommodates the electrolyte together.

The battery housing BH is electrically connected to the electrode assembly A. The battery housing BH is electrically connected to the second electrode tab 14 of the electrode assembly A, for example. In this case, the battery housing BH has the same polarity as the second electrode tab 14.

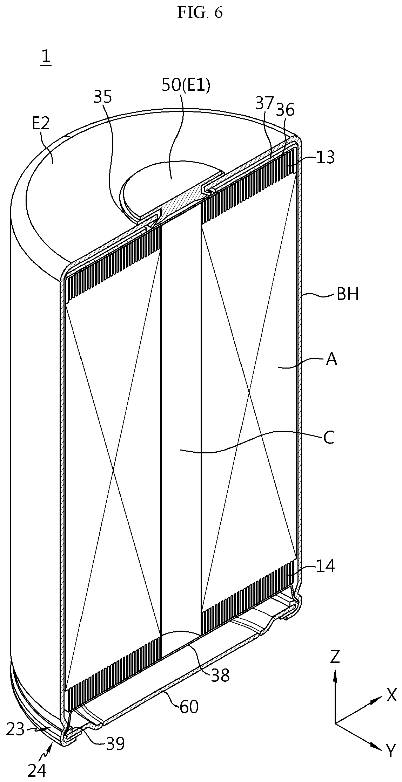

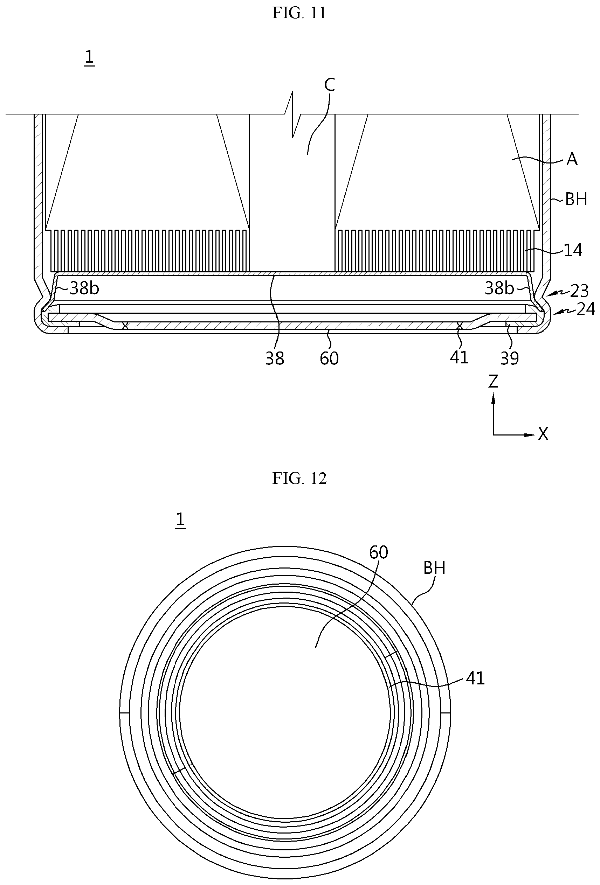

Referring to FIGS. 6 and 11, the battery housing BH may include a beading portion 23 and a crimping portion 24 formed at a lower end thereof. The beading portion 23 is located at the lower portion of the electrode assembly A. The beading portion 23 is formed by press-fitting the periphery of the outer circumference of the battery housing BH. The beading portion 23 prevents the electrode assembly A, which may have a size approximately corresponding to the width of the battery housing BH, from escaping through the opening formed at the lower end of the battery housing BH, and functions as a support portion on which the cap plate 60 is seated.

The crimping portion 24 is formed below the beading portion 23. The crimping portion 24 has an extended and bent shape to surround the outer circumference of the cap plate 60 disposed below the beading portion 23 and a part of the lower surface of the cap plate 60.

However, the present disclosure does not exclude the case where the battery housing BH does not include the beading portion 23 and/or the crimping portion 24. In the present disclosure, when the battery housing BH does not include the beading portion 23 and/or the crimping portion 24, the electrode assembly A may be fixed and/or the cap plate 60 may be fixed and/or the battery housing BH may be sealed by, for example, additionally applying a part that can function as a stopper for the electrode assembly A and/or additionally applying a structure on which the cap plate 60 can be seated and/or welding the battery housing BH and the cap plate 60 to each other.

Referring to FIGS. 6 and 11, the cap plate 60 may be made of, for example, a metal material to secure rigidity. The cap plate 60 covers the opening formed at the lower end of the battery housing BH. That is, the cap plate 60 forms the lower surface of the cylindrical battery 1. In the cylindrical battery 1 of the present disclosure, the cap plate 60 does not have polarity even when it is made of a metal material having conductivity. Not having polarity may mean that the cap plate 60 is electrically insulated from the battery housing BH and the electrode terminal 50. Therefore, the cap plate 60 does not function as a positive electrode terminal or negative electrode terminal. Therefore, the cap plate 60 does not need to be electrically connected to the electrode assembly A and the battery housing BH, and the material does not necessarily have to be a conductive metal.

When the battery housing BH of the present disclosure includes the beading portion 23, the cap plate 60 may be seated on the beading portion 23 formed in the battery housing BH. In addition, when the battery housing BH of the present disclosure includes the crimping portion 24, the cap plate 60 is fixed by the crimping portion 24. A sealing gasket 39 may be interposed between the cap plate 60 and the crimping portion 24 of the battery housing BH to ensure airtightness of the battery housing BH. Meanwhile, as described above, the battery housing BH of the present disclosure may not have the beading portion 23 and/or the crimping portion 24, and in this case, the sealing gasket 39 may be interposed between a fixing structure provided at the opening side of the battery housing BH to secure airtightness and the cap plate 60.

Referring to FIGS. 11 and 12, the cap plate 60 may further include a venting portion 41 formed to prevent internal pressure from increasing beyond a preset value due to gas generated inside the battery housing BH. The venting portion 41 corresponds to an area of the cap plate 60 having a smaller thickness than the surrounding area. The venting portion 41 is structurally weak compared to the surrounding area. Therefore, when an abnormality occurs in the cylindrical battery 1 and the internal pressure of the battery housing BH increases to a certain level or above, the venting portion 41 is ruptured so that the gas generated inside the battery housing BH is discharged. The venting portion 41 may be formed, for example, by notching one surface or both surfaces of the cap plate 60 to partially reduce the thickness of the cap plate 60.

The cylindrical battery 1 according to an embodiment of the present disclosure has a structure in which both the positive electrode terminal and the negative electrode terminal exist on the upper portion, as will be described later, and as a result, the structure of the upper portion is more complicated than the structure of the lower portion. Accordingly, the venting portion 41 may be formed on the cap plate 60 forming the lower surface of the cylindrical battery 1 to smoothly discharge gas generated inside the battery housing BH.

As shown in FIG. 11, the lower end of the cap plate 60 is preferably positioned higher than the lower end of the battery housing BH. In this case, even if the lower end of the battery housing BH comes into contact with the ground or the bottom surface of a housing for module or pack configuration, the cap plate 60 does not touch the ground or the bottom surface of the housing for module or pack configuration. Therefore, it is possible to prevent a phenomenon in which the pressure required for rupturing the venting portion 41 differs from a design value due to the weight of the cylindrical battery 1, and accordingly, the smooth rupturing of the venting portion 41 may be secured.

Meanwhile, when the venting portion 41 has a closed loop shape as shown in FIGS. 11 and 12, it is more advantageous that the distance from the center of the cap plate 60 to the venting portion 41 is longer in terms of ease of rupture. This is because, when the same venting pressure is applied, as the distance from the center of the cap plate 60 to the venting portion 41 increases, the force acting on the venting portion 41 increases, thereby facilitating rupture. In addition, in terms of smooth discharge of the venting gas, it is more advantageous that the distance from the center of the cap plate 60 to the venting portion 41 is longer. From this point of view, it may be advantageous that the venting portion 41 is formed along the periphery of an edge of a substantially flat area, which protrudes downward (in a downward direction based on FIG. 11) from the peripheral edge area of the cap plate 60.

FIG. 12 shows a case where the venting portion 41 is continuously formed on the cap plate 60 in a substantially circular shape, but the present disclosure is not limited thereto. The venting portion 41 may be discontinuously formed on the cap plate 60 in a substantially circular shape, or may be formed in a substantially straight line shape or other shapes.

Referring to FIGS. 5 to 7, the electrode terminal 50 is made of a conductive metal material, and passes through the upper surface of the battery housing BH, that is, the surface (a surface parallel to the X-Y plane) opposite to the opening of the battery housing BH. The electrode terminal 50 is electrically connected to, for example, the first electrode tab 13 of the electrode assembly A. In this case, the electrode terminal 50 has first polarity. Accordingly, the electrode terminal 50 may function as a first electrode terminal E1 in the cylindrical battery 1 of the present disclosure. When the electrode terminal 50 has the first polarity as above, the electrode terminal 50 is electrically insulated from the battery housing BH having the second polarity. Electrical isolation between the electrode terminal 50 and the battery housing BH may be realized in various ways. For example, the electric insulation may be realized by interposing the insulating gasket 35 between the electrode terminal 50 and the battery housing BH. Alternatively, the insulation may be realized by forming an insulating coating layer on a part of the electrode terminal 50. Alternatively, a method of structurally firmly fixing the electrode terminal 50 may be applied so that contact between the electrode terminal 50 and the battery housing BH is impossible. Alternatively, several methods among the methods described above may be applied together.

The electrode terminal 50 includes a terminal exposing portion 49a and a terminal insert portion 49b. The terminal exposing portion 49a is exposed to the outside of the battery housing BH. The terminal exposing portion 49a may be positioned approximately at the center of the upper surface of the battery housing BH. The maximum width of the terminal exposing portion 49a may be greater than the maximum width of the hole of the battery housing BH through which the electrode terminal 50 passes. The terminal insert portion 49b may be electrically connected to the first electrode tab 13 by passing through a substantially central portion of the upper surface of the battery housing BH. A peripheral edge area of the lower end of the terminal insert portion 49b may be riveted to the inner surface of the battery housing BH. That is, the peripheral edge area of the lower end of the terminal insert portion 49b may have a shape curved toward the inner surface of the battery housing BH, and thus the maximum width of the lower end of the terminal insert portion 49b may be larger than the maximum width of the hole of the battery housing BH through which the terminal insert portion 49b passes.

Meanwhile, when the cylindrical battery 1 of the present disclosure includes the first current collecting plate 36, the central area of the lower end portion of the terminal insert portion 49b may be coupled with the first current collecting plate 36. The central area of the lower end of the terminal insert portion 49b may have, for example, a substantially cylindrical shape. The diameter of the bottom surface of the central region of the lower end of the terminal insert portion 49b may be set to approximately 6.2 mm.

The coupling between the bottom surface of the central area of the lower end of the terminal insert portion 49b and the first current collecting plate 36 may be performed by, for example, laser welding or ultrasonic welding.

The laser welding may be performed by irradiating a laser through a hole formed in the winding center C of the electrode assembly A to form a laser welding line on one surface of the first current collecting plate 36. The laser welding line may be formed in a substantially concentric circle shape on the opposite side of the upper and lower surfaces of the first current collecting plate 36 that does not contact the bottom surface of the central area of the lower end of the terminal insert portion 49b. The welding line may be formed continuously or partially discontinuously.

The concentric welding line may have a diameter of approximately 60% to 80% of the diameter of the bottom surface of the central area of the lower end of the terminal insert portion 49b. For example, when the diameter of the bottom surface of the central area of the lower end of the terminal insert portion 49b is approximately 6.2 mm, the diameter of the circle drawn by the welding line may preferably be approximately 4.0 mm or more. If the diameter of the circle drawn by the welding line is too small, the coupling force by welding may be insufficient. Conversely, if the diameter of the circle drawn by the welding line is too large, the risk of damage to the electrode assembly A due to heat and/or welding spatter may increase.

The ultrasonic welding may be performed by inserting a welding rod for ultrasonic welding through the hole formed in the winding center C of the electrode assembly A. The welding portion formed by the ultrasonic welding is formed at the contact interface between the bottom surface of the central area of the lower end of the terminal insert portion 49b and the first current collecting plate 36. The welding portion formed by the ultrasonic welding may be entirely formed within a concentric circle having a diameter of approximately 30% to 80% of the diameter of the bottom surface of the central area of the lower end of the terminal insert portion 49b. For example, in the case where the bottom surface of the central area of the lower end of the terminal insert portion 49b has a diameter of about 6.2 mm, the diameter of the circle drawn by the ultrasonic welding portion may be about 2.0 mm or more. If the diameter of the circle drawn by the ultrasonic welding is too small, the coupling force by welding may be insufficient. Conversely, if the diameter of the circle drawn by the ultrasonic welding portion is too large, the risk of damage to the electrode assembly A due to heat and/or vibration may increase.

In an embodiment of the present disclosure, the upper surface of the battery housing BH and the electrode terminal 50 exposed to the outside of the battery housing BH have polarities opposite to each other and face in the same direction. In addition, a step may be formed between the electrode terminal 50 and the upper surface of the battery housing BH. Specifically, when the entire upper surface of the battery housing BH has a flat shape or a shape protruding upward from the center thereof, the terminal exposing portion 49a of the electrode terminal 50 may protrude upward more than the upper surface of the battery housing BH. Conversely, when the upper surface of the battery housing BH has a shape concavely recessed downward, that is, in a direction toward the electrode assembly A from the center, the upper surface of the battery housing BH may protrude upward higher than the terminal exposing portion 49a of the electrode terminal 50.

Meanwhile, in the case where the upper surface of the battery housing BH has a shape concavely recessed downward, that is, in a direction toward the electrode assembly A from the center, the upper surface of the battery housing BH and the upper surface of the terminal exposing portion 49a may form the same plane according to the recessed depth and the thickness of the terminal exposing portion 49a of the electrode terminal 50. In this case, a step may not be formed between the upper surface of the battery housing BH and the terminal exposing portion 49a.

The insulating gasket 35 is interposed between the battery housing BH and the electrode terminal 50 to prevent contact between the battery housing BH and the electrode terminal 50 having opposite polarities. As a result, the upper surface of the battery housing BH having a substantially flat shape may function as the second electrode terminal E2 of the cylindrical battery 1.

The insulating gasket 35 includes a gasket exposing portion 35a and a gasket insert portion 35b. The gasket exposing portion 35a is interposed between the terminal exposing portion 49a of the electrode terminal 50 and the battery housing BH. The gasket insert portion 35b is interposed between the terminal insert portion 49b of the electrode terminal 50 and the battery housing BH. When the terminal insert portion 49b is riveted, the gasket insert portion 35b may be deformed together to come into close contact with the inner surface of the battery housing BH. The insulating gasket 35 may be made of, for example, an insulating resin material.

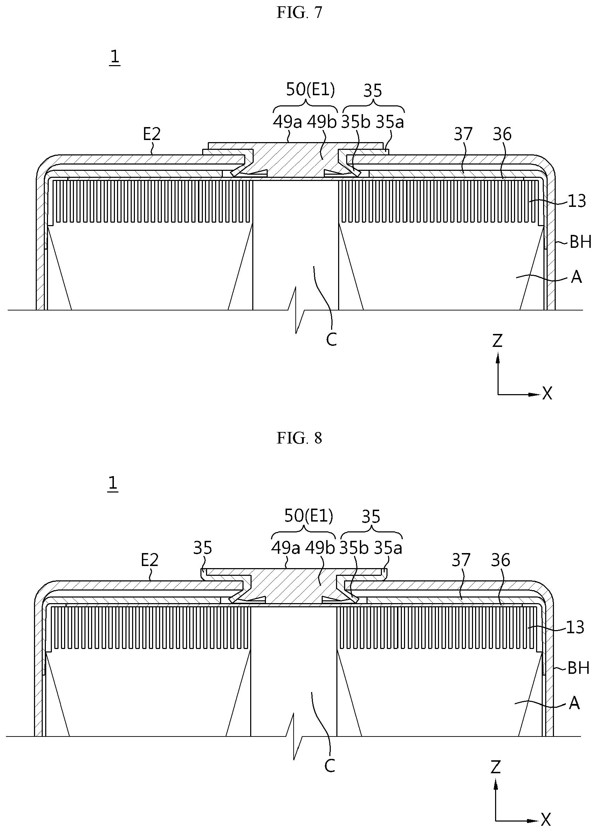

Referring to FIG. 8, the gasket exposing portion 35a of the insulating gasket 35 may have an extended shape to cover the outer circumference of the terminal exposing portion 49a of the electrode terminal 50. If the insulating gasket 35 covers the outer circumference of the electrode terminal 50 as above, it is possible to prevent a short circuit from occurring in the process of coupling an electrical connection part such as a bus bar to the upper surface of the battery housing BH and/or the electrode terminal 50. Although not shown in the drawings, the gasket exposing portion 35a of the insulating gasket 35 may have an extended shape to cover not only the outer circumference of the terminal exposing portion 49a but also a part of the upper surface.

When the insulating gasket 35 is made of a resin material, the insulating gasket 35 may be coupled to the battery housing BH and the electrode terminal 50 by thermal fusion. In this case, airtightness may be enhanced at a coupling interface between the insulating gasket 35 and the electrode terminal 50 and at a coupling interface between the insulating gasket 35 and the battery housing BH. Meanwhile, when the gasket exposing portion 35a of the insulating gasket 35 has a shape extending to the upper surface of the terminal exposing portion 49a, the electrode terminal 50 may be coupled with the insulating gasket 35 by insert injection molding.

According to an embodiment of the present disclosure, the insulating gasket 35, the insulator 37 and the sealing gasket 39 may be formed of the same material. However, this is not essential. The insulating gasket 35 and the insulator 37 may have the same thickness. However, this is not essential. If they have different thicknesses, the insulator 37 may be thinner than the insulating gasket 35, or vice versa.

The entire area of the upper surface of the battery housing BH other than the area occupied by the electrode terminal 50 and the insulating gasket 35 corresponds to the second electrode terminal E2 having a polarity opposite to that of the electrode terminal 50. In contrast, in the present disclosure, when the insulating gasket 35 is omitted and the electrode terminal 50 is partially provided with an insulating coating layer, the entire area of the upper surface of the battery housing BH other than the area occupied by the electrode terminal 50 having an insulating coating layer may function as the second electrode terminal E2.

The cylindrical sidewall of the battery housing BH may be formed as one piece with the second electrode terminal E2 so that there is no discontinuous portion between the cylindrical sidewall and the second electrode terminal E2. The connection from the sidewall of the battery housing BH to the second electrode terminal E2 may be a smooth curve. However, the present disclosure is not limited thereto, and the connection portion may include at least one corner having a predetermined angle.

Referring to FIGS. 6 to 8, the first current collecting plate 36 is coupled to an upper portion of the electrode assembly A. The first current collecting plate 36 is made of a conductive metal material and is connected to the first electrode tab 13. Although not shown in the drawings, the first current collecting plate 36 may include a plurality of irregularities radially formed on its lower surface. When the irregularities are formed, the first current collecting plate 36 may be pressed so that the irregularities are press-fitted into the first electrode tab 13.

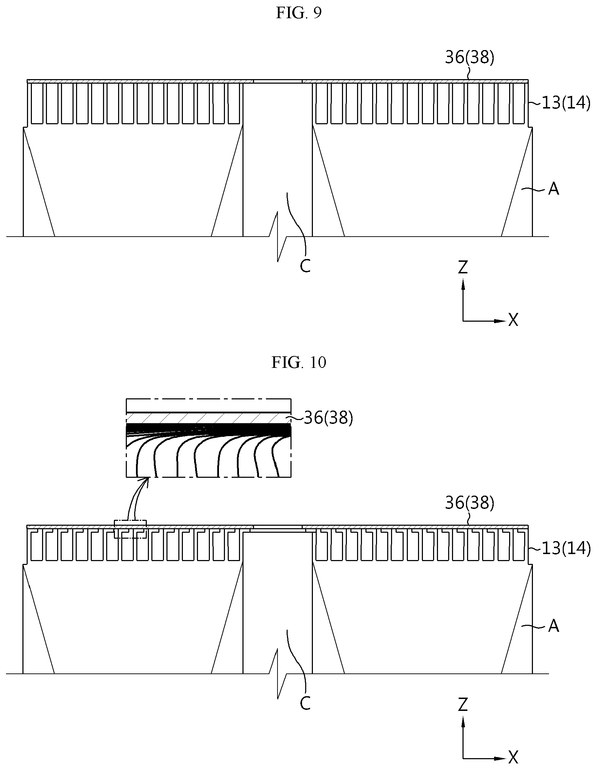

Referring to FIG. 9, the first current collecting plate 36 is coupled to an end of the first electrode tab 13. The coupling between the first electrode tab 13 and the first current collecting plate 36 may be performed by, for example, laser welding. The laser welding may be performed by partially melting the base material of the first current collecting plate 36, or may be performed in a state in which a solder for welding is interposed between the first current collecting plate 36 and the first electrode tab 13. In this case, the solder preferably has a lower melting point compared to the first current collecting plate 36 and the first electrode tab 13.

Referring to FIG. 10, the first current collecting plate 36 may be coupled to a coupling surface formed by bending an end of the first electrode tab 13 in a direction parallel to the first current collecting plate 36 (see the partially enlarged structure). A bending direction of the first electrode tab 13 may be, for example, a direction toward the winding center C of the electrode assembly A. When the first electrode tab 13 has such a bent shape, the space occupied by the first electrode tab 13 may be reduced, resulting in an improvement in energy density. In addition, due to the increase in the coupling area between the first electrode tab 13 and the first current collecting plate 36, coupling strength may be improved and resistance may be reduced.

Referring to FIGS. 6 to 8, the insulator 37 is provided between the upper end of the electrode assembly A and the inner surface of the battery housing BH or between the first current collecting plate 36 coupled to the upper portion of the electrode assembly A and the inner surface of the battery housing BH. The insulator 37 prevents contact between the first electrode tab 13 and the battery housing BH and/or contact between the first current collecting plate 36 and the battery housing BH. The insulator 37 may also be interposed between the upper end of the outer circumference of the electrode assembly A and the inner surface of the battery housing BH. The first current collecting plate 36 may be a plate extending completely across the upper end of the electrode assembly A. However, the present disclosure is not limited thereto, and the first current collecting plate 36 may be formed to extend only partially across the upper end of the electrode assembly A.

When the cylindrical battery 1 according to an embodiment of the present disclosure includes an insulator 37, the terminal insert portion 49b of the electrode terminal 50 passes through the insulator 37 and is coupled to the first current collecting plate 36 or the first electrode tab 13.

The insulator 37 may have an opening adjacent to the winding center C. The opening allows the terminal insert portion 49b of the electrode terminal 50 to directly contact the first current collecting plate 36.

In an embodiment of the present disclosure, the terminal insert portion 49b may have a circular planar shape, but is not limited thereto. The terminal insert portion 49b may optionally have a polygonal shape, a star shape, a shape having a leg extending from the center, or the like.

Referring to FIGS. 6 and 11, the second current collecting plate 38 is coupled to the lower portion of the electrode assembly A. The second current collecting plate 38 is made of a conductive metal material and is connected to the second electrode tab 14. In addition, the second current collecting plate 38 is electrically connected to the battery housing BH. As shown in FIG. 11, the second current collecting plate 38 may be interposed and fixed between the inner surface of the battery housing BH and the sealing gasket 39. Alternatively, the second current collecting plate 38 may be welded to the inner wall of the battery housing BH.

Although not shown in the drawings, the second current collecting plate 38 may include a plurality of irregularities radially formed on one surface thereof. When the irregularities are formed, the second current collecting plate 38 may be pressed so that the irregularities are press-fitted into the second electrode tab 14.

Referring to FIG. 9, the second current collecting plate 38 is coupled to an end of the second electrode tab 14. The coupling between the second electrode tab 14 and the second current collecting plate 38 may be performed by, for example, laser welding. The laser welding may be performed by partially melting the base material of the second current collecting plate 38 or by interposing a solder for welding between the second current collecting plate 38 and the second electrode tab 14. In this case, the solder preferably has a lower melting point compared to the second current collecting plate 38 and the second electrode tab 14.

Referring to FIG. 10, the second current collecting plate 38 may be coupled to a coupling surface formed by bending an end of the second electrode tab 14 in a direction parallel to the second current collecting plate 38 (see the partially enlarged structure). The bending direction of the second electrode tab 14 may be, for example, a direction toward the winding center C of the electrode assembly A. When the second electrode tab 14 has such a bent shape, the space occupied by the second electrode tab 14 may be reduced, resulting in an improvement in energy density. In addition, due to the increase in the coupling area between the second electrode tab 14 and the second current collecting plate 38, coupling strength may be improved and resistance may be reduced.

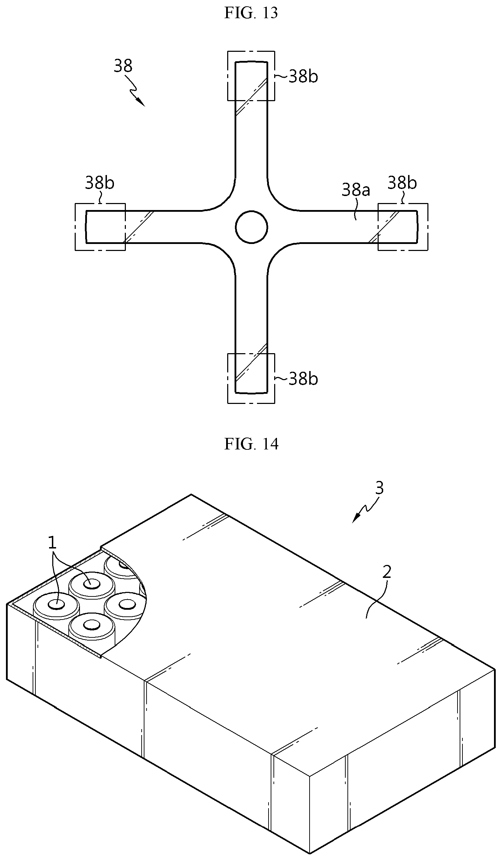

Referring to FIGS. 11 and 13, the second current collecting plate 38 may include a plurality of sub plates 38a extending radially from the center and spaced apart from each other. In this case, the plurality of sub plates 38a are coupled with the second electrode tab 14 and the battery housing BH, respectively.

The outer end 38b of each sub plate 38a may be bent toward the inner surface of the beading portion 23, and an end portion thereof may be fixed while interposed between the sealing gasket 39 and the inner surface of the beading portion 23. Also, the end portion of the outer end 38b may be welded to an inner surface of the beading portion 23, for example, a lower surface. Through welding, the battery housing BH and the second electrode tab 14 may be electrically connected to each other. Since the sealing gasket 39 is interposed in the welding area between the cap plate 60 and the outer end 38b, the cap plate 60 may not have electrical polarity.

When the second current collecting plate 38 includes a plurality of sub plates 38a spaced apart from each other, the second current collecting plate 38 partially covers the lower surface of the electrode assembly A. Accordingly, a sufficient space is secured for the gas generated in the electrode assembly A to move toward the cap plate 60, and downward gas venting may be smoothly performed in the cylindrical battery 1. Meanwhile, as described above, the structure of the second current collecting plate 38 including the plurality of sub plates 38a may be equally applied to the first current collecting plate 36 described above.

Referring to FIGS. 7 and 11, the cylindrical battery 1 according to an embodiment of the present disclosure includes an electrode terminal 50 having a first polarity and a second electrode terminal E2 electrically insulated from the electrode terminal 50 and having a second polarity on one side in the longitudinal direction (direction parallel to the Z-axis). That is, since the pair of electrode terminals E1, E2 are located in the same direction in the cylindrical battery 1 according to an embodiment of the present disclosure, in the case of electrically connecting a plurality of cylindrical batteries 1, it is possible to arrange electrical connection parts such as bus bars only on one side of the cylindrical battery 1. This may lead to simplification of the battery pack structure and improvement of energy density.

In addition, the cylindrical battery 1 has a structure in which one surface of the battery housing BH having a substantially flat shape may be used as the second electrode terminal E2, so that it is possible to secure a sufficient bonding area for bonding electrical connecting parts such as bus bars to the second electrode terminal E2. Accordingly, in the cylindrical battery 1, sufficient bonding strength between the electrical connection parts and the second electrode terminal E2 may be secured, and resistance at the bonding portion may be reduced to a desirable level.

Referring to FIG. 5, a bus bar B is connected to each of the first electrode terminal E1 and the second electrode terminal E2 of the cylindrical battery 1 of the present disclosure. In each of the first electrode terminal E1 and the second electrode terminal E2, in order to sufficiently secure an area for coupling the bus bar B, the area of the first electrode terminal E1 exposed to the outside of the battery housing BH, that is, the upper surface of the terminal exposing portion 49a may have a width (D1) set to be approximately 10% to 60% of the width (D2) of the second electrode terminal E2, that is, the upper surface of the battery housing BH.

Preferably, the cylindrical battery may be, for example, a battery whose form factor ratio (defined as a value obtained by dividing the diameter of the battery by height, namely a ratio of height (H) to diameter (Φ)) is greater than about 0.4.

Here, the form factor means a value indicating the diameter and height of a cylindrical battery. The form factor of the cylindrical battery according to an embodiment of the present disclosure may be, for example, 46110 battery, 4875 battery, 48110 battery, 4880 battery, or 4680 battery. In the numerical value representing the form factor, first two numbers indicate the diameter of the battery and the remaining numbers indicate the height of the battery.

A battery according to an embodiment of the present disclosure may be a battery having an approximately cylindrical shape, whose diameter is approximately 46 mm, height is approximately 110 mm, and form factor ratio is 0.418.

A battery according to another embodiment may be a battery having a substantially cylindrical shape, whose diameter is about 48 mm, height is about 75 mm, and form factor ratio is 0.640.

A battery according to still another embodiment may be a battery having an approximately cylindrical shape, whose diameter is approximately 48 mm, height is approximately 110 mm, and form factor ratio is 0.436.

A battery according to still another embodiment may be a battery having an approximately cylindrical shape, whose diameter is approximately 48 mm, height is approximately 80 mm, and form factor ratio is 0.600.

A battery according to still another embodiment may be a battery having an approximately cylindrical shape, whose diameter is approximately 46 mm, height is approximately 80 mm, and form factor ratio is 0.575.

Conventionally, batteries having a form factor ratio of about 0.4 or less have been used. That is, conventionally, for example, 1865 battery, 2170 battery, etc. were used. The 1865 battery has a diameter of approximately 18 mm, height of approximately 65 mm, and a form factor ratio of 0.277. The 2170 battery has a diameter of approximately 21 mm, a height of approximately 70 mm, and a form factor ratio of 0.300.

Referring to FIG. 14, a battery pack 3 according to an embodiment of the present disclosure includes a battery assembly in which a plurality of cylindrical batteries 1 according to an embodiment of the present disclosure as described above are electrically connected, and a pack housing 2 for accommodating the secondary battery assembly. In the drawing of the present disclosure, components for electrical connection such as a bus bar, a cooling unit and a power terminal are not depicted for convenience of illustration.

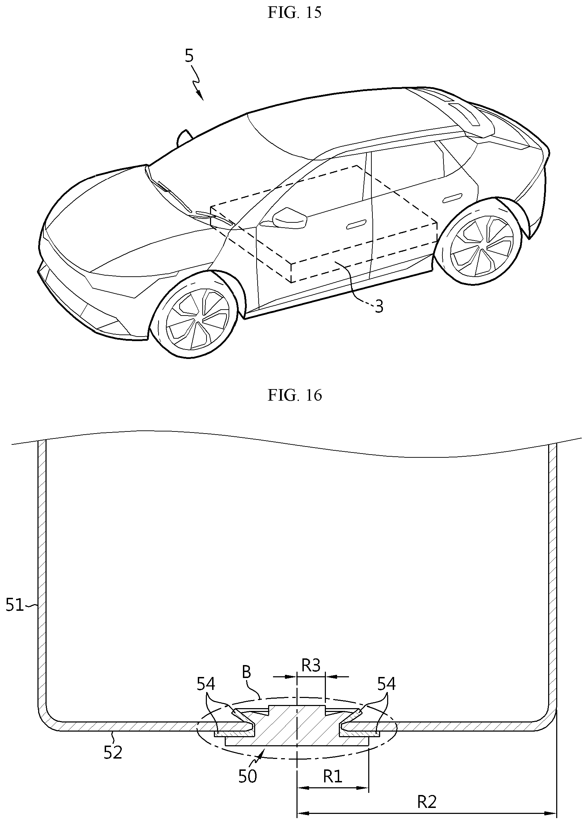

Referring to FIG. 15, a vehicle 5 according to an embodiment of the present disclosure may be, for example, an electric vehicle, a hybrid electric vehicle or a plug-in vehicle, and includes the battery pack 3 according to an embodiment of the present disclosure. The vehicle 5 includes a four-wheeled vehicle or a two-wheeled vehicle. The vehicle 5 operates by receiving a power from the battery pack 3 according to an embodiment of the present disclosure.

The cylindrical battery according to an embodiment of the present disclosure may include an electrode terminal 50 riveted to the bottom of a battery housing.

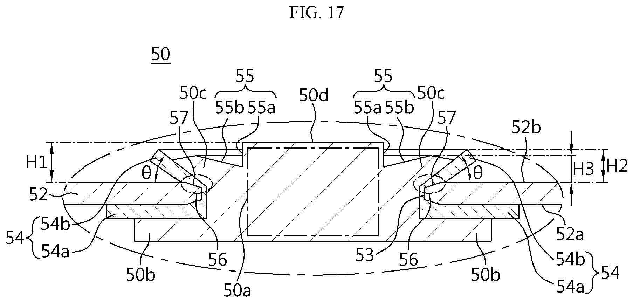

FIG. 16 is a cross-sectional view showing a riveting structure of the electrode terminal 50 according to an embodiment of the present disclosure, and FIG. 17 is an enlarged cross-sectional view showing a portion indicated by a dotted circle in FIG. 16.

Referring to FIGS. 16 and 17, the riveting structure of the electrode terminal 50 according to an embodiment may include a cylindrical battery housing 51 with one side open, an electrode terminal 50 riveted through a perforated hole 53 formed in the bottom 52 of the battery housing 51, and an insulating gasket 54 interposed between the electrode terminal 50 and the perforated hole 53.

The battery housing 51 is made of a conductive metal material. In one example, the battery housing 51 may be made of aluminum or steel, but the present disclosure is not limited thereto.

The electrode terminal 50 is made of a conductive metal material. In one example, the electrode terminal 50 may be made of aluminum, but the present disclosure is not limited thereto.

The insulating gasket 54 may be made of a polymer resin having insulation and elasticity. In one example, the insulating gasket 54 may be made of polypropylene, polybutylene terephthalate, polyfluorinated ethylene, etc., but the present disclosure is not limited thereto.

Preferably, the electrode terminal 50 includes a body portion 50a inserted into the perforated hole 53, an outer flange portion 50b extending along an outer surface 52a from a circumference of one side of the body portion 50a exposed through the outer surface 52a of the bottom 52 of the battery housing 51, an inner flange portion 50c extending toward the inner surface 52b from a circumference of the other side of the body portion 50a exposed through the inner surface 52b of the bottom 52 of the battery housing 51, and a flat portion 50d provided on an inner side of the inner flange portion 50c.

Preferably, the flat portion 50d and the inner surface 52b of the bottom 52 of the battery housing 51 may be parallel to each other. Here, 'parallel' means substantially parallel when observed with the naked eye.

According to one aspect, an angle (θ) between the inner flange portion 50c and the inner surface 52b of the bottom 52 of the battery housing 51 may range from 0 degrees to 60 degrees. The size of the angle is determined by the caulking strength when the electrode terminal 50 is installed in the perforated hole 53 of the battery housing 51 by the caulking method. In one example, the angle θ may decrease to 0 degree as the caulking strength increases. If the angle exceeds 60 degrees, the sealing effect of the insulating gasket 54 may deteriorate.

According to another aspect, a recess portion 55 may be provided between the inner flange portion 50c and the flat portion 50d. The recess portion 55 may have a cross-sectional structure of an asymmetric groove. In one example, the asymmetric groove may be approximately V-shaped. The asymmetric groove may include a sidewall 55a of the flat portion 50d and an inclined surface 55b of the inner flange portion 50c connected to an end of the sidewall 55a. The sidewall 55a may be substantially perpendicular to the inner surface 52b of the bottom 52 of the battery housing 51. 'Perpendicular' means substantially perpendicular when observed with the naked eye. The recess portion 55 is made by the shape of a caulking jig when the electrode terminal 50 is installed in the perforated hole 53 of the battery housing 51 by the caulking method.

Preferably, the thickness of the inner flange portion 50c may decrease as the distance from the body portion 50a of the electrode terminal 50 increases.

According to another aspect, the insulating gasket 54 includes an outer gasket 54a interposed between the outer flange portion 50b and the outer surface 52a of the bottom 52 of the battery housing 51, and an inner gasket 54b interposed between the inner flange portion 50c and the inner surface 52b of the bottom 52 of the battery housing 51.

The outer gasket 54a and the inner gasket 54b may have different thicknesses depending on positions. Preferably, a thickness of a region of the inner gasket 54b interposed between the inner edge 56 of the perforated hole 53 connected to the inner surface 52b of the bottom 52 of the battery housing 51 and the inner flange portion 50c may be relatively small. Preferably, a minimum thickness point may exist in a gasket region interposed between the inner edge 56 of the perforated hole 53 and the inner flange portion 50c. In addition, the inner edge 56 of the perforated hole 53 may include an opposing surface 57 facing the inner flange portion 50c.

Meanwhile, the upper and lower ends of the inner wall of the perforated hole 53 perpendicular to the bottom 52 of the battery housing 51 are chamfered (corner-cut) to form a tapered surface toward the electrode terminal 50. However, the upper end and/or lower end of the inner wall of the perforated hole 53 may be deformed into a smooth curved surface with curvature. In this case, stress applied to the insulating gasket 54 near the upper end and/or lower end of the inner wall of the perforated hole 53 may be more alleviated.

Preferably, the inner gasket 54b may extend longer than the inner flange portion 50c while forming an angle of 0 to 60 degrees with the inner surface 52b of the bottom 52 of the battery housing 51.

In another aspect, a height H1 of the flat portion 50d may be equal to or greater than a height H2 of the end of the inner gasket 54b based on the inner surface 52b of the bottom 52 of the battery housing 51. Also, the height H1 of the flat portion 50d may be equal to or greater than a height H3 of the end of the inner flange portion 50c based on the inner surface 52b of the bottom 52 of the battery housing 51.

When the height parameters H1, H2, and H3 satisfy the above condition, it is possible to prevent the inner flange portion 50c and the inner gasket 54b from interfering with other parts.

In another aspect, a radius (R1) from the center of the body portion 50a of the electrode terminal 50 to the edge of the outer flange portion 50b may be 10% to 60% based on a radius (R2) of the bottom 52 of the battery housing 51.

When R1 is small, the welding space becomes insufficient when electric wiring parts (bus bar) are welded to the electrode terminal 50. In addition, when R1 is large, the welding space is reduced when electric wiring parts (bus bar) are welded to the outer surface 52a of the bottom 52 of the battery housing 51 excluding the electrode terminal 50.

When the ratio R1/R2 is adjusted between 10% and 60%, it is possible to appropriately secure a welding space for the electrode terminal 50 and the outer surface of the bottom 52 of the battery housing 51.

In addition, the radius (R3) from the center of the body portion 50a of the electrode terminal 50 to the edge of the flat portion 50d may be 4% to 30% based on the radius (R2) of the bottom 52 of the battery housing 51.

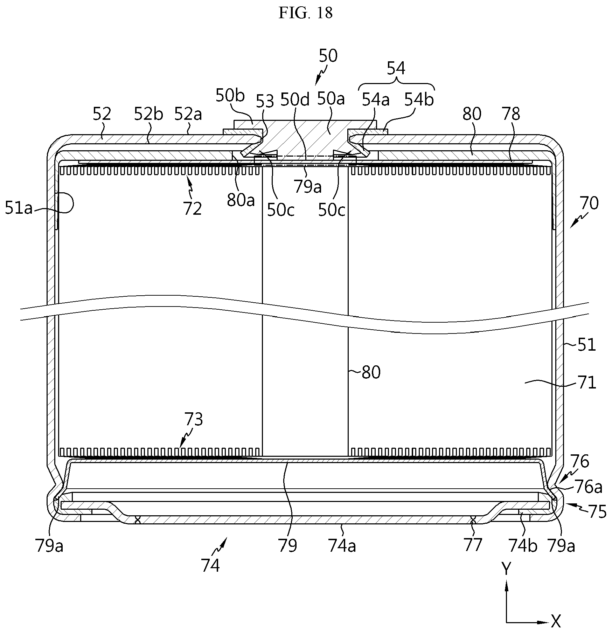

If R3 is small, the welding space becomes insufficient when the current collecting plate 79 (FIG. 18) is welded to the flat portion 50d of the electrode terminal 50, and the welding area of the electrode terminal 50 decreases, so that the contact resistance may increase. In addition, R3 should be smaller than R1, and if R3 is large, the thickness of the inner flange portion 50c becomes thin, so that the force of the inner flange portion 50c compressing the insulating gasket 54 is reduced, thereby deteriorating the sealing ability of the insulating gasket 54.

If R3/R2 is adjusted between 4% and 30%, the welding process may be easily performed by securing a sufficient welding area between the flat portion 50d of the electrode terminal 50 and the current collecting plate 79 (FIG. 18), and it is possible to reduce contact resistance of the welding area and prevent deterioration of the sealing performance of the insulating gasket 54.

According to an embodiment of the present disclosure, the riveting structure of the electrode terminal 50 may be formed using a caulking jig that moves up and down. First, a preform (not shown) of the electrode terminal 50 is inserted into the perforated hole 53 formed in the bottom 52 of the battery housing 51 with the insulating gasket 54 interposed therebetween. The preform refers to an electrode terminal before being riveted.

Next, the caulking jig is inserted into the inner space of the battery housing 51. The caulking jig has a groove and a protrusion corresponding to the final shape of the electrode terminal 50 on the surface facing the preform in order to form the electrode terminal 50 by riveting the preform.

Next, the caulking jig is moved downward to press-form the upper portion of the preform so that the preform is transformed into a riveted electrode terminal 50.

While the preform is pressed by the caulking jig, the outer gasket 54a interposed between the outer flange portion 50b and the outer surface 52a of the bottom 52 of the battery housing 51 is elastically compressed and its thickness is reduced. In addition, a portion of the inner gasket 54b interposed between the inner edge 56 of the perforated hole 53 and the preform is elastically compressed by the inner flange portion 50c, and its thickness is further reduced than other areas. In particular, the area of the inner gasket 54b where the thickness is intensively reduced is a portion indicated by a dotted line circle in FIG. 17. Accordingly, the sealing performance and airtightness between the riveted electrode terminal 50 and the battery housing 51 are remarkably improved.

Preferably, it is preferred that the insulating gasket 54 is compressed sufficiently to secure a desired sealing strength without being physically damaged during the process of riveting the preform.

In one example, when the insulating gasket 54 is made of polybutylene terephthalate, the insulating gasket 54 preferably has a compression rate of 50% or more at a point where it is compressed to a minimum thickness. The compression rate is a ratio of the change in thickness before and after compression to the thickness before compression.

In another example, when the insulating gasket 54 is made of polyfluoroethylene, the insulating gasket 54 preferably has a compression rate of 60% or more at a point where it is compressed to a minimum thickness.

In still another example, when the insulating gasket 54 is made of polypropylene, the insulating gasket 54 preferably has a compression rate of 60% or more at a point where it is compressed to a minimum thickness.

Preferably, the press-forming of the upper portion of the preform may be performed stepwise by moving the caulking jig up and down at least twice. That is, the preform may be deformed several times by press-forming the preform stepwise. At this time, the pressure applied to the caulking jig may be increased stepwise. By distributing the stress applied to the preform several times, it is possible to prevent the insulating gasket 54 from being damaged during the caulking process. In particular, when a portion of the inner gasket 54b interposed between the inner edge 56 of the perforated hole 53 and the preform is intensively compressed by the inner flange portion 50c, damage to the gasket is minimized.

If the caulking jig is separated from the battery housing 51 after the press-forming of the preform using the caulking jig is completed, as shown in FIG. 17, a riveting structure of the electrode terminal 50 according to an embodiment of the present disclosure may be obtained.

According to the above embodiment, the caulking jig press-forms the upper portion of the preform through up and down movement inside the battery housing 51. In some cases, a rotary jig used in the prior art may be used for press-forming the preform.

However, the rotary jig rotates while tilted at a predetermined angle with respect to the central axis of the battery housing 51. Therefore, a rotary jig with a large rotation radius may interfere with the inner wall of the battery housing 51. In addition, when the depth of the battery housing 51 is large, the length of the rotary jig becomes that much longer. In this case, the press-forming of the preform may not be performed properly as the rotation radius of the end of the rotary jig increases. Therefore, press-forming using a caulking jig is more effective than that using a rotary jig.

The riveting structure of the electrode terminal 50 according to an embodiment of the present disclosure described above may be applied to a cylindrical battery.

FIG. 18 is a cross-sectional view showing a cylindrical battery 70 according to an embodiment of the present disclosure, taken along the longitudinal direction Y.

Referring to FIG. 18, in the cylindrical battery 70 according to an embodiment includes a jelly-roll type electrode assembly 71 in which first and second sheet-shaped electrodes are wound with a separator interposed therebetween, wherein a uncoated portion 72 of the first electrode is exposed on the upper portion and an uncoated portion 73 of the second electrode is exposed on the lower portion.

In an embodiment, the first electrode may be a positive electrode and the second electrode may be a negative electrode, or vice versa.

The winding method of the electrode assembly 71 is substantially the same as the winding method of the electrode assembly used in manufacturing the tab-less cylindrical battery according to the prior art described with reference to FIG. 2.

In depicting the electrode assembly 71, only the first and second uncoated portions 72 and 73, which are exposed and extended to the outside of the separator, are shown in detail, and the winding structure of the first electrode, the second electrode and the separator is not shown.

The cylindrical battery 70 also includes a cylindrical battery housing 51 that accommodates the electrode assembly 71 and is electrically connected to the second uncoated portion 73 of the second electrode.

Preferably, one side (lower portion) of the battery housing 51 is open. In addition, the bottom 52 of the battery housing 51 has a structure in which the electrode terminal 50 is riveted to the perforated hole 53 through a caulking process.

Specifically, the electrode terminal 50 may include a body portion 50a inserted into the perforated hole 53, an outer flange portion 50b extending along the outer surface 52a from a circumference of one side of the body portion 50a exposed through the outer surface 52a of the bottom 52 of the battery housing 51, an inner flange portion 50c extending toward the inner surface 52b from a circumference of the other side of the body portion 50a exposed through the inner surface 52b of the bottom 52 of the battery housing 51, and a flat portion 50d provided on the inner side of the inner flange portion 50c.

The cylindrical battery 70 may also include an insulating gasket 54 interposed between the electrode terminal 50 and the perforated hole 53.

The cylindrical battery 70 may also include a sealing body 74 for sealing an open end of the battery housing 51 to be insulated from the battery housing 51. Preferably, the sealing body 74 may include a cap plate 74a having no polarity and a sealing gasket 74b interposed between an edge of the cap plate 74a and the open end of the battery housing 51.

The cap plate 74a may be made of a conductive metal material such as aluminum, steel, or nickel. In addition, the sealing gasket 74b may be made of polypropylene, polybutylene terephthalate, polyfluorinated ethylene, and the like having insulation and elasticity. However, the present disclosure is not limited by the materials of the cap plate 74a and the sealing gasket 74b.

The cap plate 74a may include a vent portion 77 that is ruptured when the pressure inside the battery housing 51 exceeds a critical value. The vent portion 77 may be a groove formed through notching. The vent portion 77 may be formed on both surfaces of the cap plate 74a. The vent portion 77 may form a continuous or discontinuous circular pattern, a straight line pattern, or other pattern on the surface of the cap plate 74a.

The battery housing 51 may include a crimping portion 75 that is extended and bent to the inside of the battery housing 51 to surround and fix the edge of the cap plate 74a together with the sealing gasket 74b in order to fix the sealing body 74.

The battery housing 51 may also include a beading portion 76 press-fitted into the battery housing 51 in an area adjacent to the open end. When the sealing body 74 is fixed by the crimping portion 75, the beading portion 76 supports the edge of the sealing body 74, particularly the outer circumferential surface of the sealing gasket 74b.

The cylindrical battery 70 may also include a first current collecting plate 78 welded to the uncoated portion 72 of the first electrode. Preferably, at least a part of the first current collecting plate 78, for example the center portion 79a, may be welded to the flat portion 50d of the electrode terminal 50.

Preferably, when the first current collecting plate 78 is welded, a welding tool may be inserted through the cavity 80 existing in the core of the electrode assembly 71 and reach the welding point of the first current collecting plate 78. In addition, since the electrode terminal 50 supports the welding area of the first current collecting plate 78 when the first current collecting plate 78 is welded to the flat portion 50d of the electrode terminal 50, welding quality may be improved by applying strong pressure to the welding area. In addition, since the flat portion 50d of the electrode terminal 50 has a large area, a wide welding area may also be secured. Accordingly, internal resistance of the cylindrical battery 70 may be lowered by lowering the contact resistance of the welding area. The face-to-face welding structure of the riveted electrode terminal 50 and the first current collecting plate 78 is very useful for rapid charging using high C-rate current. This is because the current density per unit area can be lowered in the cross section in a direction in which the current flows, so the amount of heat generated in the current path may be lowered than before.

When welding the flat portion 50d of the electrode terminal 50 and the first current collecting plate 78, any one of laser welding, ultrasonic welding, spot welding and resistance welding may be used. The area of the flat portion 50d may be adjusted differently depending on the welding method, and is preferably 2 mm or more for welding strength and ease of the welding process.

In one example, when the flat portion 50d and the first current collecting plate 78 are welded with a laser and welded in a continuous or discontinuous line in the form of an arc pattern, the diameter of the flat portion 50d is preferably 4 mm or more. When the diameter of the flat portion 50d satisfies the corresponding condition, welding strength may be secured, and there is no difficulty in performing the welding process by inserting a laser welding tool into the cavity 80 of the electrode assembly 71.

In another example, when the flat portion 50d and the first current collecting plate 78 are ultrasonically welded and welded in a circular pattern, the diameter of the flat portion 50d is preferably 2 mm or more. If the diameter of the flat portion 50d satisfies the corresponding condition, welding strength may be secured, and there is no difficulty in preforming the welding process by inserting an ultrasonic welding tool into the cavity 80 of the electrode assembly 71.

The cylindrical battery 70 may further include a second current collecting plate 79 welded to the second uncoated portion 73 of the second electrode. The second current collecting plate 79 is made of conductive metal materials such as aluminum, steel, and nickel. Preferably, at least a part 79a of an edge of the second current collecting plate 79 not in contact with the second uncoated portion 73 of the second electrode may be interposed between the beading portion 76 and the sealing gasket 74b and fixed by the crimping portion 75. Optionally, at least a part 79a of the edge of the second current collecting plate 79 may be fixed to an inner circumference 76a of the beading portion 76 adjacent to the crimping portion 75 by welding.

The cylindrical battery 70 may further include an insulator 80. The insulator 80 may be interposed between the first current collecting plate 78 and the inner surface 52a of the bottom 52 of the battery housing 51, and between the inner circumference 51a of the sidewall of the battery housing 51 and the electrode assembly 71. Preferably, the insulator 80 may include a welding hole 80a exposing the flat portion 50d of the electrode terminal 50 toward the first current collecting plate 78 and cover the surface of the first current collecting plate 78 and an edge of one side (upper portion) of the electrode assembly 71.

Preferably, the first and second uncoated portions 72, 73 of the first electrode and/or the second electrode may be bent from the outer circumference of the electrode assembly 71 toward the core to form a bent surface on the upper and lower portions of the electrode assembly 71. In addition, the first current collecting plate 78 may be welded to a bent surface formed by bending the uncoated portion 72 of the first electrode, and the second current collecting plate 79 may be welded to a bent surface formed by bending the uncoated portion 73 of the second electrode.

In order to relieve stress generated when the first and second uncoated portions 72, 73 are bent, the first electrode and/or the second electrode may have an improved structure different from that of the conventional electrode (see FIG. 1).

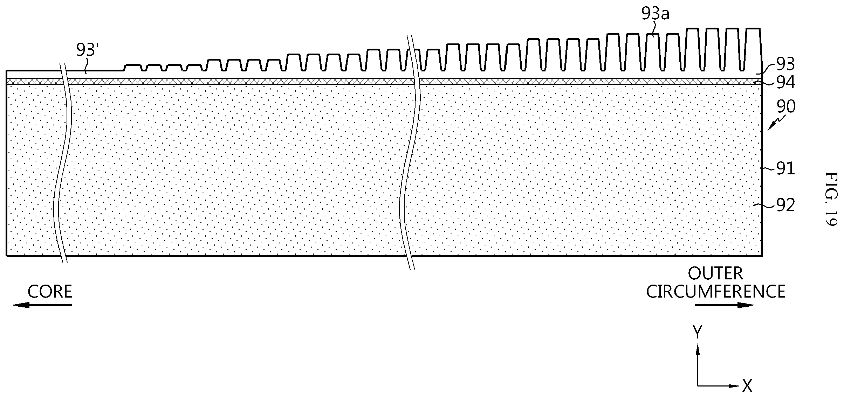

FIG. 19 is a plan view showing a structure of an electrode 90 according to an embodiment of the present disclosure.

Referring to FIG. 19, the electrode 90 includes a sheet-shaped current collector 91 made of a foil of a conductive material, an active material layer 92 formed on at least one surface of the current collector 91, and an uncoated portion 93 formed on a long side end of the current collector 91 and not coated with an active material.

Preferably, the uncoated portion 93 may include a plurality of notched segments 93a. The plurality of segments 93a form a plurality of groups, and segments 93a belonging to each group may have the same height (length in the Y direction) and/or the same width (length in the X direction) and/or the same separation pitch. The number of segments 93a belonging to each group may be increased or decreased than shown. The segment 93a may have a trapezoidal shape, but may be deformed into a quadrilateral, equilateral quadrilateral, semi-circular or semi-elliptical shape.

Preferably, the height of the segments 93a may increase stepwise from the core toward the outer circumference. In addition, the core-side uncoated portion 93' adjacent to the core may not include the segment 93a, and the height of the core-side uncoated portion 93' may be smaller than that of the other region of the uncoated portion.

Optionally, the electrode 90 may include an insulating coating layer 94 covering a boundary between the active material layer 92 and the uncoated portion 93. The insulating coating layer 94 includes an insulating polymer resin and may optionally further include an inorganic filler. The insulating coating layer 94 serves to prevent an end of the active material layer 92 from contacting the active material layer of opposite polarity through a separator and to structurally support the bending of the segment 93a. To this end, when the electrode 90 is wound into an electrode assembly, at least a part of the insulating coating layer 94 is preferably exposed to the outside from the separator.

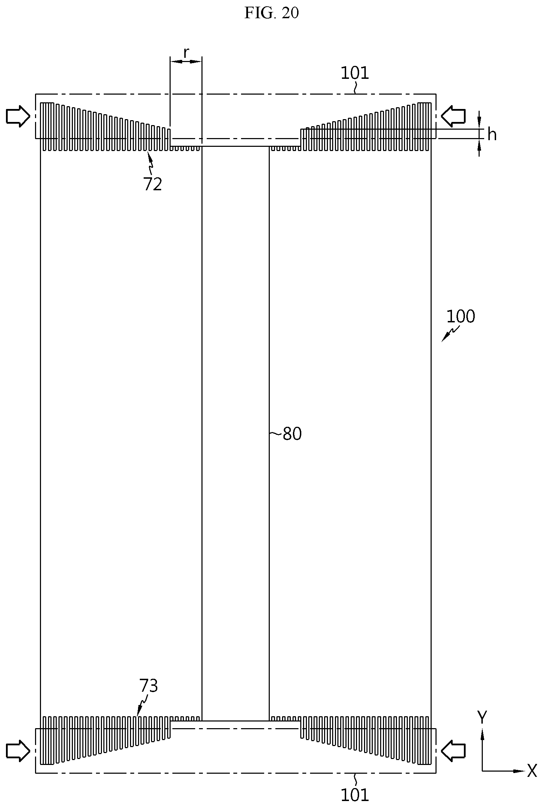

FIG. 20 is a cross-sectional view, taken along the longitudinal direction Y, showing an electrode assembly 100 in which a segment structure of the uncoated portion of the electrode 90 according to an embodiment of the present disclosure is applied to the first electrode and the second electrode.

Referring to FIG. 20, the electrode assembly 100 may be manufactured by the winding method described through FIG. 2. For convenience of description, the protruding structures of the first and second uncoated portions 72, 73 extending to the outside of the separator are shown in detail, and the winding structure of the first electrode, the second electrode and the separator is omitted. The first uncoated portion 72 that protrudes upward extends from the first electrode, and the second uncoated portion 73 that protrudes downward extends from the second electrode.

The pattern in which the heights of the first and second uncoated portions 72, 73 change is schematically shown. That is, the heights of the first and second uncoated portions 72, 73 may vary irregularly according to the position where the section is cut. For example, when a side portion of the trapezoidal segment 93a is cut, the height of the uncoated portion in the cross section becomes lower than that of the segment 93a. Accordingly, it should be understood that the heights of the first and second uncoated portions 72, 73 shown in the cross-sectional view of the electrode assembly 100 correspond to the average of the height of the uncoated portion included in each winding turn.

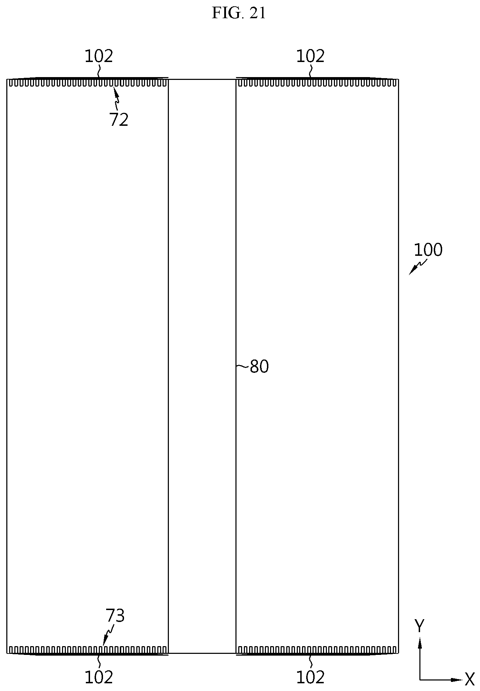

As shown in FIG. 21, the first and second uncoated portions 72, 73 may be bent from the outer circumference of the electrode assembly 100 toward the core. In FIG. 20, the bent portion 101 is indicated by a dotted line box. When the first and second uncoated portions 72, 73 are bent, the segments adjacent to each other in a radial direction overlap each other in several layers to form bent surfaces 102 on the upper and lower portions of the electrode assembly 100. At this time, the core-side uncoated portion 93' (FIG. 19) is not bent due to its low height, and the height (h) of the segment bent at the innermost side is less than or equal to the radial length (r) of the winding area formed by the core-side uncoated portion 93' with no segment structure. Therefore, the cavity 80 in the core of the electrode assembly 100 is not closed by the bent segments. If the cavity 80 is not closed, there is no difficulty in the electrolyte injection process, and the electrolyte injection efficiency is improved. In addition, the electrode terminal 50 and the first current collecting plate 78 may be easily welded by inserting a welding tool through the cavity 80.

In the cylindrical battery 70 according to an embodiment of the present disclosure, the cap plate 74a of the sealing body 74 does not have polarity. Instead, the second current collecting plate 79 is connected to the sidewall of the battery housing 51, so the outer surface 52a of the bottom 52 of the battery housing 51 has polarity opposite to that of the electrode terminal 50. Therefore, when connecting a plurality of batteries in series and/or parallel, wiring such as bus bar connection may be performed on the upper portion of the cylindrical battery 70 using the outer surface 52a of the bottom 52 of the battery housing 51 and the electrode terminal 50. Through this, energy density may be improved by increasing the number of batteries that can be mounted in the same space.

Hereinafter, an embodiment of a positive electrode active material used in the cylindrical battery according to the present disclosure will be described.

In an embodiment, the "primary particle" is a particle in which no grain boundary appears when observed in a field of view of 5000 to 20000 magnification using a scanning electron microscope (SEM) or an electron back scatter diffraction (EBSD). "Average particle diameter of primary particles" means an arithmetic average value calculated after measuring particle diameters of primary particles observed in a SEM or EBSD image.

"Secondary particle" is a particle formed by aggregating a plurality of primary particles. In the present disclosure, a secondary particle in which 10 or less primary particles are aggregated will be referred to as pseudo-single particles in order to distinguish it from a conventional secondary particle formed by aggregating tens to hundreds of primary particles.

In the present disclosure, "specific surface area" is measured by the BET method, and may be specifically calculated from the nitrogen gas adsorption amount under liquid nitrogen temperature (77K) using BELSORP-mino II of BEL Japan.

In the present disclosure, "Dₘᵢₙ", "D₅₀" and "Dₘₐₓ" are particle size values of the cumulative volume distribution of the positive electrode active material measured using a laser diffraction method. Specifically, Dₘᵢₙ is a minimum particle size appearing in the cumulative volume distribution, D₅₀ is a particle size when the volume cumulative amount is 50%, and Dₘₐₓ is a maximum particle size appearing in the cumulative volume distribution. If the positive electrode active material is a single particle, D₅₀ means an average particle diameter of the primary particles. In addition, when the positive electrode active material is a pseudo-single particle, D₅₀ means an average particle diameter of particles formed by aggregating primary particles.

The particle size value of the cumulative volume distribution is measured by dispersing the positive electrode active material in a dispersion medium, then introducing the same into a commercially available laser diffraction particle size measuring device (e.g., Microtrac MT 3000), irradiating ultrasonic waves of about 28 kHz with output of 60W thereto, and obtaining a volume cumulative particle size distribution graph.

In the present disclosure, "consist essentially of A" indicates that the A component and any unmentioned components that do not substantially affect the basic and novel characteristics of the present disclosure are included. The basic and novel characteristics of the present disclosure include at least one of minimizing particle breakage during battery manufacturing, minimizing gas generated by such particle breakage, and minimizing the occurrence of internal cracks. A person skilled in the art may recognize the material influence of these characteristics.

As a result of repeated research to develop a positive electrode for an electrochemical device with high safety while realizing high capacity and an electrochemical device including the same, inventors of the present discloser have confirmed that the safety of a large cylindrical battery can be dramatically improved when the positive electrode active material in the form of a single particle composed of one primary particle or a pseudo-single particle, which is an aggregate of 10 or less primary particles, is used alone as a positive electrode active material.

According to one aspect, the positive electrode includes a positive electrode current collector; and a positive electrode active material layer formed on at least one side surface of the positive electrode current collector, wherein the positive electrode active material layer may include a positive electrode active material, and optionally, a conductive material and/or a binder.

The positive electrode may have a structure in which a positive electrode active material layer is formed on at least one surface or both surfaces of a long sheet-shaped positive electrode current collector, and the positive electrode active material layer may include a positive electrode active material and a binder.

Specifically, the positive electrode may be manufactured by applying a positive electrode slurry, which is prepared by dispersing a positive electrode active material, a conductive material and a binder in a solvent such as dimethyl sulfoxide (DMSO), isopropyl alcohol, N-methyl pyrrolidone (NMP), acetone, water or the like, on one surface or both surfaces of a long sheet-shaped positive electrode current collector, removing the solvent of the positive electrode slurry through a drying process, and then roll-pressing the same. Meanwhile, when the positive electrode slurry is applied, a positive electrode including an uncoated portion (non-coated portion) may be manufactured by not applying the positive electrode slurry to a partial area of the positive electrode current collector, for example, one end of the positive electrode current collector.

In another aspect, the positive electrode active material includes single particle-based active material particles. In one embodiment, the single particle-based active material particles may be 90wt% or more, 95wt% or more, 98wt% or more, or 99wt% or more, based on 100wt% of the positive electrode active material. In one specific embodiment, the positive electrode active material may be composed of only the single particle-based active material particles.

In this specification, the single particle-based active material particle refers to a single particle, a pseudo-single particle, or both of them. The single particle is a particle composed of one primary particle, and the pseudo-single particle is an aggregate of 10 or less primary particles.

Conventionally, it has been common to use a spherical secondary particle in which tens to hundreds of primary particles are aggregated as a positive electrode active material of a lithium battery. However, in the case of a positive electrode active material in the form of secondary particles in which many primary particles are aggregated, particle breakage in which primary particles fall off is easy to occur in the rolling process when manufacturing a positive electrode, and cracks occur inside the particles during the charging and discharging process. When particles of the positive electrode active material are broken or cracks occur inside the particles, the contact area with the electrolyte increases, so there is a problem in that gas generation due to a side reaction with the electrolyte increases. If the gas generation inside the cylindrical battery increases, the pressure inside the battery increases and there is a risk of battery explosion. In particular, when the volume of the cylindrical battery is increased, the amount of active material inside the battery increases as the volume increases, and as a result, the amount of gas generated increases significantly, so the risk of ignition and/or explosion of the battery increases further.

In contrast, the single particle-based active material particles in the form of a single particle composed of one primary particle or a pseudo-single particle in which 10 or less primary particles are aggregated have a higher particle strength than the positive electrode active material in the existing secondary particle form in which tens to hundreds of primary particles are aggregated, so particle breakage rarely occurs during the rolling process. In addition, since the number of primary particles constituting the single-particle-based active material particle is small, the volume expansion and contraction of the primary particles during charging and discharging is small, and thus the occurrence of cracks inside the particle is significantly reduced.

Therefore, when using the single particle-based active material particles as in the present disclosure, the amount of gas generated due to particle breakage and internal cracks may be significantly reduced. Accordingly, when the single particle-based active material particles are applied to a large cylindrical battery, excellent safety may be realized.

Meanwhile, the single particle and/or pseudo-single particle is included in an amount of 95wt% to 100wt%, preferably 98wt% to 100wt%, more preferably 99wt% to 100wt%, further preferably 100wt%, based on the entire weight of the positive electrode active material included in the positive electrode.

When the content of single particle and/or pseudo-single particle satisfies the above range, sufficient safety may be obtained when applied to a large-sized battery. When the positive electrode active material in the form of a secondary particle is included in an amount exceeding 5 wt% in the entire positive electrode active material, the side reaction with the electrolyte increases due to fine powder generated from the secondary particle during electrode manufacturing and charging/discharging, which may deteriorate suppression of gas generation and lower the stability improvement effect when applied to a large-sized battery.

Meanwhile, positive electrode active materials including single particles and/or pseudo-single particles according to the present disclosure may have Dₘᵢₙ of 1.0 µm or more, 1.1 µm or more, 1.15 µm or more, 1.2 µm or more, or 1.25 µm or more, 1.3 µm or more, or 1.5 µm or more. When the Dₘᵢₙ of the positive electrode active material is less than 1.0 µm, the linear pressure increases during the positive electrode rolling process, which may easily cause particle breakage and deteriorate thermal stability, making it impossible to secure sufficient thermal stability when applied to a large-sized cylindrical battery.

Meanwhile, considering resistance and power characteristics, Dₘᵢₙ of the positive electrode active material may be 3 µm or less, 2.5 µm or less, or 2 µm or less. If Dₘᵢₙ is too large, the lithium ion diffusion distance within the particles may increase, and thus the resistance and power characteristics may deteriorate.

For example, Dₘᵢₙ of the positive electrode active material may be 1.0 µm to 3 µm, 1.0 µm to 2.5 µm, or 1.3 µm to 2.0 µm.

Meanwhile, the positive electrode active material may have a D₅₀ of 5 µm or less, 4 µm or less, or 3 µm or less, and may be, for example, 0.5 µm to 5 µm, preferably 1 µm to 5 µm, more preferably 2 µm to 5 µm.

The positive electrode active material in the form of single particles and/or pseudo-single particles has less lithium mobility than the positive electrode active material in the form of secondary particles because there are fewer interfaces between primary particles that serve as a diffusion path for lithium ions inside the particles, and accordingly there is a problem that the resistance increases. The increase in resistance intensifies as the size of the particles increases, and when the resistance increases, capacity and power characteristics are adversely affected. Therefore, by adjusting D₅₀ of the positive electrode active material to 5 µm or less, it is possible to suppress an increase in resistance by minimizing the lithium ion diffusion distance inside the positive electrode active material particle.

In addition, the positive electrode active material may have Dₘₐₓ of 12 µm to 17 µm, preferably 12 µm to 16 µm, and more preferably 12 µm to 15 µm. When Dₘₐₓ of the positive electrode active material satisfies the above range, resistance characteristics and capacity characteristics are more excellent. If Dₘₐₓ of the positive electrode active material is too large, aggregation has occurred between single particles, and the lithium movement path inside the agglomerated particles is lengthened, resulting in poor lithium mobility, which may increase resistance. Meanwhile, if Dₘₐₓ of the positive electrode active material is too small by excessive crushing process, Dₘᵢₙ may decrease to less than 1 µm, which causes particle breakage during rolling and deteriorates thermal stability.

Meanwhile, the positive electrode active material may have a particle size distribution (PSD) represented by Formula 1 below of 3 or less, preferably 2 to 3, more preferably 2.3 to 3. Formula 1 : $particle size distribution \left(PSD\right) = \left({D}_{max}-{D}_{min}\right) / {D}_{50}$

When the positive electrode active material has the above particle size distribution, the electrode density of the positive electrode may be properly maintained, and particle breakage and resistance increase may be effectively suppressed.

Meanwhile, the positive electrode active material may have an average particle diameter of the primary particles of 5 µm or less, 4 µm or less, 3 µm or less, or 2 µm or less, and may be, for example, 0.5 µm to 5 µm, preferably 1 µm to 5 µm, more preferably 2 µm to 5 µm. When the average particle diameter of the primary particles satisfies the above range, the positive electrode active material in the form of a single particle and/or pseudo-single particle having excellent electrochemical properties may be formed. If the average particle diameter of the primary particles is too small, the number of aggregations of the primary particles forming the positive electrode active material increases, reducing the effect of suppressing particle breakage during rolling. If the average particle diameter of the primary particles is too large, the lithium diffusion path may be elongated, increasing resistance and deteriorating power characteristics.

In the present disclosure, the positive electrode active material preferably has a unimodal particle size distribution. Conventionally, in order to improve the electrode density of the positive electrode active material layer, bimodal positive electrode active materials in which a large particle diameter positive electrode active material with a large average particle diameter and a small particle diameter positive electrode active material with a small average particle diameter are mixed has been used frequently. However, in the positive electrode active material in the form of single particles or pseudo-single particles, when the particle size increases, the lithium movement path lengthens and the resistance increases remarkably. Thus, when large-diameter particles are mixed and used, a problem of deterioration in capacity and power characteristics may occur. Therefore, in the present disclosure, the increase in resistance may be minimized by using a positive electrode active material having a unimodal distribution.

Meanwhile, the positive electrode active material may include lithium nickel-based oxide, and specifically, may include lithium nickel-based oxide containing 80 mol% or more of Ni based on the total number of moles of transition metal. Preferably, the lithium nickel-based oxide may include 80 mol% or more and less than 100 mol% of Ni, 82 mol% or more and less than 100 mol% of Ni, or 83 mol% or more and less than 100 mol% of Ni. When the lithium nickel-based oxide having a high Ni content is used as above, high capacity may be realized.

More specifically, the positive electrode active material may include a lithium nickel-based oxide represented by the following [Chemical Formula 1].

[Chemical Formula 1] LiₐNi_{b}Co_{c}M¹_{d}M²ₑO₂

In Chemical Formula 1, M¹ may be Mn, Al or a combination thereof, and may be preferably Mn or Mn and Al.

M² is at least one selected from the group consisting of Zr, W, Y, Ba, Ca, Ti, Mg, Ta and Nb, preferably at least one selected from the group consisting of Zr, Y, Mg, and Ti, more preferably Zr, Y or a combination thereof. The M² element is not necessarily included, but when included in an appropriate amount, it may play a role of promoting grain growth or improving crystal structure stability during sintering.

The a represents the molar ratio of lithium in the lithium nickel-based oxide, and may be 0.8≤a ≤1.2, 0.85≤a ≤1.15, or 0.9≤a ≤1.2. When the molar ratio of lithium satisfies the above range, a crystal structure of lithium nickel-based oxide may be stably formed.

The b represents the molar ratio of nickel among all metals except lithium in the lithium nickel-based oxide, and may be 0.8≤b<1, 0.82≤b<1, 0.83≤b<1, 0.85≤b<1, 0.88≤b<1 or 0.90≤b<1. When the molar ratio of nickel satisfies the above range, it is possible to realize high capacity by exhibiting high energy density.

The c represents the molar ratio of cobalt among all metals except lithium in the lithium nickel-based oxide, and may be 0<c<0.2, 0<c<0.18, 0.01≤c≤0.17, 0.01≤c≤0.15, 0.01≤c≤0.12 or 0.01≤c≤0.10. When the molar ratio of cobalt satisfies the above range, good resistance characteristics and power characteristics may be implemented.

The d represents the molar ratio of M¹ element among all metals except lithium in the lithium nickel-based oxide, and may be 0<d<0.2, 0<d<0.18, 0.01≤d≤0.17, 0.01≤d≤0.15, 0.01≤d≤0.12, or 0.01≤d≤0.10. When the molar ratio of M¹ element satisfies the above range, the structural stability of the positive electrode active material is excellent.

The e represents the molar ratio of M² element among all metals except for lithium in the lithium nickel-based oxide, and may be 0≤e≤0.1 or 0≤e≤0.05.

Meanwhile, the positive electrode active material according to the present disclosure may further include, if necessary, a coating layer including at least one coating element selected from the group consisting of Al, Ti, W, B, F, P, Mg, Ni, Co, Fe, Cr, V, Cu, Ca, Zn, Zr, Nb. Mo, Sr, Sb, Bi, Si and S on the surface of the lithium nickel-based oxide particle. Preferably, the coating element may be Al, B, Co, or a combination thereof.

When the coating layer is present on the surface of lithium nickel-based oxide particles, contact between the electrolyte and the lithium nickel-based oxide is suppressed by the coating layer, thereby reducing transition metal elution or gas generation due to side reactions with the electrolyte.

The positive electrode active material may be included in an amount of 80 wt% to 99 wt%, preferably 85 wt% to 99 wt%, more preferably 90 wt% to 99 wt%, based on the total weight of the positive electrode active material layer.

Meanwhile, as the positive electrode current collector, various positive electrode current collectors used in the art may be used. For example, stainless steel, aluminum, nickel, titanium, calcined carbon or aluminum, or stainless steel surface-treated with carbon, nickel, titanium, silver, or the like may be used as the positive electrode current collector. The positive electrode current collector may typically have a thickness of 3 µm to 500 µm, and fine irregularities may be formed on the surface of the positive electrode current collector to increase adhesion of the positive electrode active material. The positive electrode current collector may be used in various forms of, for example, film, sheet, foil, net, porous material, foam, or nonwoven fabric.

Meanwhile, in one embodiment of the present disclosure, all or some of the single particle-based active material particles may have a core-shell structure in which the particle surface is coated with a conductive coating layer. The conductive coating layer may cover at least some or all of the particles. The conductive coating layer includes conductive nanomaterials.

The single particle-based active material particle has a problem in that the electrical conductivity is lowered because the resistance is higher than that of the conventional secondary particle type positive electrode active material and the contact area with the conductive material is small. When an excessive amount of conductive material is added to improve electrical conductivity, aggregation occurs in the positive electrode slurry, resulting in increased viscosity, which causes poor coating properties. Therefore, in order to implement smooth coating properties, the viscosity of the positive electrode slurry must be lowered by reducing the solid content. However, if the solid content in the positive electrode slurry decreases, the active material content decreases, which may deteriorate the capacity characteristics. In the present disclosure, in order to solve this problem, the surface of the single particle-based active material is coated with a conductive nanomaterial, so that excellent electrical conductivity may be realized without adding a separate conductive material to the positive electrode slurry.

In one embodiment of the present disclosure, when the single particle-based active material coated with a conductive nanomaterial is applied as the positive electrode active material, the positive electrode active material layer may not include a conductive material on a portion other than the conductive coating layer. Since there is no need to additionally use a conductive material that causes aggregation of the positive electrode slurry as described above, the viscosity of the positive electrode slurry may be reduced, the solid content may be decreased, and the electrode coating process efficiency and electrode adhesion may be improved.

In the present disclosure, the conductive nanomaterial may be a conductive material having a nano size so as to be smoothly coated on particles, and the type is not particularly limited. For example, the conductive nanomaterial may be a carbon nanotube, carbon nanoparticle, or the like.

The conductive nanomaterial may have various shapes, and may be, for example, spherical, flaky, or fibrous.

Meanwhile, the conductive coating layer may be formed by mixing single particle-based active material particles, which are a core part, and a conductive nanomaterial, and then thermally treating the mixture. At this time, the mixing may be performed as solid mixing or liquid mixing.

In one embodiment of the present disclosure, the positive electrode active material layer contains flake graphite. When using the single particle-based active material as the positive electrode active material, if the positive electrode active material layer contains flake graphite, in the case of rolling the positive electrode active material layer, the sliding effect of the flake graphite on the positive electrode active material is provided to improve the rolling characteristics of the electrode, and the porosity of the electrode may be lowered to a desired level. Accordingly, stability, initial resistance characteristics, and charge/discharge efficiency of a battery to which the positive electrode according to the present disclosure is applied may be improved.

In one embodiment of the present disclosure, the flake graphite may be included in an amount of 0.1 wt% to 5 wt%, preferably 0.1 wt% to 3 wt%, based on 100 wt% of the positive electrode active material layer.

When the content of flake graphite satisfies the above range, the positive electrode rolling characteristics are improved and excellent electrode density may be realized. If the content of flake graphite is too small, the effect of improving the rolling properties is insignificant, and if it is too large, it may cause an increase in slurry viscosity and decrease in phase stability, and resistance may increase due to a decrease in electrode uniformity through coupling with a conductive material.

Meanwhile, the flake graphite used in the present disclosure may have an average particle diameter of 1 µm to 20 µm, preferably 2 µm to 10 µm, more preferably 3 µm to 5 µm, but is not limited thereto. If the size of the flake graphite is too small, it is difficult to realize the desired porosity, and the current density may be lowered, resulting in lower capacity. At this time, the average particle diameter of the flake graphite may be measured using a laser diffraction method (ISO 13320).

In addition, the flake graphite may have an aspect ratio of 0.1 to 500, preferably 1 to 100, more preferably 1 to 30. When the aspect ratio of flake graphite satisfies the above range, the effect of lowering electrode resistance by improving conductivity occurs.

In addition, the flake graphite may have a density of 2.0 g/cm³ to 2.5 g/cm³, preferably 2.1 g/cm³ to 2.4 g/cm³, more preferably 2.2 g/cm³ to 2.3 g/cm³.

Meanwhile, in the present disclosure, the porosity of the positive electrode active material layer may be 15% to 23%, preferably 17% to 23%, more preferably 18% to 23%. When the porosity of the positive electrode active material layer satisfies the above range, the electrode density increases to realize excellent capacity and the resistance decreases. If the porosity is too low, the electrolyte impregnability is low, and lithium precipitation may occur due to non-impregnation of the electrolyte. If the porosity is too high, the contact between the electrodes is not good, which increases the resistance and decreases the energy density, so the capacity improvement effect is insignificant.

The porosity value of the positive electrode active material layer may be achieved i) by the positive electrode active material containing single particle-based active material particles and ii) by adding flake graphite to the positive electrode active material.

In implementing a high loading electrode with a relatively high loading amount of the positive electrode active material, when using a positive electrode active material in the form of a single particle or pseudo-single particle as in the present disclosure, particle breakage of the active material during rolling is significantly reduced compared to the conventional positive electrode active material in the form of a secondary particle, and damage to the positive electrode current collector (Al foil) is reduced, so rolling is possible with a relatively high linear pressure. Therefore, the porosity of the positive electrode active material layer may be decreased to the numerical range as described above, so the energy density may be increased.

In addition, if the positive electrode active material layer contains flake graphite as in the present disclosure, the flake graphite may provide a sliding effect during rolling and fill the pores of the positive electrode active material layer, so the porosity of the positive electrode active material layer may be reduced to the above numerical range.

In addition, the positive electrode may have a loading amount of 570 mg/25cm² or more, preferably 600 mg/25cm² to 800 mg/25cm², more preferably 600 mg/25cm² to 750 mg/25cm². Specifically, in the lithium secondary battery according to the present disclosure, the loading amount of the positive electrode may be secured in a relatively high level because the rolling characteristics of the electrode are improved by applying a single particle and/or pseudo-single particle positive electrode active material and flake graphite, and through this, high-capacity characteristics may be implemented.

In one embodiment of the present disclosure, the positive electrode active material layer may further include a conductive material. The conductive material is used to impart conductivity to the electrode, and any material that does not cause chemical change inside the battery and has electronic conductivity may be used without particular limitations. Specific examples may include graphite such as natural graphite or artificial graphite; carbon-based materials such as carbon black, acetylene black, Ketjen black, channel black, furnace black, lamp black, thermal black, carbon fiber, or carbon nanotube; metal powder or metal fiber such as copper, nickel, aluminum, or silver; conductive whiskers such as zinc oxide or potassium titanate; conductive metal oxides such as titanium oxide; and conductive polymers of polyphenylene derivatives and the like, which may be used alone or as a mixture. The conductive material may be typically included in an amount of 1 wt% to 30 wt%, preferably 1 wt% to 20 wt%, more preferably 1 wt% to 10 wt%, based on the total weight of the positive electrode active material layer.

In one specific embodiment of the present disclosure, the conductive material may include carbon nanotube.

In one embodiment of the present disclosure, the positive electrode active material may include a multi-wall carbon nanotube having a large specific surface area and a small wall number as a conductive material. The multi-wall carbon nanotube may be included in an amount of 50 wt% or more, 70 wt% or more, 90 wt% or more, or 99 wt% or more, based on 100 wt% of the conductive material. In a specific embodiment of the present disclosure, the conductive material may include only the multi-walled carbon nanotube.

In the present disclosure, the multi-wall carbon nanotube has a BET specific surface area of 300 m²/g to 500 m²/g. The multi-wall carbon nanotube is referred to as 'new CNT' in order to be distinguished from the conventional one.

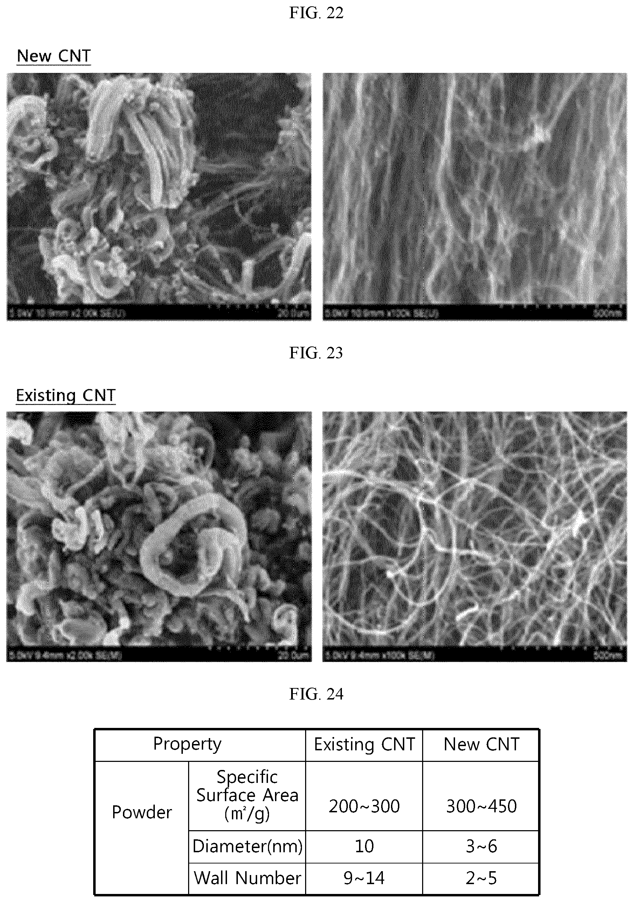

The carbon nanotube (conventional CNT) commonly used in the art had a BET specific surface area of less than 300 m²/g. The SEM images and physical properties (FIG. 24) of the new CNT (FIG. 22) used in the present disclosure and the existing CNT (FIG. 23) may be compared as follows.

As can be seen from the SEM images, the new CNT applied to the present disclosure is a bundled type and has a multi-wall structure, but has a higher BET and a smaller wall number and diameter than the conventional CNT.

In the case of using the positive electrode active material in the form of a secondary particle, sufficient electrical conductivity could be achieved even if the existing CNT was used at a level of 0.4wt% to 0.6wt%. However, the single particle or pseudo-single particle positive electrode active material has higher resistance, compared to the conventional secondary particle type positive electrode active material, and the contact area with the conductive material is small, so the electrical conductivity is low. Thus, in order to realize sufficient electrical conductivity using the existing CNT with a BET specific surface area of less than 300 m²/g, the content of the conductive material must be 0.9 wt% or more.

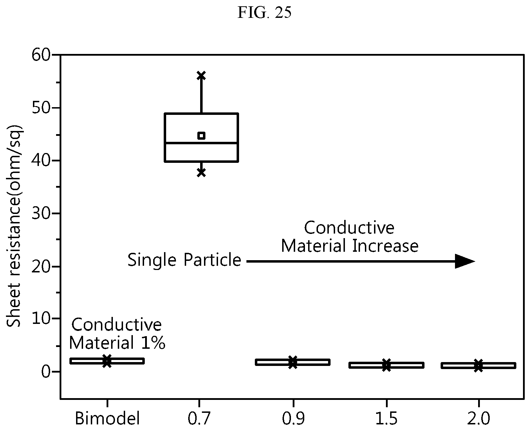

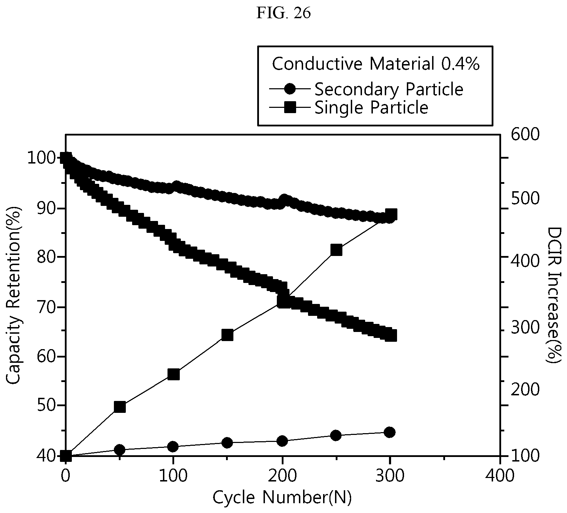

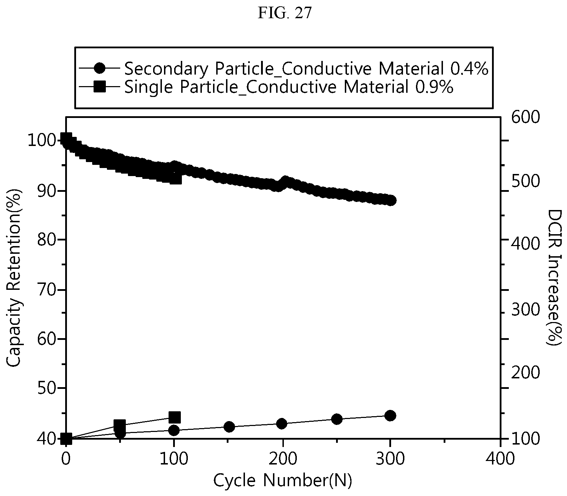

FIGS. 25 to 28 are graphs showing sheet resistance and high-temperature life characteristics for each conductive material ratio when single particles or pseudo-single particles are applied as the positive electrode active material.

Through the graphs, it may be understood that when a single particle or pseudo-single particle is applied as the positive electrode active material, the usage amount of conductive material should increase compared to the case of applying an existing positive electrode active material in the form of a secondary particle.

However, when the content of carbon nanotube is increased to 0.9 wt% or more, aggregation occurs in the positive electrode slurry, resulting in an increase in viscosity, and thus coating properties deteriorate. Therefore, in order to implement smooth coating properties, the viscosity of the positive electrode slurry must be lowered by reducing the solid content in the positive electrode slurry. However, when the solid content in the positive electrode slurry decreases, the content of active material decreases and the capacity characteristics deteriorate.

As a result of repeated research to solve this problem, the inventors of the present disclosure have found that when a carbon nanotube with a BET specific surface area of 300 m²/g to 500 m²/g is applied as a conductive material together with a positive electrode active material, which is a single particle-based active material particle, sufficient electrical conductivity can be secured with only a relatively small amount of carbon nanotube, and accordingly, the slurry viscosity can be maintained low even when the solid content of the positive electrode slurry is formed as high as 70 wt% to 80 wt%.

Specifically, the carbon nanotube used in the present disclosure may be a multi-wall carbon nanotube having a BET specific surface area of 300 m²/g to 500 m²/g, preferably 300 m²/g to 450 m²/g. When the BET specific surface area satisfies the above range, sufficient electrical conductivity may be secured even with a small amount of carbon nanotube.

In addition, the carbon nanotube may be a multi-wall carbon nanotube having a wall number of 2 to 8, preferably 2 to 6, more preferably 3 to 6.

In addition, the carbon nanotube may have a diameter of 1 nm to 8 nm, preferably 3 nm to 8 nm, more preferably 3 nm to 6 nm.

The carbon nanotube may be included in an amount of 0.7 wt% or less, preferably 0.3 wt% to 0.7 wt%, more preferably 0.4 wt% to 0.6 wt%, based on the total weight of the positive electrode active material layer. When the content of the carbon nanotube satisfies the above range, sufficient electrical conductivity may be achieved, and the solid content in the positive electrode slurry may be maintained high, so that the content of the positive electrode active material may be high in the positive electrode active material layer and, as a result, excellent capacity characteristics may be implemented.

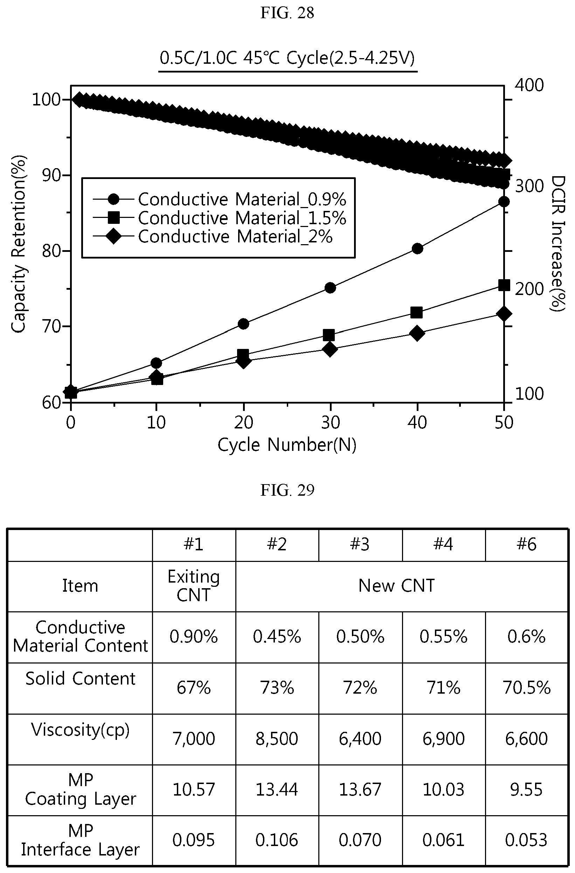

The table shown in FIG. 29 comparatively shows the solid content and viscosity of the positive electrode slurry and the resistance values at the MP coating layer and MP interface layer in the case where a carbon nanotube (new CNT) having a BET specific surface area of 300 m²/g to 500 m²/g is applied and the case where a carbon nanotube (existing CNT) having a BET of 200 m²/g or more and less than 300 m²/g is applied. Through the table, it may be found that when the new CNT is applied, the positive electrode slurry has a lower viscosity and excellent electrical conductivity even when the solid content of the positive electrode slurry is higher than that of the conventional CNT.

The binder serves to improve the attachment among the particles of the positive electrode active material and the adhesion between the positive electrode active material and the positive electrode current collector. Specific examples of the binder include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluoro rubber, or various copolymers thereof, which may be used alone or as a mixture. The binder may be included in an amount of 1 wt% to 30 wt%, preferably 1 wt% to 20 wt%, more preferably 1 wt% to 10 wt%, based on the total weight of the positive electrode active material layer.

Another aspect of the present disclosure relates to an electrode assembly including the positive electrode, and a battery including the electrode assembly. The electrode assembly includes a negative electrode and a positive electrode, and the positive electrode has the above-described characteristics.

In the electrode assembly, for example, a separator may be stacked to be interposed between the negative electrode and the positive electrode to form a stacked or stacked/folded structure, or may be wound to form a jelly-roll structure. In addition, when the jelly-roll structure is formed, a separator may be additionally placed on the outer side in order to prevent the negative electrode and the positive electrode from contacting each other.

The negative electrode includes a negative electrode current collector; and a negative electrode active material layer formed on at least one side surface of the negative electrode current collector. The negative electrode may have a structure in which a negative electrode active material layer is formed on one surface or both surfaces of a long sheet-shaped negative electrode current collector, and the negative electrode active material layer may include a negative electrode active material, a conductive material, and a binder.

Specifically, the negative electrode may be manufactured by coating a negative electrode slurry, which is prepared by dispersing a negative electrode active material, a conductive material and a binder in a solvent such as dimethyl sulfoxide (DMSO), isopropyl alcohol, N-methylpyrrolidone (NMP), acetone, or water, on one surface or both surfaces of a long sheet-shaped negative electrode current collector, removing the solvent of the negative electrode slurry through a drying process, and then roll-pressing. When the negative electrode slurry is coated, a negative electrode having an uncoated portion may be manufactured by not applying the negative electrode slurry to a partial area of the negative electrode current collector, for example, one end of the negative electrode current collector.

As the negative electrode active material, a compound capable of reversible intercalation and de-intercalation of lithium may be used. Specific examples of the negative electrode active material include carbonaceous materials such as artificial graphite, natural graphite, graphitized carbon fiber, or amorphous carbon; silicon-based materials such as Si, Si-Me alloy (where Me is at least one selected from the group consisting of Al, Sn, Mg, Cu, Fe, Pb, Zn, Mn, Cr, Ti, and Ni), SiO_{y} (where 0<y<2), or Si-C composites; lithium metal thin film; metal materials capable of being alloyed with lithium, such as Sn or Al; and the like, which may be used alone or as a mixture.

In the present disclosure, the negative electrode may include a silicon-based negative electrode active material. The silicon-based negative electrode active material may be a Si, Si-Me alloy (where Me is one selected from the group consisting of Al, Sn, Mg, Cu, Fe, Pb, Zn, Mn, Cr, Ti, and Ni), SiO_{y} (here, 0<y<2), Si-C composites, or a combination thereof, and may be preferably SiO_{y} (here, 0<y<2). Since the silicon-based negative electrode active material has a high theoretical capacity, capacity characteristics may be improved when the silicon-based negative electrode active material is included.

The silicon-based negative electrode active material may be doped with M^{b} metal, and in this case, the M^{b} metal may be a Group 1 metal element or a Group 2 metal element, and specifically, may be Li, Mg, or the like. Specifically, the silicon-based negative electrode active material may be Si, SiO_{y} (here, 0<y<2), Si-C composites, or the like, doped with M^{b} metal. In the case of the metal-doped silicon-based negative electrode active material, the active material capacity is somewhat lowered due to the doping element, but high energy density may be realized due to its high efficiency.

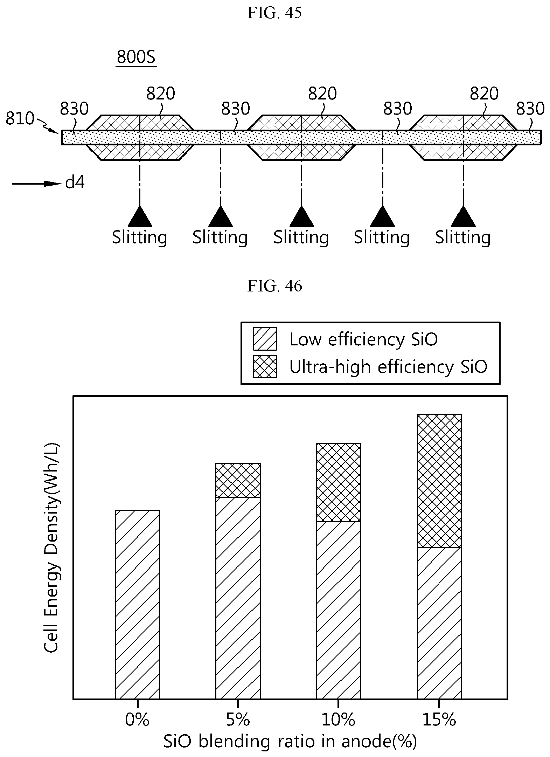

FIG. 46 is a graph showing the change in energy density depending on the content of a silicon-based negative electrode active material and the presence or absence of doping of the silicon-based negative electrode active material, in a battery using a mixture of a silicon-based negative electrode active material and a carbon-based negative electrode active material as a negative electrode active material.

In FIG. 46, low efficiency SiO refers to un-doped SiO, and ultra-high efficiency SiO refers to Mg/Li-doped SiO. Through FIG. 46, it may be found that the energy density improves as the content of the silicon-based negative electrode active material among the total negative electrode active materials increases. In addition, it may be found that as the ratio of the doped silicon-based negative electrode active material among the silicon-based negative electrode active materials increases, the effect of improving the energy density becomes better.

The silicon-based negative electrode active material may further include a carbon coating layer on the particle surface. At this time, the carbon coating amount may be 20 wt% or less, preferably 1 wt% to 20 wt%, based on the total weight of the silicon-based negative electrode active material. The carbon coating layer may be formed through a method such as dry coating, wet coating, chemical vapor deposition (CVD), physical vapor deposition (PVD), or atomic layer deposition (ALD).

In one embodiment of the present disclosure, the silicon-based negative electrode active material may have a capacity of 1000 mAh/g to 4000 mAh/g, and an initial efficiency of about 60% to 95%.

In another embodiment of the present disclosure, D₅₀ of the silicon-based negative electrode active material may be 3 um to 8 um, and Dₘᵢₙ to Dₘₐₓ may be included in the range of 0.5 um to 30 um.

The negative electrode, if necessary, may further include a carbon-based negative electrode active material as a negative electrode active material. The carbon-based negative electrode active material may be, for example, artificial graphite, natural graphite, graphitized carbon fiber, amorphous carbon, soft carbon, hard carbon, or the like, but is not limited thereto.

When using a mixture of the silicon-based negative electrode active material and the carbon-based negative electrode active material as the negative electrode active material, the mixing ratio of the silicon-based negative electrode active material and the carbon-based negative electrode active material may be 1:99 to 20:80, preferably 1:99 to 15:85, more preferably 1:99 to 10:90, in weight ratio.

The negative electrode active material may be included in an amount of 80 wt% to 99 wt%, preferably 85 wt% to 99 wt%, more preferably 90 wt% to 99 wt%, based on the total weight of the negative electrode active material layer.

If necessary, the negative electrode active material may further include at least one selected from lithium metal and metal materials capable of alloying with lithium, such as Sn or Al.

As the negative electrode current collector, negative electrode current collectors generally used in the art may be used, and, for example, copper, stainless steel, aluminum, nickel, titanium, calcined carbon; copper or stainless steel surface-treated with carbon, nickel, titanium, silver, etc.; aluminum-cadmium alloy; and the like may be used. The negative electrode current collector may typically have a thickness of 3 µm to 500 µm, and, like the positive electrode current collector, fine irregularities may be formed on the surface of the current collector to enhance the bonding force of the negative electrode active material. For example, the negative electrode current collector may be used in various forms such as films, sheets, foils, nets, porous materials, foams, or nonwoven fabrics.

The conductive material is used to impart conductivity to the negative electrode, and any material that has electronic conductivity without causing chemical change inside the battery may be used without particular limitations. Specific examples of the conductive material include graphite such as natural graphite or artificial graphite; carbon-based materials such as carbon black, acetylene black, Ketjen black, channel black, furnace black, lamp black, thermal black, carbon fiber, or carbon nanotube; metal powders or metal fibers such as copper, nickel, aluminum, or silver; conductive whiskers such as zinc oxide or potassium titanate; conductive metal oxides such as titanium oxide; and conductive polymers such as polyphenylene derivatives, which may be used alone or as a mixture. The conductive material may be typically included in an amount of 1 wt% to 30 wt%, preferably 1 wt% to 20 wt%, more preferably 1 wt% to 10 wt%, based on the total weight of the negative electrode active material layer.

The binder serves to improve the attachment among the particles of the negative electrode active material and the adhesion between the negative electrode active material and the negative electrode current collector. Specific examples of the binder include polyvinylidene fluoride (PVDF), vinylidene fluoride-hexafluoropropylene copolymer (PVDF-co-HFP), polyvinyl alcohol, polyacrylonitrile, and carboxymethyl cellulose. (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluoro rubber, or various copolymers thereof, and the like, which may be used alone or as a mixture. The binder may be included in an amount of 1 wt% to 30 wt%, preferably 1 wt% to 20 wt%, more preferably 1 wt% to 10 wt%, based on the total weight of the negative electrode active material layer.

The electrode assembly further includes a separator, and the separator is disposed in the electrode assembly in a manner interposed between the negative electrode and the positive electrode. The separator separates the negative electrode from the positive electrode and provides a path for lithium ion movement. Any material used as a separator in a lithium battery may be used without particular limitations.

The separator may use a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure of two or more layers thereof used. In addition, conventional porous non-woven fabrics, for example, non-woven fabrics made of high melting point glass fibers, polyethylene terephthalate fibers, or the like may be used. In addition, a coated separator containing a ceramic component or a polymer material may be used to secure heat resistance or mechanical strength.

Another aspect of the present disclosure relates to a battery including the electrode assembly. The battery includes a battery case in which the electrode assembly and an electrolyte are accommodated together. As for the battery case, any case commonly used in the art such as a pouch type or a metal can type may be selected without particular limitation.

As the electrolyte used in the present disclosure, various electrolytes usable in lithium batteries, such as organic liquid electrolyte, inorganic liquid electrolyte, solid polymer electrolyte, gel polymer electrolyte, inorganic solid electrolyte, or molten inorganic electrolyte, may be used, and the type is not particularly limited.

Specifically, the electrolyte may include an organic solvent and a lithium salt.

The organic solvent may use any material that may serve as a medium through which ions involved in the electrochemical reaction of the battery may move without particular limitation. Specifically, as the organic solvent, ester-based solvents such as methyl acetate, ethyl acetate, γ-butyrolactone, or ε-caprolactone; ether-based solvents such as dibutyl ether or tetrahydrofuran; ketone-based solvents such as cyclohexanone; aromatic hydrocarbon-based solvents such as benzene or fluorobenzene; carbonate-based solvents such as dimethyl carbonate (DMC), diethyl carbonate (DEC), methylethyl carbonate (MEC), ethylmethyl carbonate (EMC), ethylene carbonate (EC) or propylene carbonate (PC); alcohol-based solvents such as ethyl alcohol or isopropyl alcohol; nitriles such as R-CN (R is a C2 to C20 straight-chain, branched or cyclic hydrocarbon group, and may contain a double-bonded aromatic ring or an ether bond); amides such as dimethylformamide; dioxolanes such as 1,3-dioxolane; or sulfolanes may be used. Among them, carbonate-based solvents are preferred, and a mixture of cyclic carbonates (e.g., ethylene carbonate or propylene carbonate) having high ionic conductivity and high permittivity capable of increasing the charge and discharge performance of the battery and low-viscosity linear carbonate-based compound (e.g., ethyl methyl carbonate, dimethyl carbonate or diethyl carbonate) is more preferred.

As the lithium salt, any compound capable of providing lithium ions used in a lithium battery may be used without particular limitation. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂ or the like may be used as the lithium salt. The concentration of the lithium salt is preferably within the range of 0.1M to 5.0M, preferably 0.1M to 3.0M. When the concentration of the lithium salt is within the above range, the electrolyte has appropriate conductivity and viscosity, so it may exhibit excellent electrolyte performance, and lithium ions may move effectively.

In addition to the components of the electrolyte, the electrolyte may additionally include additives for the purpose of improving the lifespan characteristics of the battery, suppressing the decrease in battery capacity, and improving the discharge capacity of the battery. For example, haloalkylene carbonate-based compounds such as difluoroethylene carbonate, pyridine, triethylphosphite, triethanolamine, cyclic ether, ethylene diamine, n-glyme, hexamethyl phosphate triamid, nitrobenzene derivatives, sulfur, quinone imine dyes, N-substituted oxazolidinones, N,N-substituted imidazolidines, ethylene glycol dialkyl ethers, ammonium salts, pyrroles, 2-methoxy ethanol, aluminum trichloride or the like may be used alone or as a mixture as the additives, without being limited thereto. The additive may be included in an amount of 0.1 wt% to 10 wt%, preferably 0.1 wt% to 5 wt%, based on the total weight of the electrolyte.

In another embodiment of the present disclosure, the positive electrode may include a loading reduction portion with a smaller loading amount of the positive electrode active material, compared to an adjacent region. If the positive electrode has such a structure, the region of the positive electrode active material portion may be increased without worrying about precipitation of lithium. Accordingly, the energy density of the electrode assembly may be improved.

Recently, in order to realize high energy density and reduce cost, development is progressing in the direction of increasing the size of the battery. Depending on the size of the battery, as the energy increases, the resistance of battery should decrease. To reduce the resistance, a method of using the current collector of the electrode as an electrode tab rather than a method of attaching an electrode tab to the electrode may be used. At this time, due to the nature of the electrode manufacturing process of applying the electrode slurry on the electrode current collector, a portion in which the loading amount is reduced occurs at the boundary between the negative electrode active material portion coated with the negative electrode slurry and the negative electrode current collector. Considering the N/P ratio, there is a possibility that metallic lithium is precipitated on the positive electrode active material portion facing the portion where the loading amount is reduced. Here, the N/P ratio is a value obtained by dividing the capacity of the negative electrode, which is calculated considering the area and capacity per mass of the negative electrode, by the capacity of the positive electrode, which is obtained considering the area and capacity per mass of the positive electrode, and generally has a value of 1 or more. That is, the capacity of the negative electrode is adjusted large. For reference, if the N/P ratio is less than 1, metallic lithium is likely to be precipitated during charging and discharging, which causes rapid deterioration in safety of the battery during high rate charging and discharging. In other words, the N/P ratio has a significant effect on the safety and capacity of the battery. Due to the risk of metal lithium precipitation as described above, the positive electrode active material portion cannot be located on the portion of the positive electrode facing the portion where the loading amount of the negative electrode is reduced. This causes the energy density of the battery not to increase. Accordingly, in the present disclosure, the energy density is improved by increasing the region of the positive electrode active material portion.

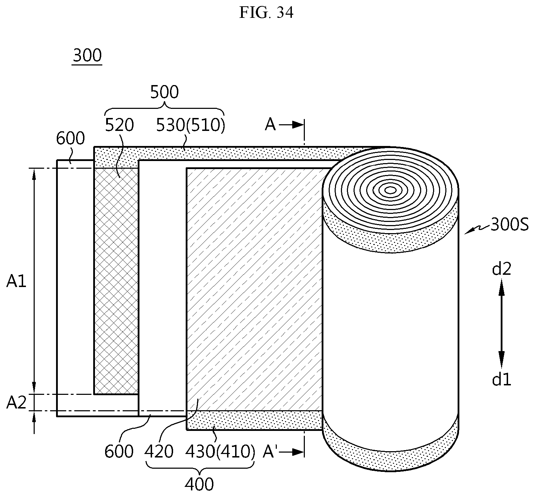

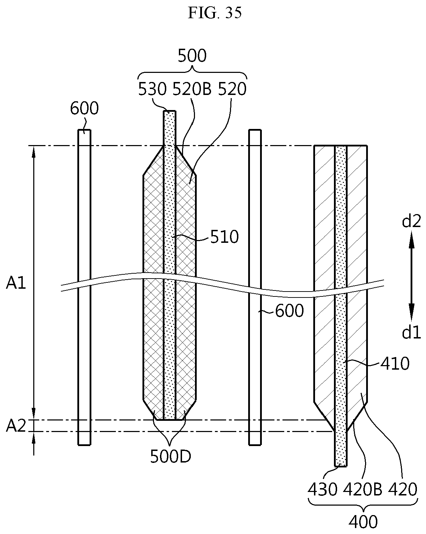

FIG. 34 is a diagram showing an electrode assembly according to an embodiment of the present disclosure, and FIG. 35 is a cross-sectional view, taken along the cutting line A-A' in FIG. 34.

Referring to FIGS. 34 and 35, an electrode assembly 300 according to an embodiment of the present disclosure includes a negative electrode 400, a positive electrode 500, and a separator 600. The separator 600 is located between the negative electrode 400 and the positive electrode 500. The negative electrode 400, the positive electrode 500, and the separator 600 are wound together to form a jelly-roll structure 300S. Here, the jelly-roll structure 300S refers to a structure formed by winding the negative electrode 400, the positive electrode 500, and the separator 600. In addition, when the jelly-roll structure 300S is formed, it is preferable that a separator 600 is additionally disposed on the outer side in order to prevent the negative electrode 400 and the positive electrode 500 from contacting each other.

The negative electrode 400 includes a negative electrode current collector 410 and a negative electrode active material portion 420 formed by coating a negative electrode active material on the negative electrode current collector 410. In particular, as shown in the drawings, the negative electrode active material may be coated on both surfaces of the negative electrode current collector 410 to form the negative electrode active material portion 420. In addition, in the negative electrode current collector 410, a negative electrode uncoated portion 430 to which the negative electrode active material is not applied extends in the first direction d1. The negative electrode uncoated portion 430 extends along one end of the wound negative electrode 400. In addition, the negative electrode uncoated portion 430 extends beyond the separator 600 in the first direction d1. Accordingly, the negative electrode uncoated portion 430 may be exposed at one end in the first direction of the jelly-roll structure 300S.

The positive electrode 500 includes a positive electrode current collector 510 and a positive electrode active material portion 520 formed by coating a positive electrode active material on the positive electrode current collector 510. In particular, as shown in the drawings, the positive electrode active material may be coated on both surfaces of the positive electrode current collector 510 to form the positive electrode active material portion 520. Also, in the positive electrode current collector 510, a positive electrode uncoated portion 530 to which the positive electrode active material is not applied extends in the second direction d2. The positive electrode uncoated portion 530 extends along one end of the wound positive electrode 500. In addition, the positive electrode uncoated portion 530 extends beyond the separator 600 in the second direction d2. Accordingly, the positive electrode uncoated portion 530 may be exposed at one end in the second direction of the jelly-roll structure 300S.

Here, first direction d1 and second direction d2 are directions opposite to each other. Also, the first direction d1 and the second direction d2 may be directions parallel to the height direction of the jelly-roll structure 300S.

The electrode assembly 300 according to this embodiment has a structure in which a separate electrode tab is not attached, but the negative electrode uncoated portion 430 of the negative electrode current collector 410 and the positive electrode uncoated portion 530 of the positive electrode current collector 510 themselves are used as electrode tabs in order to reduce resistance.

Although not shown in the drawings, the negative electrode uncoated portion 430 and/or the positive electrode uncoated portion 530 may have substantially the same structure of the uncoated portion of the electrode described with reference to FIGS. 14 to 20.

In one embodiment, the positive electrode active material portion 520 includes a loading reduction portion 500D having a smaller loading amount of positive electrode active material than an adjacent area, and the loading reduction portion 500D is located at one end in the first direction d1 of the positive electrode 500. Also, more specifically, in the loading reduction portion 500D, the loading amount of the positive electrode active material may gradually decrease in the first direction d1.

Here, the loading amount means the amount of active material applied per unit area. In a portion having a large loading amount, a lot of negative electrode active material or positive electrode active material is applied to the unit area, so the negative electrode active material portion or the positive electrode active material portion may have a relatively greater thickness. In a portion having a small loading amount, a small amount of negative electrode active material or positive electrode active material is applied to the unit area, so the negative electrode active material portion or the positive electrode active material portion may have a relatively smaller thickness.

The active material portion may be formed by applying a slurry containing an active material. In this process, a boundary portion having a gradually decreasing loading amount may be formed between the uncoated portion and the active material portion.

Specifically, the negative electrode active material portion 420 may include a negative electrode boundary portion 420B forming a boundary between the negative electrode active material portion 420 and the negative electrode uncoated portion 430. The loading amount of the negative electrode boundary portion 420B may decrease in a direction toward the negative electrode uncoated portion 430.

Similarly, the positive electrode active material portion 520 may include a positive electrode boundary portion 520B forming a boundary between the positive electrode active material portion 520 and the positive electrode uncoated portion 530. The loading amount of the positive electrode boundary portion 520B may decrease in a direction toward the positive electrode uncoated portion 530.

The negative electrode boundary portion 420B or the positive electrode boundary portion 520B in which the loading amount gradually decreases as above is naturally generated in the process of applying the slurry containing the active material to the negative electrode current collector 410 or the positive electrode current collector 510.

In this case, in a region corresponding to the positive electrode boundary portion 520B, based on a direction perpendicular to the second direction d2, the amount of the positive electrode active material may be smaller than the amount of the negative electrode active material. Since the N/P ratio has a value greater than 1, the problem of precipitation of metallic lithium does not occur.

However, there is a problem in a region corresponding to the negative electrode boundary portion 420B. In the region corresponding to the negative electrode boundary portion 420B, based on a direction perpendicular to the first direction d1, the amount of the negative electrode active material may be smaller than the amount of the positive electrode active material. This may cause a problem of precipitation of metallic lithium because the N/P ratio has a value smaller than 1.

Accordingly, in this embodiment, the loading reduction portion 500D is provided on the positive electrode 500, and the negative electrode active material portion 420 may be located in a portion corresponding to the loading reduction portion 500D based on a direction perpendicular to the first direction d1. More specifically, the negative electrode boundary portion 420B may be located at a portion corresponding to the loading reduction portion 500D based on a direction perpendicular to the first direction d1.

The loading reduction portion 500D having a smaller loading amount of positive electrode active material than adjacent areas is provided at a position corresponding to the negative electrode boundary portion 420B having a gradually decreasing loading amount, so that the region where the positive electrode active material is applied may be increased without worrying about lithium precipitation. In particular, the loading amount of the positive electrode active material may gradually decrease in the loading reduction portion 500D along the first direction d1, corresponding to the shape of the negative electrode boundary portion 420B in which the loading amount gradually decreases in a direction toward the negative electrode uncoated portion 430. Therefore, it is possible to maintain a high N/P ratio of the negative electrode 400 and the positive electrode 500 in the region where the negative electrode boundary portion 420B is formed, thereby preventing lithium precipitation.

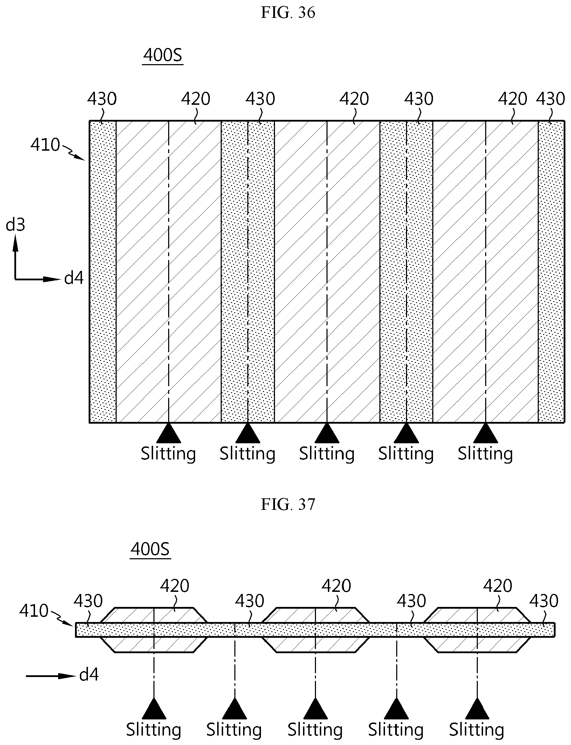

Hereinafter, a method for manufacturing an electrode assembly according to an embodiment of the present disclosure will be described in detail with reference to FIGS. 36 to 41.

FIGS. 36 and 37 are diagrams illustrating a process of manufacturing a negative electrode according to an embodiment of the present disclosure. Specifically, FIG. 36 is a plan view showing the negative electrode sheet from above, and FIG. 37 is a front view showing the negative electrode sheet of FIG. 36 from the front.

Referring to FIGS. 36 and 37, in the method for manufacturing an electrode assembly according to an embodiment of the present disclosure includes a step of manufacturing a negative electrode sheet 400S so that a negative electrode active material portion 420 coated with a negative electrode active material and a negative electrode uncoated portion 430 not coated with a negative electrode active material are alternately located on a negative electrode current collector 410.

Specifically, the negative electrode active material portion 420 may be formed by applying the negative electrode active material to extend along the third direction d3. In addition, a plurality of negative electrode active material portions 420 may be located to be spaced apart along the fourth direction d4 by spacing the coated portions along the fourth direction d4 perpendicular to the third direction d3. That is, the coating process may be performed so that the negative electrode uncoated portion 430 is positioned between the plurality of negative electrode active material portions 420.

Here, the third direction d3 and the fourth direction d4 are directions for explanation based on the negative electrode sheet 400S, and are directions unrelated to the first direction d1 and the second direction d2 in the jelly-roll structure 300S described above.

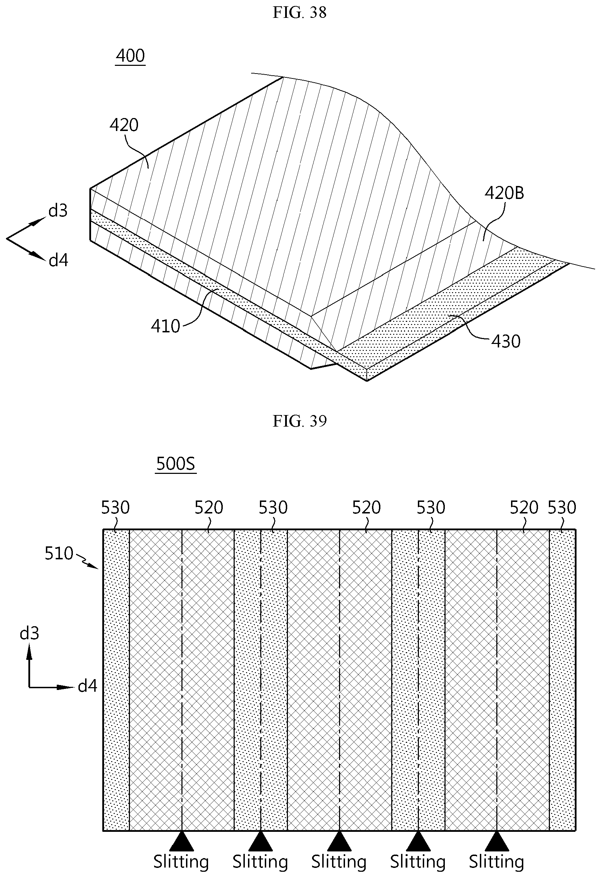

After that, a step of manufacturing a negative electrode 400 by slitting the negative electrode uncoated portion 430 and the negative electrode active material portion 420 may be followed. FIG. 38 is a perspective view showing a negative electrode according to an embodiment of the present disclosure.

Referring to FIGS. 36 to 38, slitting may be performed in a direction parallel to the third direction d3 for the negative electrode uncoated portion 430 and the negative electrode active material portion 420, respectively, as indicated by dotted lines in FIGS. 36 and 37. Accordingly, several negative electrodes 400 as shown in FIG. 38 may be manufactured from the negative electrode sheet 400S. That is, the negative electrode 400 of FIG. 38 corresponds to one of several negative electrodes manufactured by slitting the negative electrode sheet 400S of FIGS. 36 and 37. By slitting the negative electrode uncoated portion 430 and the negative electrode active material portion 420 of the negative electrode sheet 400S, respectively, the negative electrode 400 in which the negative electrode uncoated portion 430 extends at one side may be manufactured.

When forming the negative electrode active material portion 420, a slurry containing the negative electrode active material may be applied on the negative electrode current collector 410. In the process of applying the slurry, a negative electrode boundary portion 420B having a loading amount decreasing in a direction toward the negative electrode uncoated portion 430 may be formed at the boundary between the negative electrode active material portion 420 and the negative electrode uncoated portion 430.

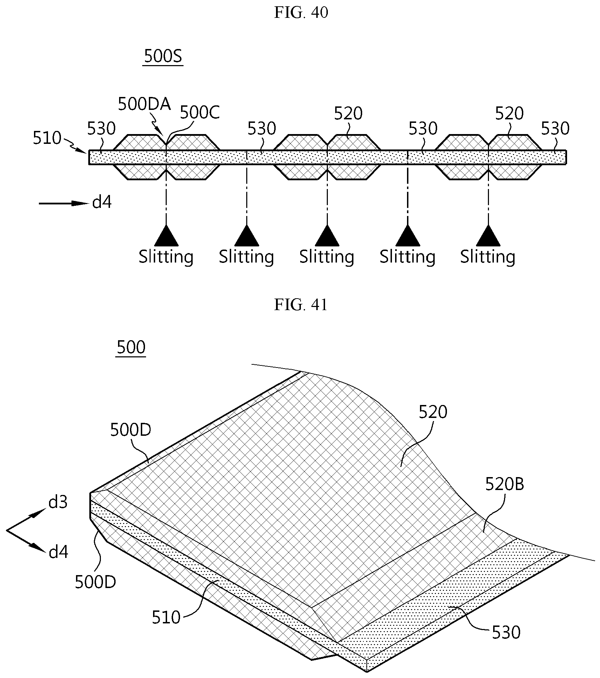

FIGS. 39 and 40 are diagrams showing a process of manufacturing a positive electrode according to an embodiment of the present disclosure. Specifically, FIG. 39 is a plan view showing the positive electrode sheet from above, and FIG. 40 is a front view showing the positive electrode sheet of FIG. 39 from the front.

Referring to FIGS. 39 and 40, the method for manufacturing an electrode assembly according to an embodiment of the present disclosure includes a step of manufacturing a positive electrode sheet 500S so that a positive electrode active material portion 520 coated with a positive electrode active material and a positive electrode uncoated portion 530 not coated with a positive electrode active material are alternately located on the positive electrode current collector 510.

Specifically, the positive electrode active material portion 520 may be formed by applying the positive electrode active material to extend along the third direction d3. In addition, a plurality of positive electrode active material portions 520 may be located to be spaced apart by adjusting the coating interval along the fourth direction d4 perpendicular to the third direction d3. That is, the coating process may be performed so that the positive electrode uncoated portion 530 is located between the plurality of positive electrode active material portions 520.

Here, third direction d3 and fourth direction d4 are directions for description based on the positive electrode sheet 500S, and are directions unrelated to the first direction d1 and the second direction d2 in the jelly-roll structure 300S described above.

After that, a step of manufacturing a positive electrode 500 by slitting the positive electrode uncoated portion 530 and the positive electrode active material portion 520 may be followed. FIG. 41 is a perspective view showing a positive electrode 500 according to an embodiment of the present disclosure.

Referring to FIGS. 39 to 41, slitting may be performed in a direction parallel to the third direction d3 for the positive electrode uncoated portion 530 and the positive electrode active material portion 520, respectively, as indicated by dotted lines in FIGS. 39 and 40. Accordingly, several positive electrodes 500 as shown in FIG. 41 may be manufactured from the positive electrode sheet 500S. That is, the positive electrode 500 of FIG. 41 corresponds to one of several positive electrodes manufactured by slitting the positive electrode sheet 500S of FIGS. 39 and 40. By slitting the positive electrode uncoated portion 530 and the positive electrode active material portion 520 of the positive electrode sheet 500S, respectively, the positive electrode 500 in which the positive electrode uncoated portion 530 extends at one side may be manufactured.

When forming the positive electrode active material portion 520, a slurry containing the positive electrode active material may be applied on the positive electrode current collector 510. In the process of applying the slurry, a positive electrode boundary portion 520B having a loading amount decreasing in a direction toward the positive electrode uncoated portion 530 may be formed at the boundary between the positive electrode active material portion 520 and the positive electrode uncoated portion 530.

Referring to FIGS. 34, 38 and 41 together, a step of forming a jelly-roll structure 300S by winding the negative electrode 400 and the positive electrode 500 together with the separator 600 may be followed. At this time, in the jelly-roll structure 300S, the negative electrode uncoated portion 430 may extend beyond the separator 600 in a first direction d1, and the positive electrode uncoated portion 530 may extend beyond the separator 600 in a second direction d2 opposite to the first direction d1.

Referring to FIGS. 39 to 41 again, in the method for manufacturing an electrode assembly according to an embodiment of the present disclosure, the positive electrode sheet 500S includes a loading reduction area 500DA in which the loading amount of the positive electrode active material is smaller than that of the adjacent area. There is no particular limitation in the method of forming the loading reduction area 500DA, and for example, it may be formed by adjusting the degree of coating of the slurry.

In the step of manufacturing the positive electrode 500, the loading reduction area 500DA of the positive electrode active material portion 520 is slit. The slitted loading reduction area 500DA forms a loading reduction portion 500D having a smaller loading amount of the positive electrode active material than the adjacent area in the jelly-roll structure 300S shown in FIGS. 34 and 35.

Specifically, a loading reduction area 500DA having a smaller loading amount of the positive electrode active material than the adjacent area is formed in the positive electrode active material portion 520 formed on the positive electrode sheet 500S. As shown in FIG. 40, the loading reduction area 500DA may be formed in the center of the positive electrode active material portion 520. Meanwhile, the loading reduction area 500DA may be configured such that the loading amount of the positive electrode active material gradually decreases toward the center portion 500C of the loading reduction area 500DA, and in the step of manufacturing the positive electrode 500, the loading reduction portion 500D according to this embodiment may be provided by slitting the center portion 500C of the loading reduction area 500DA.

That is, in applying the slurry containing a positive electrode active material, by forming the loading reduction area 500DA and slitting the center portion 500C of the loading reduction area 500DA, several positive electrodes 500 having the loading reduction portion 500D may be manufactured.

Referring to FIG. 41, the loading reduction portion 500D may be provided at one end of the manufactured positive electrode 500, and the positive electrode uncoated portion 530 may be provided at the other end of the positive electrode 500 opposite to the one end.

Referring to FIGS. 34 and 35, when the positive electrode 500 is wound to form a jelly-roll structure 300S, the loading reduction portion 500D may be located at one end in the first direction d1 of the positive electrode 500, and the positive electrode uncoated portion 530 may be located at one end in the second direction d2of the positive electrode 500.

In addition, as the center portion 500C of the loading reduction area 500DA is slitted, the loading amount of the positive electrode active material in the loading reduction portion 500D may gradually decrease along the first direction d1.

In addition, in the jelly-roll structure 300S, the negative electrode active material portion 420 may be located at a portion corresponding to the loading reduction portion 500D based on a direction perpendicular to the first direction d1. More specifically, in the jelly-roll structure 300S, the negative electrode boundary portion 420B may be located at a portion corresponding to the loading reduction portion 500D based on a direction perpendicular to the first direction d1.

The corresponding positional relationship between the loading reduction portion 500D and the negative electrode boundary portion 420B has already been described above and thus will not be described again.

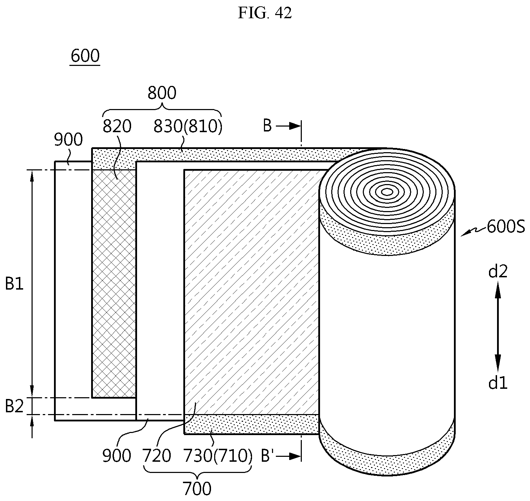

Hereinafter, with reference to FIGS. 42 to 45, an electrode assembly according to a comparative example will be described, and advantages of the electrode assembly according to this embodiment compared to the electrode assembly according to the comparative example will be described.

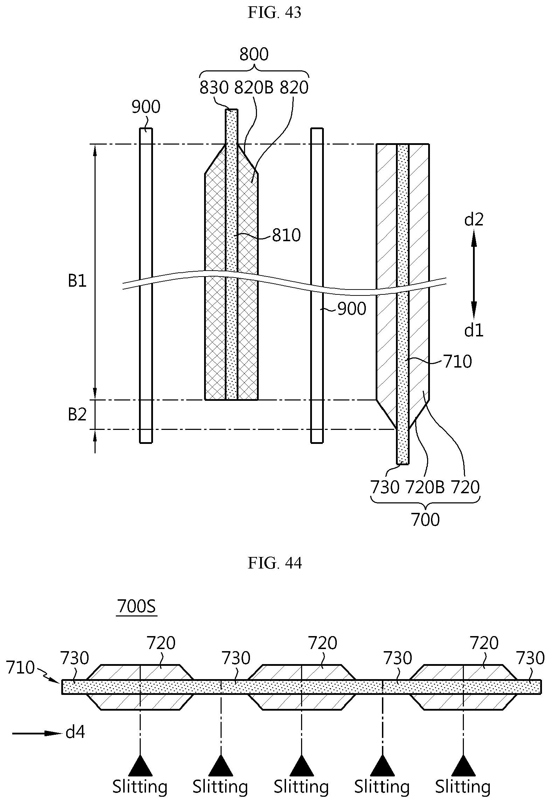

FIG. 42 is a diagram showing an electrode assembly according to a comparative example. FIG. 43 is a cross-sectional view, taken along the cutting line B-B' in FIG. 42.

Referring to FIGS. 42 and 43, the electrode assembly 600 according to the comparative example includes a negative electrode 700, a positive electrode 800 and a separator 900, and the negative electrode 700, the positive electrode 800 and the separator 900 are wound to form a jelly-roll structure 600S.

The negative electrode 700 may include a negative electrode current collector 710, a negative electrode active material portion 720, and a negative electrode uncoated portion 730. In addition, the negative electrode uncoated portion 730 may extend in the first direction d1, and the negative electrode active material portion 720 may include a negative electrode boundary portion 720B that forms a boundary between the negative electrode active material portion 720 and the negative electrode uncoated portion 730 and has a gradually decreasing loading amount.

FIG. 44 is a diagram showing a process of manufacturing a negative electrode 700 according to a comparative example.

Referring to FIG. 44, after the negative electrode sheet 700S is manufactured so that the negative electrode active material portion 720 and the negative electrode uncoated portion 730 are alternately positioned along the fourth direction d4, a plurality of negative electrodes 700 may be manufactured by slitting the negative electrode uncoated portion 730 and the negative electrode active material portion 720.

Meanwhile, referring to FIGS. 42 and 43 again, the positive electrode 800 may include a positive electrode current collector 810, a positive electrode active material portion 820, and a positive electrode uncoated portion 880. In addition, the positive electrode uncoated portion 830 may extend in the second direction d2 opposite to the first direction d1, and the positive electrode active material portion 820 may include a positive electrode boundary portion 820B that forms a boundary between the positive electrode active material portion 820 and the positive electrode uncoated portion 830 and has a gradually decreasing loading amount.

FIG. 45 is a diagram showing a process of manufacturing a positive electrode 800 according to a comparative example.

Referring to FIG. 45, after the positive electrode sheet 800S is manufactured so that the positive electrode active material portion 820 and the positive electrode uncoated portion 830 are alternately positioned along the fourth direction d4, a plurality of positive electrodes 800 may be manufactured by slitting the positive electrode uncoated portion 830 and the positive electrode active material portion 820.

After that, the negative electrode 700 and the positive electrode 800 manufactured as above may be wound together with the separator 900 to manufacture an electrode assembly 600 according to the comparative example.

That is, the electrode assembly 600 according to the comparative example may have a structure similar to that of the electrode assembly 300 according to this embodiment, except for the loading reduction portion 500D (see FIG. 35).

Referring to FIGS. 42 and 43, in the case of the electrode assembly 600 according to the comparative example, the positive electrode active material portion 820 cannot be located in a portion corresponding to the negative electrode boundary portion 720B, based on a direction perpendicular to the first direction d1. If the positive electrode active material portion 820 extends to a portion corresponding to the negative electrode boundary portion 720B, the corresponding portion has a low N/P ratio value and is highly likely to precipitate metallic lithium. Therefore, in order to prevent lithium precipitation, the length of the positive electrode active material portion 820 must be limited. That is, the positive electrode active material portion 820 can be formed only in the region B1 shown in the drawing, and the positive electrode active material portion 820 cannot be formed in the region B2. This results in reducing the length of the positive electrode active material portion 820 due to the negative electrode boundary portion 720B.

Meanwhile, referring to FIGS. 34 and 35, in the case of the electrode assembly 300 according to this embodiment, based on the direction perpendicular to the first direction d1, the positive electrode active material portion 520, particularly the loading reduction portion 500D, may be located in a portion corresponding to the negative electrode boundary portion 420B. Since the loading reduction portion 500D having a smaller loading amount of the positive electrode active material than the adjacent area is provided at a position corresponding to the negative electrode boundary portion 420B, the N/P ratio in the corresponding portion may be maintained high and lithium precipitation may be prevented. Accordingly, the positive electrode active material portion 520 may be formed as much as the region A1, and the region A2 in which the positive electrode active material portion 520 cannot be formed may be reduced. For example, the width of the positive electrode 500 in the height direction compared to the width of the negative electrode 400 in the height direction may be increased to 98% or more.

If the region A1 of FIGS. 34 and 35 is compared with the region B1 of FIGS. 42 and 43, in the electrode assembly 300 according to this embodiment, the length of the positive electrode active material portion may be increased as much as the loading reduction portion 500D, and thus a higher energy density may be provided in a limited space compared to the electrode assembly 600 according to the comparative example.

Another aspect of the present disclosure relates to a cylindrical battery, which includes a jelly-roll type electrode assembly having a structure in which a positive electrode, a negative electrode, and a separator interposed between the positive electrode and the negative electrode are wound in one direction; a cylindrical battery housing in which the electrode assembly is accommodated; and a battery cap serving as a sealing body disposed at the upper portion of the battery housing to seal the battery housing. Here, the positive electrode is prepared according to the present disclosure and includes single particle-based active material particles having an average particle diameter D₅₀ of 5 µm or less as the positive electrode active material. The cylindrical battery may further include an electrolyte, and the above description may be referred to for the electrolyte.

The electrode assembly may have a stack type, stack/folding type, or jelly-roll type structure as described above. In one specific embodiment of the present disclosure, in the electrode assembly, the positive electrode may have a loading reduction portion as described above.

In the case of a conventional cylindrical battery, current is concentrated on a strip-shaped electrode tab, resulting in great resistance, high heat generation, and poor current collection efficiency.

As the demand for high-capacity batteries increases with the recent development of electric vehicle technology, the development of bulky large-sized cylindrical batteries is required. In the case of a conventional small cylindrical battery generally used in the art, that is, a cylindrical battery having a form factor of 1865 or 2170, resistance or heat generation does not seriously affect battery performance because the capacity is small. However, when the specifications of the conventional small cylindrical battery are applied as they are to a large cylindrical battery, a serious problem may occur in battery safety.

As the size of the battery increases, the amount of heat and gas generated inside the battery also increases, and the temperature and pressure inside the battery rise due to such heat and gas, which may cause the battery to ignite or explode. In order to prevent this, heat and gas inside the battery must be properly discharged to the outside, and for this, the cross-sectional area of the battery, which serves as a passage for discharging heat to the outside of the battery, must increase to match the increase in volume. However, in general, since the increase in cross-sectional area does not reach the increase in volume, as the size of the battery increases, the amount of heat generated inside the battery increases, resulting in problems such as increased risk of explosion and reduced output. In addition, when rapid charging is performed at a high voltage, a large amount of heat is generated around the electrode tab for a short period of time, and the battery may ignite. Accordingly, the present disclosure proposes a cylindrical battery having a high safety while having a large volume to implement a high capacity.

In addition, since a high loading electrode to which the positive electrode active material in the form of single particle or pseudo-single particle is applied may be applied to the cylindrical battery, the initial resistance characteristics and charge/discharge efficiency of the cylindrical battery may be improved.

The cylindrical battery according to the present disclosure significantly reduces gas generation compared to the prior art by applying a positive electrode active material in the form of single particle or pseudo-single particle. Accordingly, even a large cylindrical battery having a form factor ratio of 0.4 or more may exhibit excellent safety.

The cylindrical battery according to the present disclosure may preferably be a battery having a tab-less structure that does not include an electrode tab, but is not limited thereto.

In the battery of the tab-less structure, for example, each of the positive electrode and the negative electrode includes an uncoated portion on which an active material layer is not formed, and may have a structure in which the positive electrode uncoated portion and the negative electrode uncoated portion are respectively located at the upper and lower ends of the electrode assembly, a collector plate is coupled to the positive electrode uncoated portion and the negative electrode uncoated portion, and the collector plate is connected to an electrode terminal.

When the cylindrical battery is formed in a tab-less structure as described above, since the concentration of current is less than that of the conventional battery equipped with an electrode tab, heat generation inside the battery may be effectively reduced, thereby improving the thermal safety of the battery.

Hereinafter, the present disclosure will be described in more detail through specific examples.

### Example 1

A single particle type positive electrode active material Li[Ni_{0.9}Co_{0.06}Mn_{0.03}Al_{0.01}]O₂ having a unimodal particle size distribution with an average particle diameter D₅₀ of 3 µm: carbon nanotube : PVDF binder were mixed in N-methyl pyrrolidone at a weight ratio of 97.8 : 0.6 : 1.6 to prepare a positive electrode slurry. The positive electrode slurry was coated on one surface of an aluminum current collector sheet, dried at 120°C, and then rolled to prepare a positive electrode.

A negative electrode active material (graphite : SiO = 95 : 5 mixture by weight) : conductive material (super C), : styrene-butadiene rubber (SBR) : carboxymethyl cellulose (CMC) were mixed in water at a weight ratio of 96 : 2 : 1.5 : 0.5 to prepare a negative electrode slurry. The negative electrode slurry was coated on one surface of a copper current collector sheet, dried at 150°C, and then rolled to prepare a negative electrode.

A separator was interposed between the positive electrode and the negative electrode prepared as above, stacked in the order of separator/positive electrode/separator/negative electrode, and then wound to prepare a jelly-roll type electrode assembly. The electrode assembly prepared as described above was inserted into a cylindrical battery can, and an electrolyte was injected thereto to prepare a 4680 cell.

### Comparative Example 1

A 4680 cell was manufactured in the same manner as in Example 1, except that secondary particle type Li[Ni_{0.9}Co_{0.05}Mn_{0.04}Al_{0.01}]O₂ having a bimodal particle size distribution with a large particle average diameter D₅₀ of 9 µm and a small particle average diameter D₅₀ of 4 µm was used as the positive electrode active material.

### Experimental Example 1

A hot box test was performed on the 4680 cells manufactured by Example 1 and Comparative Example 1.

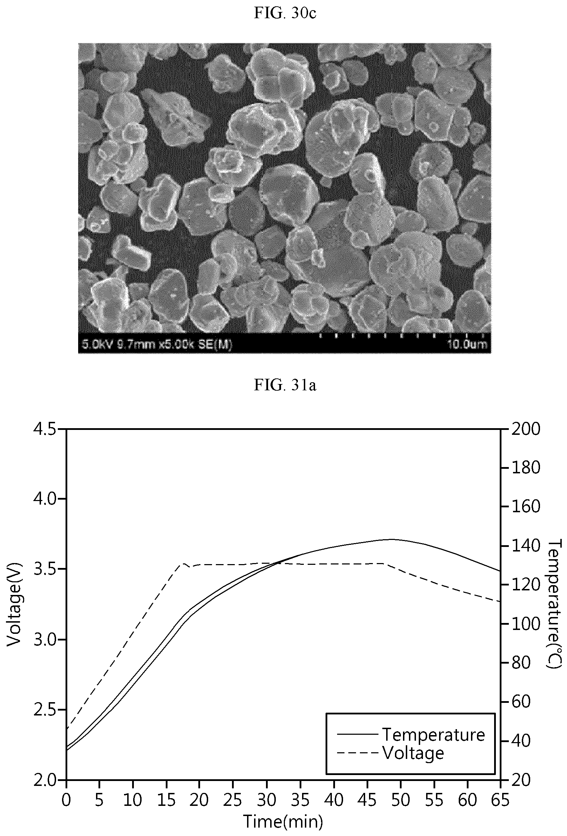

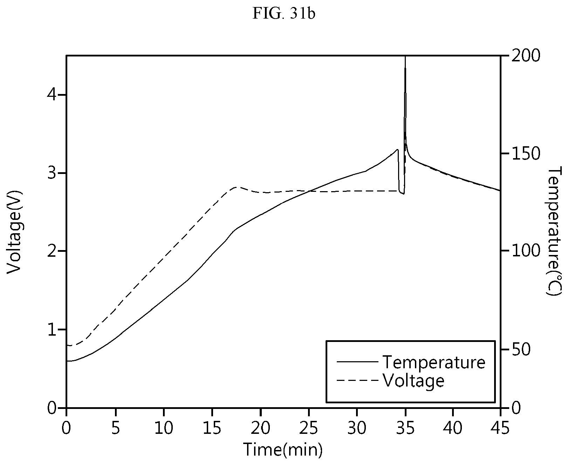

Specifically, each of the 4680 cells manufactured by Example 1 and Comparative Example 1 was placed in a hot box chamber at room temperature, heated to 130°C at a heating rate of 5°C/min, and maintained for 30 minutes to perform a hot box evaluation, and the temperature change of the battery over time was measured. For accurate evaluation, the hot box evaluation was performed twice on the cell of Example 1. The measurement results are shown in FIGS. 31a and 31b.

FIG. 31a is a graph showing a hot box test result of the 4680 cell manufactured by Example 1 of the present disclosure, and FIG. 31b is a graph showing a hot box test result of the 4680 cell manufactured by Comparative Example 1.

Through FIGS. 31a and 31b, it may be found that in the case of the lithium secondary battery of Example 1 using the single particle positive electrode active material, the voltage and temperature of the battery were maintained stably until 65 minutes, whereas in the lithium secondary battery of Comparative Example 1, the temperature of the battery rapidly increased after 35 minutes.

### Example 2-1

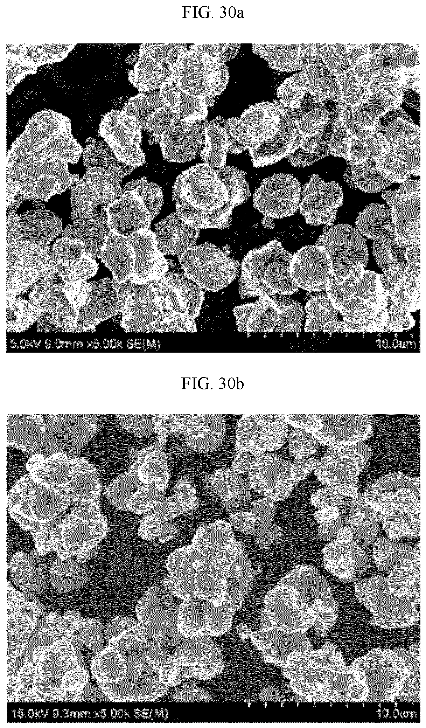

A positive electrode active material (composition: Li[Ni_{0.9}Co_{0.06}Mn_{0.03}Al_{0.01}]O₂), which has a unimodal particle size distribution where Dₘᵢₙ = 1.78 µm, D₅₀ = 4.23 µm, and Dₘₐₓ =13.1 µm and in which single particles and pseudo-single particles were mixed was prepared. FIG. 30a shows a SEM picture of the positive electrode active material used in

### Example 2-1.

The positive electrode active material : carbon nanotube : PVDF binder were mixed in N-methyl pyrrolidone at a weight ratio of 97.8 : 0.6 : 1.6 to prepare a positive electrode slurry. The positive electrode slurry was coated on one surface of an aluminum current collector sheet, dried at 120°C, and then rolled to prepare a positive electrode.

A negative electrode active material (graphite : SiO = 95 : 5 mixture by weight) : conductive material (super C) : styrene-butadiene rubber (SBR) : carboxymethyl cellulose (CMC) were mixed in water at a weight ratio of 96 : 2 : 1.5 : 0.5 to prepare a negative electrode slurry. The negative electrode slurry was coated on one surface of a copper current collector sheet, dried at 150°C, and then rolled to prepare a negative electrode.

A separator was interposed between the positive electrode and the negative electrode prepared as above, stacked in the order of separator/positive electrode/separator/negative electrode, and then wound to prepare a jelly-roll type electrode assembly. The electrode assembly prepared as described above was inserted into a battery can, and an electrolyte was injected thereto to prepare a 4680 cell.

### Example 2-2

A 4680 cell was manufactured in the same manner as in Example 2-1, except that a positive electrode active material (composition: Li[Ni_{0.9}Co_{0.06}Mn_{0.03}Al_{0.01}]O₂), which has a unimodal particle size distribution where Dₘᵢₙ = 1.38 µm, D₅₀ = 4.69 µm, and Dₘₐₓ =18.5 µm and in which single particles and pseudo-single particles were mixed was used as the positive electrode active material. FIG. 30b shows a SEM picture of the positive electrode active material used in Example 2-2.

### Comparative Example 2-1

A 4680 cell was manufactured in the same manner as in Example 2-1, except that a secondary particle type positive electrode active material (composition: Li[Ni_{0.9}Co_{0.05}Mn_{0.04}Al_{0.01}]O₂) having a bimodal particle size distribution with a large particle average diameter D₅₀ of 9 µm and a small particle average diameter D₅₀ of 4 µm was used as the positive electrode active material.

### Comparative Example 2-2

A 4680 cell was manufactured in the same manner as in Example 2-1, except that a positive electrode active material (composition: Li[Ni_{0.9}Co_{0.06}Mn_{0.03}Al_{0.01}]O₂), which has a unimodal particle size distribution where Dₘᵢₙ = 0.892 µm, D₅₀ = 3.02 µm, and Dₘₐₓ =11 µm and in which single particles and pseudo-single particles were mixed was used as the positive electrode active material.

FIG. 30c shows a SEM picture of the positive electrode active material used in Comparative Example 2-2.

### Experimental Example 2-1

A hot box test was performed on the 4680 cells manufactured by Examples 2-1 and 2-2 and Comparative Examples 2-1 and 2-2.

Specifically, each of the 4680 cells manufactured by Example 2-1 and Comparative Example 2-1 was placed in a hot box chamber at room temperature, heated up to 130°C at a heating rate of 5°C/min, and maintained for 30 minutes, and then the temperature change of the cell was measured. A case in which thermal runaway and ignition did not occur during the test was marked as Pass, and a case in which thermal runaway and/or ignition occurred was marked as Fail. Also, for the accuracy of the test, the test was performed more than twice for the cells of Examples 2-1 and 2-2.

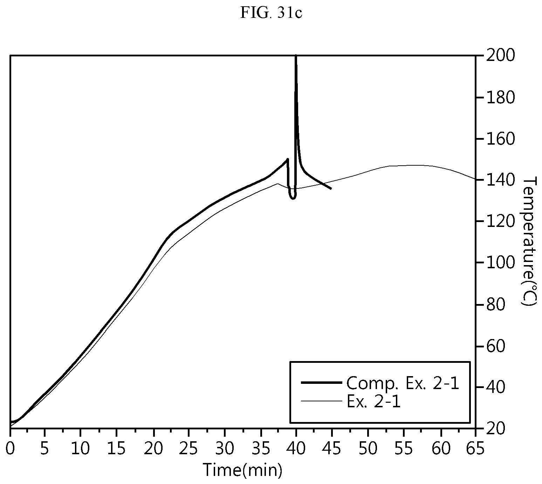

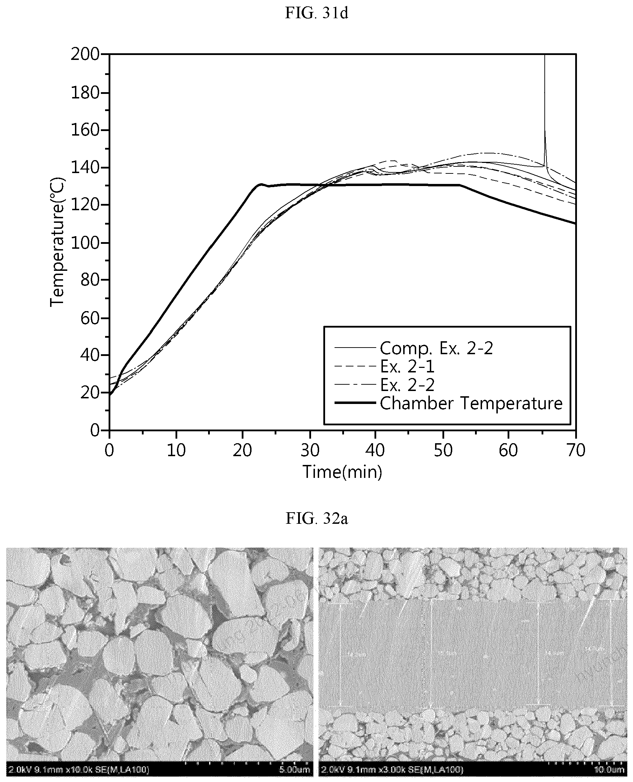

Measurement results are shown in Table 1 below and FIGS. 31c and 31d. FIG. 31c is a graph showing hot box test results of Sample 1 of Example 2-1 and the 4680 cell manufactured by Comparative Example 2-1, and FIG. 31d is a graph showing hot box test results of Samples 2 and 3 of Example 2-1, Samples 1 and 2 of Example 2-2, and the 4680 cell manufactured by Comparative Example 2-2.

**Table 1**

| | Sample # | Venting time (min) | Maximum temperature (°C) | Hot box test result |
|---|---|---|---|---|
| Example 2-1 | 1 | 16 | 139 | Pass |
| | 2 | 20.9 | 141 | Pass |
| | 3 | 23.7 | 137 | Pass |
| Example 2-2 | 1 | 16.0 | 148 | Pass |
| | 2 | 15.8 | 147 | Pass |
| Comparative Example 2-1 | 1 | 17 | not measurable | Fail |
| Comparative Example 2-2 | 1 | 16.2 | not measurable | Fail |

Referring to Table 1 and FIGS. 31c and 31d, it may be found that, in the case of the 4680 cell of Example 2-1 to which the positive electrode active material in the form of a single particle/pseudo-single particle with Dₘᵢₙ of 1.0 µm or more was applied, the voltage and temperature of the battery were maintained stably until 65 minutes, while in the case of the 4680 cells of Comparative Example 2-1 in which a secondary particle was applied as the positive electrode active material and Comparative Example 2-2 in which a positive electrode active material in the form of a single particle/pseudo-single particle with Dₘᵢₙ of less than 1.0 µm was applied, the battery temperature of the 4680 cell rapidly increased.

### Experimental Example 2-2

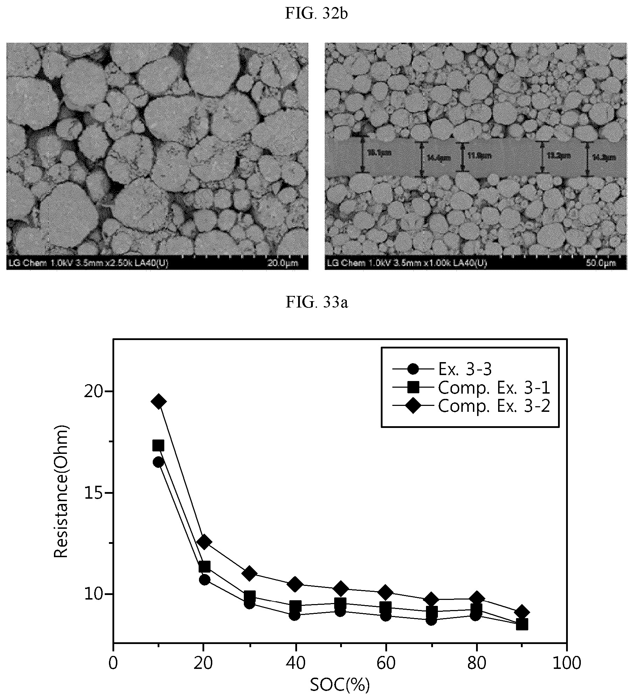

After rolling the positive electrodes manufactured in Example 2-1 and Comparative Example 2-1, in order to check the degree of breakage of the positive electrode active material particles, the positive electrode was cut with an ion milling device and the cross section was photographed with a SEM. FIG. 32a shows a cross-sectional SEM picture of the positive electrode manufactured in Example 2-1, and FIG. 32b shows a cross-sectional SEM picture of the positive electrode manufactured in Comparative Example 2-1.

Through FIGS. 32a and 32b, the positive electrode of Example 2-1 has almost no particle breakage of the positive electrode active material even after rolling, whereas in the positive electrode of Comparative Example 2-2 using secondary particles, a number of cracks were observed in the particles of the positive electrode active material after rolling.

### Example 3-1

A positive electrode active material powder (composition: Li[Ni_{0.9}Co_{0.06}Mn_{0.03}Al_{0.01}]O₂), which has a unimodal particle size distribution where Dₘᵢₙ = 1.78 µm, D₅₀ = 4.23 µm, Dₘₐₓ =13.1 µm and in which single particles and pseudo-single particles were mixed, flake graphite (SFG6L), conductive material (multi-wall carbon nanotube), and PVDF binder were mixed in N-methyl pyrrolidone at a weight ratio of 96.3 : 1.5 : 0.4 : 1.8 to prepare a positive electrode slurry. The positive electrode slurry was coated on one surface of an aluminum current collector sheet, dried, and rolled at a linear pressure of 3.0 ton/cm to prepare a positive electrode. The porosity of the positive electrode active material layer of the positive electrode prepared as described above was measured, and the porosity was measured to be 17.5%.

### Example 3-2

A positive electrode was manufactured in the same manner as in Example 3-1, except that the positive electrode active material, flake graphite, conductive material, and binder were mixed in a weight ratio of 97.2 : 0.6 : 0.4 : 1.8, and the porosity of the positive electrode active material layer was measured. The porosity of the positive electrode active material layer was measured to be 19%.

### Example 3-3

A positive electrode was manufactured in the same manner as in Example 3-1, except that the positive electrode active material, flake graphite, conductive material, and binder were mixed in a weight ratio of 97.4 : 0.4 : 0.4 : 1.8, and the porosity of the positive electrode active material layer was measured. The porosity of the positive electrode active material layer was measured to be 20%.

### Example 3-4

A positive electrode was manufactured in the same manner as in Example 3-1, except that the positive electrode active material, flake graphite, conductive material, and binder were mixed in a weight ratio of 97.6 : 0.2 : 0.4 : 1.8, and the porosity of the positive electrode active material layer was measured. The porosity of the positive electrode active material layer was measured to be 21%.

### Comparative Example 3-1

A positive electrode was prepared in the same manner as in Example 3-1, except that the positive electrode slurry was prepared by mixing the positive electrode active material, conductive material, and binder in N-methyl pyrrolidone at a weight ratio of 97.8 : 0.4 : 1.8 without adding flake graphite, and the porosity of the positive electrode active material layer was measured. The porosity of the positive electrode active material layer was measured to be 24%.

### Comparative Example 3-2

A positive electrode was manufactured in the same manner as in Example 3-1 except that the positive electrode active material, conductive material, and binder were mixed in N-methyl pyrrolidone at a weight ratio of 97.8 : 0.4 : 1.8 to prepare a positive electrode slurry, and rolled at a line pressure of 2.0 ton/cm without adding flake graphite, and the porosity of the positive electrode active material layer was measured. The porosity of the positive electrode active material layer was measured to be 30%.

### Experimental Example 3-1 - Measurement of charge/discharge capacity and charge/discharge efficiency

Coin half-cells including the positive electrodes according to Examples 3-1 to 3-4 and Comparative Examples 3-1 and 3-2 were manufactured, charged up to 4.25V under a 0.2C current condition, and then discharged to 2.5V under a 0.2C current condition, and the charge capacity (mAh/g) and discharge capacity (mAh/g) of each coin half-cell were measured. The measurement results are shown in Table 2 below.

**Table 2**

| | Add amount of flake graphite (wt%) | Porosity (%) | Charging capacity (mAh/g) | Discharging capacity (mAh/g) | Efficiency (%) |
|---|---|---|---|---|---|
| Example 3-1 | 1.5 | 17.5 | 230.3 | 209.3 | 90.9 |
| Example 3-2 | 0.6 | 19 | 229.4 | 206.9 | 90.2 |
| Example 3-3 | 0.4 | 20 | 230.4 | 207.3 | 90.0 |
| Example 3-4 | 0.2 | 21 | 229.1 | 205.5 | 89.7 |
| Comparative Example 3-1 | 0 | 24 | 229.1 | 204.2 | 89.1 |
| Comparative Example 3-2 | 0 | 30 | 225.4 | 199.7 | 88.6 |

Through Table 2, it may be found that Examples 3-1 to 3-4 using an positive electrode to which flake graphite is added shows lower porosity and excellent capacity characteristics compared to Comparative Examples 3-1 to 3-2.

### Experimental Example 3-2 - Check resistance characteristics

While charging the coin half-cells including the positive electrodes according to Example 3-3, Comparative Example 3-1, and Comparative Example 3-2 to 4.2V, resistance characteristics according to SOC were measured. The experimental results are shown in FIG. 33a.

Referring to FIG. 33a, it may be found that the resistance value of Example 3-3, in which flake graphite is added to the positive electrode active material layer, is lower than those of Comparative Example 3-1 and Comparative Example 3-2, which do not include flake graphite, based on SOC10%. This shows that when flake graphite is added to the positive electrode active material layer, resistance characteristics at low SOC are improved.

### Experimental Example 3-3 - Measurement of high-temperature life characteristics and resistance increase rate

A separator was interposed between the positive electrode and the negative electrode according to Example 3-1, Example 3-3, and Comparative Example 3-1, and stacked in the order of separator/positive electrode/separator/negative electrode, and then wound to prepare a jelly-roll type electrode assembly. The electrode assembly prepared as described above was inserted into a cylindrical battery can, and then an electrolyte was injected thereto to manufacture a 4680 cell.

At this time, a negative electrode active material (graphite : SiO = 95: 5 mixture by weight): conductive material (super C): styrene-butadiene rubber (SBR): carboxymethyl cellulose (CMC) were mixed in water at a weight ratio of 96: 2: 1.5 : 0.5 to prepare a negative electrode slurry, and then the negative electrode slurry was coated on to one surface of a copper current collector sheet, dried at 150°C, and then rolled to prepare a negative electrode.

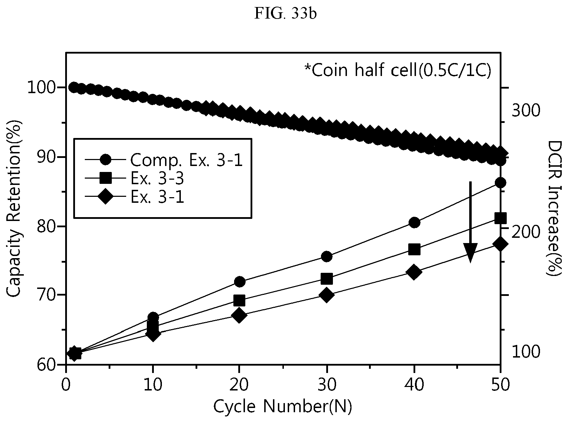

Based on one cycle in which the 4680 cell prepared as described above was charged to 4.2V at 40°C at 0.5C and then discharged to 2.5V at 0.5C, 50 cycles of charge and discharge were performed, and then capacity retention and resistance increase rate (DCIR increase) were measured. The measurement results are shown in FIG. 33b.

Referring to FIG. 33b, in the case of the secondary batteries of Examples 3-1 and 3-3, it is shown that the change in capacity retention according to the number of cycles is smaller than that of the secondary battery of Comparative Example 3-1, and the change in resistance increase rate according to the number of cycles is also small.

The present disclosure has been described in detail. However, it should be understood that the detailed description and specific examples, while indicating preferred embodiments of the disclosure, are given by way of illustration only, since various changes and modifications within the scope of the appended claims will become apparent to those skilled in the art from this detailed description.

## Claims

1. A cylindrical battery (1, 40, 70), comprising:
an electrode assembly (71, 100, 300) in which a first electrode, a second electrode, and a separator (12, 600, 900) interposed therebetween are wound around a winding axis to define a core and an outer circumference, the first electrode and the second electrode respectively including a first uncoated portion (72) and a second uncoated portion (72, 73) not coated with an active material layer (21, 92) along a winding direction, the first uncoated portion (72) and the second uncoated portion (72, 73) being defined as an electrode tab (13, 14) in themselves;
a battery housing (41, 51, 51a) configured to accommodate the electrode assembly (71, 100, 300) through an opening formed in one side and electrically connected to the second uncoated portion (72, 73);
an electrode terminal (50) riveted through a perforated hole (53) formed in a closed portion provided opposite to the opening of the battery housing (41, 51, 51a) and electrically connected to the first uncoated portion (72);
an insulating gasket (35, 54) interposed between the electrode terminal (50) and the perforated hole (53); and
a cap plate (42a, 60, 74a) configured to cover the opening of the battery housing (41, 51, 51a),
wherein the electrode terminal (50) includes:
a body portion (50a) inserted into the perforated hole (53);
an outer flange portion (50b) configured to extend along an outer surface (52a) of the closed portion from a circumference (51a, 76a) of one side of the body portion (50a) exposed through the outer surface (52a) of the closed portion of the battery housing (41, 51, 51a);
an inner flange portion (50c) configured to extend toward an inner surface (52a, 52b) of the closed portion from a circumference (51a, 76a) of the other side of the body portion (50a) exposed through the inner surface (52a, 52b); and
a flat portion (50d) provided on an inner side of the inner flange portion (50c).

2. The cylindrical battery (1, 40, 70) according to claim 1,
wherein a surface of the electrode terminal (50) exposed to the outside of the battery housing (41, 51, 51a) is a first electrode terminal, and
a portion of the outer surface (52a) of the closed portion of the battery housing (41, 51, 51a), which is parallel to an upper surface of the first electrode terminal, is a second electrode terminal.

3. The cylindrical battery (1, 40, 70) according to claim 1,
wherein a recess portion (55) having a structure (300S, 600S) of an asymmetric groove is provided between the inner flange portion (50c) and the flat portion (50d), and
the asymmetrical groove includes a sidewall (55a) of the flat portion (50d) and an inclined surface (55b) of the inner flange portion (50c) connected to an end of the sidewall (55a).

4. The cylindrical battery (1, 40, 70) according to claim 1,
wherein the thickness of the inner flange portion (50c) decreases as being away from the body portion (50a).

5. The cylindrical battery (1, 40, 70) according to claim 1,
wherein the insulating gasket (35, 54) includes:
an outer gasket (54a) interposed between the outer flange portion (50b) and the outer surface (52a) of the closed portion; and
an inner gasket (54b) interposed between the inner flange portion (50c) and the inner surface (52a, 52b) of the closed portion, and
wherein among the area of the inner gasket (54b), an area interposed between an inner edge (56) of the perforated hole (53) connected to the inner surface (52a, 52b) of the closed portion and the inner flange portion (50c) has a relatively smaller thickness than other area.

6. The cylindrical battery (1, 40, 70) according to claim 1,
wherein the insulating gasket (35, 54) includes:
an outer gasket (54a) interposed between the outer flange portion (50b) and the outer surface (52a) of the closed portion; and
an inner gasket (54b) interposed between the inner flange portion (50c) and the inner surface (52a, 52b) of the closed portion, and
wherein the inner gasket (54b) extends longer than the inner flange portion (50c).

7. The cylindrical battery (1, 40, 70) according to claim 1,
wherein the insulating gasket (35, 54) includes:
an outer gasket (54a) interposed between the outer flange portion (50b) and the outer surface (52a) of the closed portion; and
an inner gasket (54b) interposed between the inner flange portion (50c) and the inner surface (52a, 52b) of the closed portion, and
wherein based on the inner surface (52a, 52b) of the closed portion, the height of the flat portion (50d) is greater than or equal to the height of an end of the inner gasket (54b).

8. The cylindrical battery (1, 40, 70) according to claim 1,
wherein based on the inner surface (52a, 52b) of the closed portion, the height of the flat portion (50d) is greater than or equal to the height of an end of the inner flange portion (50c).

9. The cylindrical battery (1, 40, 70) according to claim 1,
wherein the first uncoated portion (72) includes a plurality of independently bendable segments (93, 93a);
the plurality of segments (93, 93a) of the first uncoated portion (72) are bent toward the core to form a bent surface (102) of the segments (93, 93a) at one end of the electrode assembly (71, 100, 300), and
the electrode terminal (50) is electrically connected to the bent surface (102) of the segments (93, 93a) of the first uncoated portion (72).

10. The cylindrical battery (1, 40, 70) according to claim 9, further comprising:
a first current collecting plate (36, 78) coupled to the bent surface (102) of the segments (93, 93a) of the first uncoated portion (72); and
an insulator (37, 46, 80) interposed between the first current collecting plate (36, 78) and the inner surface (52a, 52b) of the closed portion,
wherein the flat portion (50d) of the electrode terminal (50) passes through the insulator (37, 46, 80) and is coupled to the first current collecting plate (36, 78).

11. The cylindrical battery (1, 40, 70) according to claim 1,
wherein the second uncoated portion (72, 73) includes a plurality of independently bendable segments (93, 93a);
the plurality of segments (93, 93a) of the second uncoated portion (72, 73) are bent toward the core to form a bent surface (102) of the segments (93, 93a) at the other end of the electrode assembly (71, 100, 300), and
the battery housing (41, 51, 51a) is electrically connected to the bent surface (102) of the segments (93, 93a) of the second uncoated portion (72, 73).

12. The cylindrical battery (1, 40, 70) according to claim 11, further comprising:
a second current collecting plate (38, 79) coupled to the bent surface (102) of the segments (93, 93a) of the second uncoated portion (72, 73),
wherein at least a part of an edge of the second current collecting plate (38, 79) extends toward an inner surface (52a, 52b) of a beading portion (23, 44, 76) and is interposed and fixed between the inner surface (52a, 52b) of the beading portion (23, 44, 76) and the sealing gasket (39, 42b, 74b).

13. The cylindrical battery (1, 40, 70) according to claim 1,
wherein a first sliding portion in which the thickness of the active material layer (21, 92) is reduced is included in a boundary region between a coated portion and the uncoated portion (10a, 11a, 22, 72, 73, 93, 93', 430, 530, 730, 830, 880) of the first electrode, and a second sliding portion in which the thickness of the active material layer (21, 92) is reduced is included in a boundary region between a coated portion and the uncoated portion (10a, 11a, 22, 72, 73, 93, 93', 430, 530, 730, 830, 880) of the second electrode,
the first sliding portion and the second sliding portion are located in opposite directions based on a winding axis direction, and
the coated portion of the first electrode includes a loading reduction portion in which a loading amount of the active material is reduced, and the position of the loading reduction portion corresponds to the position of the second sliding portion.

14. The cylindrical battery (1, 40, 70) according to claim 1,
wherein the active material layer (21, 92) of the first electrode includes a positive electrode active material including a single particle, a pseudo-single particle, or a combination thereof,
Dₘᵢₙ, which a minimum particle size in a cumulative volume distribution of the positive electrode active material, is 1.0 µm or more;
in the volume cumulative distribution of the positive electrode active material, D₅₀, which is a particle size when a volume cumulative amount is 50%, is 5.0 µm or less, and
Dₘₐₓ, which is a maximum particle size in the volume cumulative distribution of the positive electrode active material, is 12 µm to 17 µm.

15. The cylindrical battery (1, 40, 70) according to claim 14,
wherein the positive electrode active material has a unimodal particle size distribution showing a single peak in a volume cumulative particle size distribution graph, and the particle size distribution (PSD) represented by the following formula is 3 or less: $PSD = \left({D}_{max}-{D}_{min}\right) / {D}_{50} .$

16. The cylindrical battery (1, 40, 70) according to claim 14,
wherein the single particle, the pseudo-single particle, or the combination thereof is included in an amount of 95 wt% to 100 wt% based on the total weight of the positive electrode active material included in the active material layer (21, 92) of the first electrode.

17. The cylindrical battery (1, 40, 70) according to claim 14,
wherein the positive electrode active material includes a lithium nickel-based oxide containing 80 mol% or more of Ni based on the total number of moles of a transition metal,
wherein the active material layer (21, 92) of the first electrode has a porosity of 15% to 23%, and
wherein the active material layer (21, 92) of the first electrode contains flake graphite in a weight ratio of 0.05 wt% to 5 wt%.

18. The cylindrical battery (1, 40, 70) according to claim 14,
wherein the active material layer (21, 92) of the first electrode further contains carbon nanotubes.

19. The cylindrical battery (1, 40, 70) according to claim 14,
wherein the active material layer (21, 92) of the second electrode includes a silicon-based negative electrode active material and a carbon-based negative electrode active material, and
the silicon-based negative electrode active material and the carbon-based negative electrode active material are included in a weight ratio of 1 : 99 to 20 : 80.

20. A battery pack (3), comprising a plurality of cylindrical batteries (1, 40) according to any one of claims 1 to 19.

21. A vehicle (5), comprising the battery pack (3) according to claim 20.

## Patentansprüche

1. Zylindrische Batterie (1, 40, 70), umfassend:
eine Elektrodenanordnung (71, 100, 300), in der eine erste Elektrode, eine zweite Elektrode und ein dazwischen angeordneter Separator (12, 600, 900) um eine Wickelachse gewickelt sind, um einen Kern und einen Außenumfang zu definieren, wobei die erste Elektrode und die zweite Elektrode jeweils einen ersten unbeschichteten Abschnitt (72) und einen zweiten unbeschichteten Abschnitt (72, 73), die nicht mit einer Aktivmaterialschicht (21, 92) beschichtet sind, entlang einer Wickelrichtung umfassen, wobei der erste unbeschichtete Abschnitt (72) und der zweite unbeschichtete Abschnitt (72, 73) als eine Elektrodenlasche (13, 14) in sich definiert sind;
ein Batteriegehäuse (41, 51, 51a), das konfiguriert ist, um die Elektrodenanordnung (71, 100, 300) durch eine in einer Seite ausgebildeten Öffnung aufzunehmen und elektrisch mit dem zweiten unbeschichteten Abschnitt (72, 73) verbunden ist;
einen Elektrodenanschluss (50), der durch ein perforiertes Loch (53) genietet ist, das in einem geschlossenen Abschnitt ausgebildet ist, der gegenüber der Öffnung des Batteriegehäuses (41, 51, 51a) vorgesehen ist, und elektrisch mit dem ersten unbeschichteten Abschnitt (72) verbunden ist;
eine isolierende Dichtung (35, 54), die zwischen dem Elektrodenanschluss (50) und dem perforierten Loch (53) angeordnet ist; und
eine Abdeckplatte (42a, 60, 74a), die konfiguriert ist, um die Öffnung des Batteriegehäuses (41, 51, 51a) abzudecken,
wobei der Elektrodenanschluss (50) Folgendes umfasst:
einen Körperabschnitt (50a), der in das perforierte Loch (53) eingesetzt ist;
einen äußeren Flanschabschnitt (50b), der konfiguriert ist, um sich entlang einer Außenfläche (52a) des geschlossenen Abschnitts von einem Umfang (51a, 76a) einer Seite des durch die Außenfläche (52a) des geschlossenen Abschnitts des Batteriegehäuses (41, 51, 51a) freiliegenden Körperabschnitts (50a) zu erstrecken;
einen inneren Flanschabschnitt (50c), der konfiguriert ist, um sich in Richtung einer Innenfläche (52a, 52b) des geschlossenen Abschnitts von einem Umfang (51a, 76a) der anderen Seite des durch die Innenfläche (52a, 52b) freiliegenden Körperabschnitts (50a) zu erstrecken; und
einen flachen Abschnitt (50d), der auf einer Innenseite des inneren Flanschabschnitts (50c) bereitgestellt ist.

2. Zylindrische Batterie (1, 40, 70) nach Anspruch 1,
wobei eine Oberfläche des Elektrodenanschlusses (50), die zur Außenseite des Batteriegehäuses (41, 51, 51a) freiliegt, ein erster Elektrodenanschluss ist, und
ein Abschnitt der Außenfläche (52a) des geschlossenen Abschnitts des Batteriegehäuses (41, 51, 51a), der parallel zu einer oberen Oberfläche des ersten Elektrodenanschlusses ist, einen zweiten Elektrodenanschluss bildet.

3. Zylindrische Batterie (1, 40, 70) nach Anspruch 1,
wobei ein Aussparungsabschnitt (55) mit einer Struktur (300S, 600S) einer asymmetrischen Vertiefung zwischen dem inneren Flanschabschnitt (50c) und dem flachen Abschnitt (50d) bereitgestellt ist, und
die asymmetrische Vertiefung eine Seitenwand (55a) des flachen Abschnitts (50d) und eine geneigte Oberfläche (55b) des inneren Flanschabschnitts (50c), die mit einem Ende der Seitenwand (55a) verbunden ist, umfasst.

4. Zylindrische Batterie (1, 40, 70) nach Anspruch 1,
wobei die Dicke des inneren Flanschabschnitts (50c) von dem Körperabschnitt (50a) weg abnimmt.

5. Zylindrische Batterie (1, 40, 70) nach Anspruch 1,
wobei die isolierende Dichtung (35, 54) Folgendes umfasst:
eine äußere Dichtung (54a), die zwischen dem äußeren Flanschabschnitt (50b) und der Außenfläche (52a) des geschlossenen Abschnitts angeordnet ist; und
eine innere Dichtung (54b), die zwischen dem inneren Flanschabschnitt (50c) und der Innenfläche (52a, 52b) des geschlossenen Abschnitts angeordnet ist, und
wobei von dem Bereich der inneren Dichtung (54b) ein Bereich, der zwischen einer Innenkante (56) des perforierten Lochs (53), die mit der Innenfläche (52a, 52b) des geschlossenen Abschnitts verbunden ist, und dem inneren Flanschabschnitt (50c) angeordnet ist, eine relativ kleinere Dicke als ein anderer Bereich aufweist.

6. Zylindrische Batterie (1, 40, 70) nach Anspruch 1,
wobei die isolierende Dichtung (35, 54) Folgendes umfasst:
eine äußere Dichtung (54a), die zwischen dem äußeren Flanschabschnitt (50b) und der Außenfläche (52a) des geschlossenen Abschnitts angeordnet ist; und
eine innere Dichtung (54b), die zwischen dem inneren Flanschabschnitt (50c) und der Innenfläche (52a, 52b) des geschlossenen Abschnitts angeordnet ist, und
wobei sich die innere Dichtung (54b) länger als der innere Flanschabschnitt (50c) erstreckt.

7. Zylindrische Batterie (1, 40, 70) nach Anspruch 1,
wobei die isolierende Dichtung (35, 54) Folgendes umfasst:
eine äußere Dichtung (54a), die zwischen dem äußeren Flanschabschnitt (50b) und der Außenfläche (52a) des geschlossenen Abschnitts angeordnet ist; und
eine innere Dichtung (54b), die zwischen dem inneren Flanschabschnitt (50c) und der Innenfläche (52a, 52b) des geschlossenen Abschnitts angeordnet ist, und
wobei, basierend auf der Innenfläche (52a, 52b) des geschlossenen Abschnitts, die Höhe des flachen Abschnitts (50d) größer als oder gleich der Höhe eines Endes der inneren Dichtung (54b) ist.

8. Zylindrische Batterie (1, 40, 70) nach Anspruch 1,
wobei, basierend auf der Innenfläche (52a, 52b) des geschlossenen Abschnitts, die Höhe des flachen Abschnitts (50d) größer als oder gleich der Höhe eines Endes des inneren Flanschabschnitts (50c) ist.

9. Zylindrische Batterie (1, 40, 70) nach Anspruch 1,
wobei der erste unbeschichtete Abschnitt (72) eine Vielzahl von unabhängig voneinander biegbaren Segmenten (93, 93a) umfasst;
die Vielzahl von Segmenten (93, 93a) des ersten unbeschichteten Abschnitts (72) in Richtung des Kerns gebogen sind, um eine gebogene Fläche (102) der Segmente (93, 93a) an einem Ende der Elektrodenanordnung (71, 100, 300) zu bilden, und
der Elektrodenanschluss (50) elektrisch mit der gebogenen Fläche (102) der Segmente (93, 93a) des ersten unbeschichteten Abschnitts (72) verbunden ist.

10. Zylindrische Batterie (1, 40, 70) nach Anspruch 9, ferner umfassend:
eine erste Stromsammelplatte (36, 78), die mit der gebogenen Fläche (102) der Segmente (93, 93a) des ersten unbeschichteten Abschnitts (72) gekoppelt ist; und
einen Isolator (37, 46, 80), der zwischen der ersten Stromsammelplatte (36, 78) und der Innenfläche (52a, 52b) des geschlossenen Abschnitts angeordnet ist,
wobei der flache Abschnitt (50d) des Elektrodenanschlusses (50) durch den Isolator (37, 46, 80) verläuft und mit der ersten Stromsammelplatte (36, 78) gekoppelt ist.

11. Zylindrische Batterie (1, 40, 70) nach Anspruch 1,
wobei der zweite unbeschichtete Abschnitt (72, 73) eine Vielzahl von unabhängig voneinander biegbaren Segmenten (93, 93a) umfasst;
die Vielzahl von Segmenten (93, 93a) des zweiten unbeschichteten Abschnitts (72, 73) in Richtung des Kerns gebogen sind, um eine gebogene Fläche (102) der Segmente (93, 93a) an dem anderen Ende der Elektrodenanordnung (71, 100, 300) zu bilden, und
das Batteriegehäuse (41, 51, 51a) elektrisch mit der gebogenen Fläche (102) der Segmente (93, 93a) des zweiten unbeschichteten Abschnitts (72, 73) verbunden ist.

12. Zylindrische Batterie (1, 40, 70) nach Anspruch 11, ferner umfassend:
eine zweite Stromsammelplatte (38, 79), die mit der gebogenen Fläche (102) der Segmente (93, 93a) des zweiten unbeschichteten Abschnitts (72, 73) gekoppelt ist,
wobei sich mindestens ein Teil einer Kante der zweiten Stromsammelplatte (38, 79) in Richtung einer Innenfläche (52a, 52b) eines Wulstabschnitts (23, 44, 76) erstreckt und zwischen der Innenfläche (52a, 52b) des Wulstabschnitts (23, 44, 76) und der Dichtung (39, 42b, 74b) angeordnet und befestigt ist.

13. Zylindrische Batterie (1, 40, 70) nach Anspruch 1,
wobei ein erster Gleitabschnitt, in dem die Dicke der Aktivmaterialschicht (21, 92) reduziert ist, in einem Grenzbereich zwischen einem beschichteten Abschnitt und dem unbeschichteten Abschnitt (10a, 11a, 22, 72, 73, 93, 93', 430, 530, 730, 830, 880) der ersten Elektrode enthalten ist, und ein zweiter Gleitabschnitt, in dem die Dicke der Aktivmaterialschicht (21, 92) reduziert ist, in einem Grenzbereich zwischen einem beschichteten Abschnitt und dem unbeschichteten Abschnitt (10a, 11a, 22, 72, 73, 93, 93', 430, 530, 730, 830, 880) der zweiten Elektrode enthalten ist,
der erste Gleitabschnitt und der zweite Gleitabschnitt in entgegengesetzten Richtungen basierend auf einer Wickelachsenrichtung angeordnet sind, und
der beschichtete Abschnitt der ersten Elektrode einen Ladungsreduzierungsabschnitt umfasst, in dem eine Ladungsmenge des Aktivmaterials reduziert ist, und die Position des Ladungsreduzierungsabschnitts der Position des zweiten Gleitabschnitts entspricht.

14. Zylindrische Batterie (1, 40, 70) nach Anspruch 1,
wobei die Aktivmaterialschicht (21, 92) der ersten Elektrode ein Positivelektrodenaktivmaterial umfasst, das ein einzelnes Teilchen, ein pseudo-einzelnes Teilchen oder eine Kombination davon umfasst,
Dₘᵢₙ, das eine minimale Teilchengröße in einer kumulativen Volumenverteilung des Positivelektrodenaktivmaterials ist, 1,0 µm oder mehr beträgt;
in der kumulativen Volumenverteilung des Positivelektrodenaktivmaterials D₅₀, das eine Teilchengröße ist, wenn eine kumulative Volumenmenge 50 % beträgt, 5,0 µm oder weniger beträgt, und
Dₘₐₓ, das eine maximale Teilchengröße in der kumulativen Volumenverteilung des Positivelektrodenaktivmaterials ist, 12 µm bis 17 µm beträgt.

15. Zylindrische Batterie (1, 40, 70) nach Anspruch 14,
wobei das Positivelektrodenaktivmaterial eine unimodale Teilchengrößenverteilung aufweist, die einen einzelnen Peak in einem Graphen der kumulativen Volumenteilchengrößenverteilung zeigt, und die Teilchengrößenverteilung (PSD), die durch die folgende Formel dargestellt wird, 3 oder weniger beträgt: $PSD = \left({D}_{max}-{D}_{min}\right) / {D}_{50} .$

16. Zylindrische Batterie (1, 40, 70) nach Anspruch 14,
wobei das einzelne Teilchen, das pseudo-einzelne Teilchen oder die Kombination davon in einer Menge von 95 Gew.-% bis 100 Gew.-%, basierend auf dem Gesamtgewicht des Positivelektrodenaktivmaterials, das in der Aktivmaterialschicht (21, 92) der ersten Elektrode enthalten ist, enthalten ist.

17. Zylindrische Batterie (1, 40, 70) nach Anspruch 14,
wobei das Positivelektrodenaktivmaterial ein lithiumnickelbasiertes Oxid umfasst, das 80 Mol-% oder mehr Ni, basierend auf der Gesamtmolzahl eines Übergangsmetalls, enthält,
wobei die Aktivmaterialschicht (21, 92) der ersten Elektrode eine Porosität von 15 % bis 23 % aufweist, und
wobei die Aktivmaterialschicht (21, 92) der ersten Elektrode plättchenförmigen Graphit in einem Gewichtsverhältnis von 0,05 Gew.-% bis 5 Gew.-% enthält.

18. Zylindrische Batterie (1, 40, 70) nach Anspruch 14,
wobei die Aktivmaterialschicht (21, 92) der ersten Elektrode ferner Kohlenstoffnanoröhrchen enthält.

19. Zylindrische Batterie (1, 40, 70) nach Anspruch 14,
wobei die Aktivmaterialschicht (21, 92) der zweiten Elektrode ein siliciumbasiertes Negativelektrodenaktivmaterial und ein kohlenstoffbasiertes Negativelektrodenaktivmaterial umfasst, und das siliciumbasierte Negativelektrodenaktivmaterial und das kohlenstoffbasierte Negativelektrodenaktivmaterial in einem Gewichtsverhältnis von 1 : 99 bis 20 : 80 enthalten sind.

20. Batteriepack (3), umfassend eine Vielzahl von zylindrischen Batterien (1, 40) nach einem der Ansprüche 1 bis 19.

21. Fahrzeug (5), umfassend den Batteriepack (3) nach Anspruch 20.

## Revendications

1. Batterie cylindrique (1, 40, 70), comprenant :
un ensemble électrode (71, 100, 300) dans lequel une première électrode, une deuxième électrode, et un séparateur (12, 600, 900) interposé entre elles sont enroulés autour d'un axe d'enroulement afin de définir un noyau et une circonférence externe, la première électrode et la deuxième électrode incluant respectivement une première portion non enrobée (72) et une deuxième portion non enrobée (72, 73) qui n'est pas enrobée d'une couche de matière active (21, 92) le long d'une direction d'enroulement, la première portion non enrobée (72) et la deuxième portion non enrobée (72, 73) étant définies comme une languette d'électrode (13, 14) en tant que telles ;
un logement de batterie (41, 51, 51a) configuré pour recevoir l'ensemble électrode (71, 100, 300) à travers une ouverture formée dans un côté et connecté électriquement à la deuxième portion non enrobée (72, 73) ;
une borne d'électrode (50) fixée par rivet à travers un trou perforé (53) formé dans une portion fermée prévue en face de l'ouverture du logement de batterie (41, 51, 51a) et connectée électriquement à la première portion non enrobée (72) ;
une garniture isolante (35, 54) interposée entre la borne d'électrode (50) et le trou perforé (53) ; et
une plaque de recouvrement (42a, 60, 74a) configurée pour recouvrir l'ouverture du logement de batterie (41, 51, 51a),
dans laquelle la borne d'électrode (50) inclut :
une portion de corps (50a) insérée dans le trou perforé (53) ;
une portion de bride externe (50b) configurée pour s'étendre le long d'une surface externe (52a) de la portion fermée à partir d'une circonférence (51a, 76a) d'un côté de la portion de corps (50a) exposée à travers la surface externe (52a) de la portion fermée du logement de batterie (41, 51, 51a) ;
une portion de bride interne (50c) configurée pour s'étendre vers une surface interne (52a, 52b) de la portion fermée à partir d'une circonférence (51a, 76a) de l'autre côté de la portion de corps (50a) exposée à travers la surface interne (52a, 52b) ; et
une portion plate (50d) prévue sur un côté interne de la portion de bride interne (50c).

2. Batterie cylindrique (1, 40, 70) selon la revendication 1,
dans laquelle une surface de la borne d'électrode (50) exposée à l'extérieur du logement de batterie (41, 51, 51a) est une première borne d'électrode, et
une portion de la surface externe (52a) de la portion fermée du logement de batterie (41, 51, 51a), qui est parallèle à une surface supérieure de la première borne d'électrode, est une deuxième borne d'électrode.

3. Batterie cylindrique (1, 40, 70) selon la revendication 1,
dans laquelle une portion en retrait (55) ayant une structure (300S, 600S) de rainure asymétrique est prévue entre la portion de bride interne (50c) et la portion plate (50d), et
la rainure asymétrique inclut une paroi latérale (55a) de la portion plate (50d) et une surface inclinée (55b) de la portion de bride interne (50c) connectée à une extrémité de la paroi latérale (55a).

4. Batterie cylindrique (1, 40, 70) selon la revendication 1,
dans laquelle l'épaisseur de la portion de bride interne (50c) diminue à mesure qu'elle est éloignée de la portion de corps (50a).

5. Batterie cylindrique (1, 40, 70) selon la revendication 1,
dans laquelle la garniture isolante (35, 54) inclut :
une garniture externe (54a) interposée entre la portion de bride externe (50b) et la surface externe (52a) de la portion fermée ; et
une garniture interne (54b) interposée entre la portion de bride interne (50c) et la surface interne (52a, 52b) de la portion fermée, et
dans laquelle au sein de la zone de la garniture interne (54b), une zone interposée entre un bord interne (56) du trou perforé (53) connectée à la surface interne (52a, 52b) de la portion fermée et à la portion de bride interne (50c) a une épaisseur relativement plus petite qu'une autre zone.

6. Batterie cylindrique (1, 40, 70) selon la revendication 1,
dans laquelle la garniture isolante (35, 54) inclut :
une garniture externe (54a) interposée entre la portion de bride externe (50b) et la surface externe (52a) de la portion fermée ; et
une garniture interne (54b) interposée entre la portion de bride interne (50c) et la surface interne (52a, 52b) de la portion fermée, et
dans laquelle la garniture interne (54b) s'étend de manière plus longue que la portion de bride interne (50c).

7. Batterie cylindrique (1, 40, 70) selon la revendication 1,
dans laquelle la garniture isolante (35, 54) inclut :
une garniture externe (54a) interposée entre la portion de bride externe (50b) et la surface externe (52a) de la portion fermée ; et
une garniture interne (54b) interposée entre la portion de bride interne (50c) et la surface interne (52a, 52b) de la portion fermée, et
dans laquelle sur la base de la surface interne (52a, 52b) de la portion fermée, la hauteur de la portion plate (50d) est supérieure ou égale à la hauteur d'une extrémité de la garniture interne (54b).

8. Batterie cylindrique (1, 40, 70) selon la revendication 1,
dans laquelle sur la base de la surface interne (52a, 52b) de la portion fermée, la hauteur de la portion plate (50d) est supérieure ou égale à la hauteur d'une extrémité de la portion de bride interne (50c).

9. Batterie cylindrique (1, 40, 70) selon la revendication 1,
dans laquelle la première portion non enrobée (72) inclut une pluralité de segments indépendamment fléchissables (93, 93a) ;
la pluralité de segments (93, 93a) de la première portion non enrobée (72) sont fléchis vers le noyau pour former une surface fléchie (102) des segments (93, 93a) au niveau d'une extrémité de l'ensemble électrode (71, 100, 300), et
la borne d'électrode (50) est connectée électriquement à la surface fléchie (102) des segments (93, 93a) de la première portion non enrobée (72).

10. Batterie cylindrique (1, 40, 70) selon la revendication 9, comprenant en outre :
une première plaque collectrice de courant (36, 78) couplée à la surface fléchie (102) des segments (93, 93a) de la première portion non enrobée (72) ; et
un isolateur (37, 46, 80) interposé entre la première plaque collectrice de courant (36, 78) et la surface interne (52a, 52b) de la portion fermée,
dans laquelle la portion plate (50d) de la borne d'électrode (50) passe à travers l'isolateur (37, 46, 80) et est couplée à la première plaque collectrice de courant (36, 78).

11. Batterie cylindrique (1, 40, 70) selon la revendication 1,
dans laquelle la deuxième portion non enrobée (72, 73) inclut une pluralité de segments indépendamment fléchissables (93, 93a) ;
la pluralité de segments (93, 93a) de la deuxième portion non enrobée (72, 73) sont fléchis vers le noyau pour former une surface fléchie (102) des segments (93, 93a) au niveau de l'autre extrémité de l'ensemble électrode (71, 100, 300), et
le logement de batterie (41, 51, 51a) est connecté électriquement à la surface fléchie (102) des segments (93, 93a) de la deuxième portion non enrobée (72, 73).

12. Batterie cylindrique (1, 40, 70) selon la revendication 11, comprenant en outre :
une deuxième plaque collectrice de courant (38, 79) couplée à la surface fléchie (102) des segments (93, 93a) de la deuxième portion non enrobée (72, 73),
dans laquelle au moins une partie d'un bord de la deuxième plaque collectrice de courant (38, 79) s'étend vers une surface interne (52a, 52b) d'une portion en bourrelet (23, 44, 76) et est interposée et fixée entre la surface interne (52a, 52b) de la portion en bourrelet (23, 44, 76) et la garniture d'étanchéisation (39, 42b, 74b).

13. Batterie cylindrique (1, 40, 70) selon la revendication 1,
dans laquelle une première portion coulissante dans laquelle l'épaisseur de la couche de matière active (21, 92) est réduite est incluse dans une région frontière entre une portion enrobée et la portion non enrobée (10a, 11a, 22, 72, 73, 93, 93', 430, 530, 730, 830, 880) de la première électrode, et une deuxième portion coulissante dans laquelle l'épaisseur de la couche de matière active (21, 92) est réduite est incluse dans une région frontière entre une portion enrobée et la portion non enrobée (10a, 11a, 22, 72, 73, 93, 93', 430, 530, 730, 830, 880) de la deuxième électrode,
la première portion coulissante et la deuxième portion coulissante sont situées dans des directions opposées sur une direction d'axe d'enroulement, et
la portion enrobée de la première électrode inclut une portion de réduction de chargement dans laquelle une quantité de chargement de la matière active est réduite, et la position de la portion de réduction de chargement correspond à la position de la deuxième portion coulissante.

14. Batterie cylindrique (1, 40, 70) selon la revendication 1,
dans laquelle la couche de matière active (21, 92) de la première électrode inclut une matière active d'électrode positive incluant une particule unique, une particule pseudo unique, ou une combinaison de celles-ci,
Dₘᵢₙ, qui est une granulométrie minimum dans une distribution de volume cumulative de la matière active d'électrode positive, est de 1,0 µm ou davantage ;
dans la distribution cumulative de volume de la matière active d'électrode positive, D₅₀, qui est une granulométrie lorsqu'une quantité cumulative de volume est de 50 %, est de 5,0 µm ou moins, et
Dₘₐₓ, qui est une granulométrie maximum dans la distribution cumulative de volume de la matière active d'électrode positive, est de 12 µm à 17 µm.

15. Batterie cylindrique (1, 40, 70) selon la revendication 14,
dans laquelle la matière active d'électrode positive a une distribution granulométrique unimodale présentant une crête unique dans un graphe de distribution granulométrique cumulative de volume, et la distribution granulométrique (PSD) représentée par la formule suivante est de 3 ou moins : $PSD = \left({D}_{max}-{D}_{min}\right) / {D}_{50} .$

16. Batterie cylindrique (1, 40, 70) selon la revendication 14,
dans laquelle la particule unique, la particule pseudo unique, ou la combinaison de celles-ci est incluse dans une quantité allant de 95 % en poids à 100 % en poids sur la base du poids total de la matière active d'électrode positive inclus dans la couche de matière active (21, 92) de la première électrode.

17. Batterie cylindrique (1, 40, 70) selon la revendication 14,
dans laquelle la matière active d'électrode positive inclut un oxyde à base de lithium-nickel contenant 80 % en moles ou plus de Ni sur la base du nombre total de moles d'un métal de transition,
dans laquelle la couche de matière active (21, 92) de la première électrode a une porosité allant de 15 % à 23 %, et
dans laquelle la couche de matière active (21, 92) de la première électrode contient du graphite lamellaire dans un rapport de poids allant de 0,05 % en poids à 5 % en poids.

18. Batterie cylindrique (1, 40, 70) selon la revendication 14,
dans laquelle la couche de matière active (21, 92) de la première électrode contient en outre des nanotubes de carbone.

19. Batterie cylindrique (1, 40, 70) selon la revendication 14,
dans laquelle la couche de matière active (21, 92) de la deuxième électrode inclut une matière active d'électrode négative à base de silicium et une matière active d'électrode négative à base de carbone, et
la matière active d'électrode négative à base de silicium et la matière active d'électrode négative à base de carbone sont incluses suivant un rapport de poids de 1 : 99 à 20 : 80.

20. Bloc-batterie (3), comprenant une pluralité de batteries cylindriques (1, 40) selon n'importe laquelle des revendications 1 à 19.

21. Véhicule (5), comprenant le bloc-batterie (3) selon la revendication 20.
